# EUROPÄISCHE PATENTSCHRIFT

(11) **EP 2 226 260 B1**
(45) Veröffentlichungstag und Bekanntmachung des Hinweises auf die Patenterteilung: **25.03.2015**
(21) Anmeldenummer: 09016161.3
(22) Anmeldetag: 28.07.2004
(51) Int. Cl.: A47J 47/14, B65D 6/00, B65D 21/02, B65D 81/20, B65D 51/14, B65D 77/04, B65D 81/38

(54) **Behältnis für Speisen und System zum Verteilen von Speisen**
Food container and system for distributing food
Récipient alimentaire et système pour la distribution des aliments

(30) Priorität: 28.07.2003 DE 10334409; 14.08.2003 DE 10337513; 14.11.2003 DE 10353164; 06.02.2004 DE 102004005972
(43) Veröffentlichungstag der Anmeldung: 08.09.2010
(62) Teilanmeldung aus: 04763578.4
(73) Patentinhaber: Pappler, Robert, 84539 Ampfing (DE)
(72) Erfinder: Pappler, Robert, 84539 Ampfing (DE)
(74) Vertreter: Kunz, Herbert

(56) Entgegenhaltungen:
- WO-A-96/26134
- DE-A1- 4 412 736
- DE-A1- 19 526 719
- DE-U- 8 214 571
- DE-U- 9 302 901
- DE-U- 29 715 111
- GB-A- 213 059
- GB-A- 927 767
- GB-A- 1 602 818
- US-A- 2 660 328
- US-A- 2 662 662
- US-A- 2 729 354
- US-A- 6 097 014
- US-B1- 6 359 268

## Beschreibung

### Technisches Gebiet

Die Erfindung betrifft ein Behältnis für Speisen, insbesondere zum Servieren, Aufbewahren, Kühlen, Regenerieren und Transportieren von Speisen, gemäß dem Oberbegriff des Anspruchs 1 und ein entsprechendes System zum Verteilen von Speisen.

### Stand der Technik

Bekannte Behältnisse, sind beispielsweise in einer Vielzahl von Anmeldungen des Anmelders wie z. B. in der WO97/03891, beschrieben. Derartige Behältnisse dienen beispielsweise dazu, Speisen in sich aufzunehmen, damit sie vom Herstellungsort, wie z. B. einer Küche, zum Bestimmungsort transportiert werden können, wobei die in den Behältnissen aufgenommenen Speisen lange in dem Herstellungszustand gehalten werden sollen. Am Bestimmungsort angekommen, werden die Speisen der Einfachheit halber dann in den Behältnissen serviert. Die in der WO97/03891 beschriebenen Behältnisse sind mit einem Verbindungskörper ausgestattet, welcher ein Querschnittsprofil in Form eines H aufweist und welcher gegebenenfalls auch an eines der Behältnisteile angeformt sein kann. Für eine verbesserte Dichtungsmöglichkeit wurde der Dichtungsschenkel durch eine Biegeverformung beim Zusammendrücken der Behältnisteile durch die Wandung der in dem Behältnis befindlichen Vertiefungen ausgelenkt. Für eine verbesserte Dichtungscharakteristik wurde bereits auch vom Anmelder vorgeschlagen, den Dichtungsschenkel mit einem Vorsprung auszugestalten, welcher beim Einführen einen Schnappmechanismus als auch im zusammengefügten Zustand eine gute Dichtungscharakteristik aufweist. Bei einem weiteren bekannten Verfahren des Anmelders werden Behältnisse verwendet, bei denen zusätzliche Gefäße in eine als Grundplatte ausgestaltete Bodenplatte eingesetzt werden, bei deren oberer Einfassungsrand von der Platte vorsteht, um mit einem Verbindungskörper des als Deckelteils ausgebildeten Behältnisteils abgedichtet zu werden. Hierzu werden die eingesetzten zusätzlichen Gefäße in der Grundplatte vorzugsweise fixiert bzw. mit einem Schnappverschluss eingesetzt, damit beim Nachobenführen des Deckelteils das Gefäß nicht abgehoben wird.

Nachteilig hieran ist jedoch, dass eine notwendige Abdichtung nur schwerlich oder gar nur durch separate, jeweils auf die Gefäße abgestimmte Deckeleinheiten erreichbar ist. Ferner ist aufgrund herstellungsbedingter Toleranzen unterschiedlicher Materialien, beispielsweise wie Porzellan, eine Abdichtung nahezu unmöglich zu bewerkstelligen.

### Darstellung der Erfindung

Aufgabe der vorliegenden Erfindung ist es somit, ein Behältnis zu schaffen, das das Zusammenfügen auf einfache Weise ermöglicht, und wobei auch gewisse Ungleichförmigkeiten zwischen den Behältnisteilen kompensiert werden, um ein Abdichten des erfindungsgemäßen Behältnisses zu gewährleisten.

Eine weitere Aufgabe der folgenden Erfindung ist es, die Handhabung für den Benutzer sowie die logistische Handhabung für mehrere Behältnisse bzw. den Einzelteilen zu verbessern, wobei dennoch die Dichtigkeit der einzelnen Behältnisse sichergestellt werden kann.

Die obigen Aufgabe werden durch eine vorrichtungstechnische Merkmalskombination der Ansprüche 1 und 13 gelöst.

Gemäß der Erfindung wird ein Behältnis bereit gestellt, wobei die Ausgleichseinrichtung in Form eines Ausgleichselements ausgebildet ist, das als Verbindung zwischen der Dichtungskomponente und dem Deckelteil vorgesehen ist, um durch die Anbringung des Ausgleichselements an dem Deckelteil eine entsprechende Kraft und Einstellbarkeit auf die Dichtungskomponente aufzubringen, so dass eine Abdichtung an dem Einfassungsrand zwischen der Dichtungskomponente und dem Bodenteil in einfacher Art und Weise realisierbar ist. Das Ausgleichselement weist zumindest eine elastische Komponente auf, vorzugsweise eine Silikonkomponente, welche im Zusammenwirken mit einem Fortsatz des Deckelteils durch die elastische Eigenschaft der elastischen Komponente eine Druckausgleichsöffnung Dichtungskomponente abdichtet, Vorteilhafter Weise wird die elastische Komponente von dem Fortsatz des Deckelteils unter Einwirkung einer Kraft derart vorformt, dass die Druckausgleichsöffnung der Dichtungskomponente vollständig abgedichtet wird, wobei die überschüssige Luft aus einer Speiseunterbringungskammer entweichen kann, welche durch die Dichtungskomponente und dem Bodenteil zum Aufbewahren der Speisen ausgebildet wird, Somit wird durch die Wechselwirkung des Fortsatzes und der elastischen Komponente mit einem entsprechenden Druck für die Dichtigkeit der Essenskammer bzw, Speiseunterbringungskammer gesorgt, wobei überschüssige Luft vor dem Abdichten entweichen konnte und auch weiterhin nach dem Abdichten entweichen kann, da die elastische Komponente bei einem zu starken Druck nachgeben wird, so dass bei zu hohem Druck Luft wieder aus der abgedichteten Druckausgleichsöffnung entweichen kann.

Die beiden Behältnistelle können mit der Dichtungskomponente über die Ausgleichseirichtung derart zusammenwirken, dass die Position- und/oder der Anpressdruck der Dichtungskomponente relativ zu einem ersten Behältnisteil bzw, dem Bodenteil vorzugsweise zum Ausgleich von Undichtigkeiten einstellbar bzw, anpassbar ist, um die Speiseunterbringungskammer zwischen dem Bodenteil oder der Schale und der Dichtungskomponente abzudichten, Dies ist insbesondere dann von Vorteil, wenn herstellungsbedingte Toleranzunterschiede sowohl des Bodenteils als auch möglicherweise eingesetzter oder eingehänder Einzelschalen unvermeidbar sind, wie dies beispielsweise bei Porzellan der Fall ist, wobei jedoch eine für den Transport erforderliche Dichtigkeit zu erzielen ist, Je nach Auslegung und Ausgestaltung der Ausgleichseinrichtung können auch Höhenunterschiede zwischen dem Bodenteil und der Dichtungskomponente ausgeglichen werden.

Einerseits kann die Ausgleichseinrichtung für eine variable Positionierung und gegebenenfalls einen geeigneten Anpressdruck der Dichtungskomponente bezüglich des Bodenteils sorgen, um Undichtigkeiten zwischen der Dichtungskomponente und dem Bodenteil zu vermeiden. Andererseits kann die Ausgleichseinrichtung ebenso für einen Druckausgleich zwischen dem Speiseunterbringungsraum, der durch die Dichtungskomponente und das Bodenteil mit gegebenenfalls einem ringförmigen Abdichtelement gebildet wird, in geeigneter Art und Weise sorgen, so dass insbesondere der Anpressdruck der Dichtungskomponente auf das Bodenteil stets eine dichte Verbindung zwischen diesen beiden Elementen gewährleisten kann.

Weitere vorteilhafte Ausgestaltungen der vorliegenden Erfindung sind Gegenstand der Unteransprüche.

So ist es vorteilhaft, wenn die Ausgleichseinrichtung die Position und/oder den Anpressdruck der Dichtungskomponente relativ zu zumindest einem ersten der beiden Behältnisteile dadurch variiert, dass die Dichtungskomponente durch die Ausgleichseinrichtung im geschlossenen Zustand variabel mit dem Deckelteil verbunden ist, insbesondere an dem Deckelteil variabel aufgehängt ist.

Eine Abdichtung zwischen dem Rand der Dichtungskomponente und dem Bodenteil oder der Schale wird insbesondere dadurch vorgenommen, dass unter Ausbildung einer Abdichtkraft die Dichtungskomponente durch die Ausgleichseinrichtung an dem Bodenteil oder der Schale dichtend anliegt, wenn das Deckelteil im geschlossenen Zustand an dem Bodenteil arretiert ist

Gemäß einer bevorzugten Ausführungsform umfasst die Ausgleichseinrichtung eine Federeinrichtung, durch welche die Dichtungskomponente zur Ausbildung der Abdichtkraft variabel an dem Deckelteil anbringbar ist, um die Position bzw. den Anpressdruck der Dichtungskomponente mit Hilfe der elastischen Wirkung der Federeinrichtung an das Porzellan der Schale bzw, das Bodenteil zur Abdichtung der aufbewahrten Speisen unter Ausbildung einer Dichtung einzustellen bzw. anzupassen.

Hierzu kann die Federeinrichtung ein Federelement aus Metall oder Kunststoff aufweisen, welches mit dem Deckelteil fest verbunden ist, und eine Dichtungskomponentenaufnahme zur Aufnahme der Dichtungskomponente aufweist. Dadurch kann die Dichtungskomponente in einfacher Art und Weise mit dem Deckelteil verbunden werden. Wenn die Dichtungskomponentenaufnahme lösbar und/oder verschiebbar mit einer Federaufnahme der Dichtungskomponente in Eingriff bringbar ist, dann kann insbesondere eine schnelle bzw. automatisierte Montage der Dichtungskomponente an dem Deckelteil gewährleistet werden.

Gemäß einer Ausführungsform der Erfindung ist die Federaufnahme der Dichtungskomponente über eine Passung mit der Federeinrichtung verbunden.

Ein weiterer Vorteil besteht darin, dass die Federaufnahme der Dichtungskomponente im geschlossenen Zustand des Behältnisses schwimmend an der Federeinrichtung unter Ausbildung der Abdichtkraft gelagert ist. Somit kann in konstruktiv einfacher Art und Welse eine Abdichtkraft sowohl in horizontaler als auch in vertikaler Richtung durch die Dichtungskomponente auf eine Schale bzw. das Bodenteil zur Abdichtung aufgebracht werden.

Gemäß einer bevorzugten Ausführungsform ist die elastische Komponente, vorzugsweise eine Feder aus Metall oder Kunststoff, an dem Deckelteil vorgesehen, die im geschlossenen Zustand des Behältnisses eine Druckausgleichsöffnung der Dichtungskomponente durch dessen elastische Eigenschaft abdichtet.

Gemäß einer vorteilhaften Ausführungsform der Erfindung ist die Druckausgleichsöffnung der Dichtungskomponente zum Druckausgleich mit Lüftungsschlitzen versehen, welche durch das Zusammenwirken der elastischen Komponente mit dem Fortsatz des Deckelteils abgedichtet werden. Dabei müssen lediglich die Lüftungsschlitze abgedichtet werden, was mittels der Elastizität der elastischen Komponente in einfacher Art und Weise bewerkstelligt werden kann.

Gemäß einer bevorzugten Ausführungsform weist die elastische Komponente vorzugsweise mehrere Flügelelemente auf, welche mit entsprechenden Aussparungen der Dichtungskomponente oder des Deckelteils In Eingriff bringbar sind, um somit die variable Aufhängung der Dichtungskomponente an dem Deckelteil zur Abdichtung zu gewährleisten.

Wenn die elastische Komponente vorzugsweise drei oder vier Flügelelemente aufweist, welche mit entsprechenden Aussparungen der Dichtungskomponente in Eingriff bringbar sind, um für die Verbindung der Dichtungskomponente mit dem Deckelteil über die elastische Komponente zu sorgen, dann wird in einer konstruktiv einfachen Art und Weise für einen Halt der Dichtungskomponente an dem Deckelteil gesorgt, wobei die elastische Komponente mit den Flügelelementen einstückig aus einem geeigneten elastischen Material herstellbar ist.

Ein weiterer Vorteil ist darin zu sehen, dass das Deckelteil eine Aufnahme für das Ausgleichselement bzw. die elastische Komponente aufweist, wobei Widerstandselemente an dem Deckelteil vorgesehen sind, um die Flügelelemente der elastischen Komponente in die Aussparungen der Dichtungskomponente zu drücken. Die Widerstandselemente verhindern dabei ein Überbiegen der Flügel, wodurch eine sichere Verbindung und ein sicherer Halt der Dichtungskomponente an dem Deckelteil gewährleistet wird.

Ferner Ist es vorteilhaft, wenn die Aussparungen in der Dichtungskomponente durch unterbrochene Stegsegmente an dessen Oberfläche ausgebildet sind.

Gemäß einer Weiterbildung der Erfindung ist die elastische Komponente durch eine Presspassung an dem Deckelteil befestigbar, wobei an dem Fortsatz zumindest teilweise keine Presspassung mit der elastischen Komponente zur Ausbildung der Dichtigkeit mit der Dichtungskomponente vorgesehen ist. Folglich kann der Fortsatz beim Schließen des Deckelteils weiter in die elastische Komponente getrieben werden, so dass sich die elastische Komponente um einen entsprechenden Betrag an einem genau berechneten Punkt ausdehnt, wodurch wiederum die Druckausgleichsöffnung der Dichtungskomponente bzw. dessen Lüftungsschlitze exakt abgedichtet werden.

Zur Abdichtung der Speiseunterbringungskammer nimmt die Dichtungskomponente zur Abdichtung des Bodenteils an deren umlaufendem Rand ein ringförmiges Abdichtungselement auf. Die Dichtungskomponente nimmt insbesondere das ringförmige Abdichtelement derart auf, dass dieses zwischen dem Rand der Dichtungskomponente und einem sich von dem Rand der Dichtungskomponente erstreckenden Schenkel vorgesehen ist, welcher sich an den Rand des Bodenteils anschmiegen kann. Dabei ist der Rand der Metallinnenkomponente im wesentlichen an dem Rand der Dichtungskomponente unter Bildung eines Abschlusses anordenbar. Vorzugsweise ist der Rand der Metallinnenkomponente eingerollt ausgebildet.

Gemäß einer Weiterbildung weist die Dichtungskomponente im Bereich ihres Randes Verstärkungen auf, welche derart ausgebildet sind, dass an dieser angrenzend zumindest der Rand der Metallinnenkomponente formschlüssig anlegbar ist. Vorteilhafterweise wirkt die Metallinnenkomponente in Verbindung mit Induktion derart, dass ein in der Speiseunterbringungskammer befindliches Wasserkondensat beim Erhitzen von außen verdunstet.

Gemäß einer Ausführungsform der Erfindung ist das Deckelteil und das Bodenteil aus geschäumtem Kunststoff, insbesondere EPP aufgebaut, um als Wärmeisolierung nach außen zu wirken. Ferner ist ein separater Verriegelungsmechanismus an dem geschäumten Kunststoff angeordnet, wobei der Verriegelungsmechanismus insbesondere eine feste umlaufende Struktur um das Behältnis umfasst.

Des weiteren ist es von Vorteil, wenn das Bodenteil und/oder das Deckelteil eine Gitterstruktur aufweist, so dass das Deckelteil und/oder das Bodenteil und die darin eingestellte Schale gemeinsam vollständig von Verunreinigungen abspülbar sind. Dadurch wird gewährleistet, dass eine Demontage der einzelnen Elemente des Behältnisses, d.h. des Deckelteils und der Dichtungskomponente, nicht erforderlich sind, da diese Elemente gemeinsam in einem Spülvorgang gereinigt werden können, so dass die Handhabung des erfindungsgemäßen Behältnisses hinsichtlich des Spülvorgangs zeit- und kostengünstig ist.

Wenn die Gitterstruktur aus einem Metalldrahtaufbau oder Kunststoffgitter hergestellt ist, so weist das Behältnis eine große Stabilität auf, wobei lediglich wenige Verbindungen und nur wenig Material zur Herstellung des Behältnisses erforderlich sind.

Wenn das Deckelteil an den Verbindungsstellen zu der Dichtungskomponente Nestaufnahmen für eine Ausgleichseinrichtung aufweist, welche die Dichtungskomponente mit dem Deckelteil verbindet, können mehrere Dichtungskomponenten an einem Deckelteil über jeweils eine Nestaufnahmen verbunden werden. Des Weiteren können die Nestaufnahmen genormt werden, um an unterschiedlichen Deckelteilen gegebenenfalls auch unterschiedliche Dichtungskomponenten anzubringen, um die Herstellungskosten zu senken.

Gemäß einer Ausführungsform der Erfindung ist die Gitterstruktur des Deckelteils mit zumindest einer Nestaufnahme verbunden, wobei die Nestaufnahme und die Gitterstruktur des Deckelteils verschweißt, verklebt oder bei Kunststoffen mittels Polykondensation, Polymerisation oder Polymeraddition verbunden werden können.

Wenn das Bodenteil und/oder das Deckelteil vollständig in Gitterstruktur ausgeführt sind, dann ist zur Herstellung des Bodenteils oder des Deckelteils lediglich ein Verfahren zur Ausbildung der Gitterstruktur ohne Verbindung mit weiteren Komponenten erforderlich.

Nach einer bevorzugten Ausführungsform ist das Bodenteil und/oder das Deckelteil vollständig aus CNS (Chrom-Nickel-Stahl) gefertigten Metalldrähten ausgeführt, welche als Massenprodukt auch in unterschiedlichen Ausführungsformen kostengünstig herstellbar sind.

Gemäß der Erfindung ist die Dichtungskomponente mit dem Deckelteil über eine Ausgleichseinrichtung derart verbunden und wirkt mit dieser derart zusammen, dass die Position und/oder der Anpressdruck der Dichtungskomponente relativ zu der Schale einstellbar ist, vorzugsweise zum Ausgleich von Fertigungstoleranzen des Porzellans der Schale. Dies ist insbesondere dann von Vorteil, da herstellungsbedingte Toleranzen sowohl des Bodenteils als auch der eingesetzten Schale unvermeidbar sind, die für einen Transport notwendige Dichtigkeit jedoch unter allen Umständen gewährleistet sein muss. Je nach Auslegung und Ausgestaltung der Ausgleichseinrichtung können auch Höhenunterschiede zwischen dem Bodenteil und der Dichtungskomponente ausgeglichen werden. Einerseits kann diesbezüglich die Ausgleichseinrichtung für eine variable Positionierung der Dichtungskomponente bezüglich des Bodenteils sorgen, um Undichtigkeiten zwischen der Dichtungskomponente und der Einzelschale zu vermeiden. Andererseits kann die Ausgleichseinrichtung ebenso für einen Druckausgleich in dem Speiseunterbringungsraum, der durch die Dichtungskomponente und die Schale gebildet wird, in geeigneter Art und Weise sorgen, so dass der Anpressdruck der Dichtungskomponente auf die Schale stets eine dichte Verbindung zwischen diesen beiden Elementen gewährleisten kann.

Ein derartiger Druckausgleich wird ermöglicht, wenn die Ausgleichseinrichtung ein Verschließelement aufweist, welches beweglich, insbesondere verschiebbar, gelagert ist, um eine Druckausgleichsöffnung der Dichtungskomponente abzudichten, durch welche überschüssige Luft aus der Speiseunterbringungskammer entweichen kann, wenn die Dichtungskomponente, die mit dem Deckelteil verbunden ist, auf die Schale gepresst wird.

Der variable Dichtungsdruck und der Ausgleich von Toleranzen zwischen der Schale und der Dichtungskomponente wird insbesondere durch eine am Deckelteil angeordnete Federeinrichtung realisiert. Diese Federeinrichtung wirkt als Element der Ausgleichseinrichtung, wobei insbesondere mehrere Federkomponenten zwischen dem Deckelteil und der Dichtungskomponente befindlich sind, um eine entsprechende Kraft und Einstellbarkeit der Dichtungskomponente auf die Schale zur Abdichtung aufzubringen, wobei eine Abdichtung an dem Einfassungsrand zwischen der Dichtungskomponente und der Schale in einfacher Art und Weise insbesondere über eine angeformte Dichtlippe realisierbar ist.

Gemäß einer bevorzugten Ausführungsform ist die Federeinrichtung aus zumindest drei, vorzugsweise vier Blattfedern aufgebaut, die lösbar mit einer Federaufnahme der Dichtungskomponente verklemmt bzw. in Eingriff bringbar sind. Insbesondere sind die Blattfedern an den Nestaufnahmen des Deckelteils befestigt und bilden so ein Element der Ausgleichseinrichtung zur variablen Halterung der Dichtungskomponente im Deckelteil.

Gemäß einer weiteren bevorzugten Ausführungsform weist die Dichtungskomponente zur Abdichtung der Schale an dessen umlaufendem Rand eine Dichtlippe auf, an welche sich ein im wesentlichen u-förmiger Abschnitt anschließt. Durch diesen im wesentlichen u-förmigen Abschnitt kann sich die Dichtlippe besonders flexibel und variabel an die Schale anlegen, um für die Abdichtung der Schale zu sorgen. Für diese flexible Abdichtung sorgt zum einen der umlaufende Rand der Dichtlippe und zum anderen der sich daran anschließende erste Schenkel des u-förmigen Abschnitts, so dass zwei jeweils variable Elemente für die flexible Einstellbarkeit sorgen, welche zusammen wiederum variabel miteinander verbunden sind. insbesondere wenn ein hierfür geeigneter Kunststoff verwendet wird.

Die Abdichtung zwischen der Dichtungskomponente und der Schale kann dadurch verbessert werden, dass die Dichtungskomponente ein ringförmiges umlaufendes Abdichtungselement derart aufnimmt, dass dieses zwischen dem Rand der Dichtungskomponente und einem sich von dem Rand der Dichtungskomponente erstreckenden Schenkel der Dichtlippe vorgesehen ist, welche sich an den Rand der Schale anschmiegen kann. Ein derartiges umlaufendes Abdichtelement kann beispielsweise ein O-ring sein, welcher insbesondere in einer Vertiefung der Dichtungskomponente aufgenommen ist.

Um für eine gute Abdichtung zwischen einer Schale aus Porzellan und der Dichtungskomponente zu sorgen, ist die Dichtungskomponente vorteilhafterweise aus Kunststoff hergestellt. Wenn das Verschließelement der Ausgleichseinrichtung aus Metall hergestellt ist, dann ermöglicht die Dichtungskomponente aus Kunststoff auch eine geeignete Abdichtmöglichkeit mit Hilfe des Verschließelements mit der Druckausgleichsöffnung der Dichtungskomponente.

Gemäß einer bevorzugten Ausführungsform der Efindung wird die Schale in das Bodenteil eingehängt bzw. eingestellt, wobei die Kontaktstelle zwischen Bodenteil und Schale mittels Gummi bzw. Kunststoff derart entschärft wird, dass es zu keinerlei Beschädigung der eingehängten Schale kommen kann. Durch das Einhängen der Schale werden Fertigungsbedingte Toleranzen der Schale, in Bezug auf die Größe der Schale, aufgefangen.

Wenn zwischen dem Boden und dem Deckelteil ein Verriegelungsmechanismus zum Verschließen bzw. Abdichten des Behältnisses vorgesehen ist, welcher insbesondere einen Hebelverschluss aufweißt, so werden beim Verschließvorgang die Blattfedem des Ausgleichelements gespannt und erzeugen hierdurch den notwendigen Dichtungsdruck. Des weiteren kann durch den Verriegelungsmechanismus das beweglich bzw. verschiebbar gelagerte Verschließelement mit der Druckausgleichsöffnung der Dichtungskomponente in Kontakt gebracht werden, um die Speiseunterbringungskammer abzudichten.

Gemäß einer weiteren Ausführungsform der Erfindung weist die Dichtungskomponente ein Materialscharnier zum Ausgleich von Undichtigkeiten auf, wobei das Materialscharnier insbesondere durch eine Querschnittsreduzierung erreicht wird. Hierzu weist die Dichtungskomponente beispielsweise eine domförmige Kontur mit Einfassungsrand auf, in die das Deckelteil einbringbar ist.

Ein weiterer Vorteil des erfindungsgemäßen Behältnisses liegt vor, wenn die Schale zur Aufnahme der Speisen derart in das Bodenteil eingehängt ist, dass die Schale schräge Auflageflächen mit im wesentlichen einem Winkel von 45° zur Horizontalen aufweist, um dadurch die Schale automatisch mittig und insbesondere horizontal in dem Bodenteil bzw. dem Abschnitt des Bodenteils zu positionieren. Dadurch kann das Einhängen bzw. Einstellen der Schalen in ein Bodenteil automatisiert werden bzw. ist dieses einfach zu handhaben, ohne dass eine Kontrolle hierfür erforderlich ist.

Gemäß einer bevorzugten Ausführungsform ist eine oder sind mehrere Schalen, insbesondere Porzellanschalen derart in das Bodenteil eingehängt, dass die Schale in eingehängtem Zustand nach unten über das Bodenteil hinausragt und somit bei einheitlichen Bodenteilen unterschiedlich große Schalen eingehängt werden können.

Wenn der Verriegelungsmechanismus Führungen zum Verschluss des Deckelteils auf dem Bodenteil aufweist, dann wird das Zusammenfügen des Behältnisses auf einfache Art und Weise verbessert.

Wenn mehrere Schalen zur Aufnahme von Speisen in dem Bodenteil eingestellt oder eingehängt sind, wobei das Bodenteil und/oder das Deckelteil in GN-Norm 1/1 ausgeführt sind, dann können die Behältnisse in der weltweit verbreiteten GN-Norm in besonders einfacher Art und Weise verwendet bzw. gehandhabt werden. Insbesondere ist es von Vorteil, wenn für jede Schale jeweils eine Dichtungskomponente an dem Deckelteil angeordnet ist, wobei dadurch mehrere Schalen durch einen einzigen Vorgang abgedichtet bzw. geschlossen werden können, wenn entsprechend jeweils eine Dichtungskomponente in dem Deckelteil angebracht ist.

Ferner ist es vorteilhaft, wenn die Bodenteile mehrere im Wesentlichen vertikal verlaufende Dornelemente aufweisen, die beim Stapeln von mehreren Bodenteilen in Verbindung mit im Wesentlichen horizontal verlaufenden Ringen für eine Arretierung sorgen.

Wenn die Dornelemente des Bodenteils mit im Wesentlichen horizontal verlaufenden Ringen des Deckelteils derart zusammenwirken, dass die Dornelemente des Bodenteils und die Ringe des Deckelteils als Führung beim Schließen des Deckelteils auf das Bodenteil wirken, erhält man ein erfindungsgemäßes Behältnis, bei dem das Zusammenfügen von Bodenteil und Deckelteil auf einfache Weise ermöglicht wird.

Gemäß der Erfindung werden mehrere Behältnisse gemäß den Ansprüchen 1 bis 12 für ein System zum Verteilen von Speisen verwendet. Dabei sind mehrere Dichtungskomponenten, mehrere Deckelteile, mehrere Bodenteile sowie mehrere Deckelteile mit angebrachter Dichtungskomponente, mehrere Schalen, mehrere Bodenteile mit eingehängten Schalen sowie mehrere Bodenteile mit eingehängten und unterhalb des Bodenteils herausragenden Schalen übereinander stapelbar, so dass einzelne Teile des erfindungsgemäßen Behältnisses hinsichtlich des Transports und der Lagerung einfach zu handhaben sind.

Ferner sind jeweils mehrere Behältnisse durch einen Formschluss stapelbar, insbesondere mit Hilfe von Stapelelementen oder Stapelplättchen, die jeweils in den Ecken eines Bodenteils angeordnet sind. Somit können auch mehrere Behältnisse, insbesondere zum Verteilen der Speisen bzw. zum Transport beispielsweise in einem Kühlwagen platzsparend aufbewahrt und befördert werden.

Gemäß einer weiteren vorteilhaften Ausführungsform ist ein Spülrost unter Einwirkung eines Verriegelungsmechanismus auf ein Bodenteil mit darin eingehängten oder eingestellten Schalen derart aufbringbar, dass die Schalen durch den Spülrost während des Spülvorgangs am Herausfallen gehindert werden, wobei der Spülrost eine Gitterstruktur mit insbesondere darin untergebrachten Ringelementen zum Arretieren und Zentrieren von beliebigen Bodenteilen aufweist. Dadurch ist es möglich, dass die Bodenteile mit darin eingehängten oder eingestellten Schalen unmittelbar ohne Demontage gespült werden können. Ferner können die Deckelteile mit eingehängten Dichtungskomponenten ohne Demontage gespült werden, so dass das erfindungsgemäße Behältnis lediglich geöffnet werden muss und dann ohne weitere Demontage zum einen als Bodenteil mit eingestellten Schalen mit Hilfe des Spülrosts und zum anderen als Deckelteil mit eingehängter Dichtungskomponente ohne Spülrost in einem Spülvorgang gereinigt werden kann.

Weitere vorteilhafte Ausgestaltungen der vorliegenden Erfindung sind Gegenstand der weiteren Unteransprüche.

### Kurze Beschreibung der Zeichnungen

Im Folgenden werden Anhand der Zeichnungen rein beispielhaft bevorzugte Ausführungsformen der Erfindung näher erläutert:
Es zeigen
   Figur 1 eine Querschnittsansicht eines erfindungsgemäßen Behältnisses;
   Figur 2 eine schematische Ansicht der Verbindung zwischen dem Deckelteil und der Dichtungskomponente durch die Ausgleichseinrichtung;
   Figur 3 eine Querschnittsansicht von Figur 2;
   Figur 4 eine Draufsicht der Deckelaufnahme mit einem darin eingesetzten Ausgleichselement gemäß der Erfindung;
   Figur 5 eine Draufsicht der Deckelaufnahme von Figur 4 ohne Ausgleichselement;
   Figur 6 eine Draufsicht der Aufnahme der Dichtungskomponente für das Ausgleichselement;
   Figur 7 die Aufnahme der Dichtungskomponente von Figur 6 mit eingesetztem Ausgleichselement;
   Figur 8 eine Draufsicht von mehreren Dichtungskomponenten mit darin eingesetztem Ausgleichselement;
   Figur 9 eine Draufsicht von Figur 8 ohne Ausgleichselemente;
   Figur 10 eine Querschnittsansicht des Teils der Dichtungskomponente mit der Druckausgleichöffnung, in welcher eine Vakuumierscheibe ohne Dichtungsfunktion eingelegt ist;
   Figur 11 eine Draufsicht der Ansicht von Figur 10 von oben;
   Figur 12 eine Ansicht von mehreren Dichtungskomponenten von oben mit eingelegter Vakuumierscheibe;
   Figur 13 eine schematische Ansicht einer weiteren Ausführungsform der Erfindung mit einem weiteren Ausgleichselement zwischen dem Deckelteil und der Dichtungskomponente;
   Figur 14 eine schematische Querschnittsansicht eines Behältnisses gemäß der Erfindung mit zwei Essensfächern;
   Figur 15 eine schematische Querschnittsansicht der Abdichtung zwischen dem Deckel und dem Bodenteil von Figur 1;
   Figur 16 eine Querschnittsansicht des erfindungsgemäßen Behältnisses gemäß einer weiteren Ausführungsform;
   Figur 17 eine Querschnittsansicht der Ausführungsform gemäß Figur 14 mit zwei Essensfächern;
   Figur 18 eine schematische Querschnittsansicht der Abdichtung zwischen Deckel und Bodenteil gemäß der Ausführungsform von Figur 15;
   Figur 19 eine schematische Schnittansicht einer weiteren Ausführungsform des erfindungsgemäßen Behältnisses mit einem Materialscharnier;
   Figur 20 eine schematische Querschnittsansicht einer weiteren Ausführungsform des erfindungsgemäßen Behältnisses entlang einer großen Schale;
   Figur 21 ist eine Querschnittsansicht der erfindungsgemäßen Ausgleichseinrichtung mit Verschließelement von Figur 20;
   Figur 22 ist eine schematische Ansicht auf das erfindungsgemäße Behältnis gemäß Fig. 20;
   Figur 23 zeigt einen Querschnitt durch das Deckelteil des erfindungsgemäßen Behältnisses von Figur 22 entlang der beiden kleinen Dichtungskomponenten;
   Figur 24 zeigt einen Querschnitt durch das Deckelteil des erfindungsgemäßen Behältnisses von Figur 22 entlang der großen Dichtungskomponente;
   Die Figuren 25 bis 27 zeigen den oberen Abdichtvorgang und die variable Positionierung der Dichtungskomponente zur Schale in einzelnen Sequenzen des erfindungsgemäßen Behältnisses im Querschnitt;
   Figur 28 zeigt einen Querschnitt durch das erfindungsgemäße Verschließelement im nicht abdichtenden Zustand;
   Figur 29 zeigt eine Frontansicht eines Federrings in dem in Figur 28 gezeigten Zustand;
   Figur 30 zeigt eine Querschnittsansicht des Verschließelements im abdichtenden Zustand;
   Figur 31 zeigt eine Frontansicht des Federrings im Zustand gemäß Figur 30;
   Figur 32 zeigt eine Querschnittsansicht des erfindungsgemäßen Behältnisses entlang den beiden kleinen Schalen;
   Figur 33 zeigt einen Querschnitt des erfindungsgemäßen Behältnisses mit einer daran angebrachten Saugvorrichtung, das elastischen Abdichtelement oben und das umlaufende Abdichtelement unter der Dichtlippe;
   Figur 34 zeigt eine schematische Draufsicht auf ein erfindungsgemäßes Behältnis im vakuumierten Zustand mit den angepressten elastischen Abdichtelementen über den Druckausgleichsöffnungen;
   Figur 35 zeigt eine Schnittansicht durch eine kleine Schale von Figur 34 im vakuumierten Zustand komplett mit dem elastischen Abdichtelement oben und dem umlaufenden Abdichtelement unter der Dichtlippe;
   Figur 36 ist eine schematische Ansicht auf das Deckelteil einer weiteren Ausführungsform des erfindungsgemäßen Behältnisses mit eingehängten Dichtungskomponenten;
   Figur 37 ist eine schematische Ansicht auf das erfindungsgemäße Behältnis;
   Figur 38 ist eine schematische Ansicht auf das Bodenteil ohne die eingesetzten Menüschalen;
   Figur 39 zeigt eine Draufsicht eines Bodenteils mit eingesetzten Menüschalen;
   Figur 40 ist eine Querschnittsansicht von zwei aufeinander gestapelten Behältnissen entlang der kleinen Schale;
   Figur 41 ist eine Querschnittsansicht des erfindungsgemäßen Behältnisses im offenen Zustand entlang der großen Schale;
   Figur 42 zeigt eine Querschnittsansicht des erfindungsgemäßen Deckelteils ohne eingehängte Dichtungskomponenten frei stehend sowie gestapelt entlang der kleinen Schale;
   Figur 43 zeigt eine Querschnittsansicht des erfindungsgemäßen Deckelteils mit den eingehängten Dichtungskomponenten frei stehend sowie gestapelt entlang der großen Schale;
   Figur 44 zeigt eine Querschnittsansicht des erfindungsgemäßen Bodenteils ohne eingesetzte Menüschalen frei stehend sowie gestapelt entlang der kleinen Schale;
   Figur 45 zeigt eine Querschnittsansicht des erfindungsgemäßen Bodenteils mit eingesetzten Menüschalen frei stehend sowie gestapelt entlang der großen Schale;
   Figur 46 zeigt eine Querschnittsansicht der kleinen Dichtungskomponenten frei stehend sowie gestapelt;
   Figur 47 zeigt eine Querschnittsansicht der großen Menüschale frei stehend sowie gestapelt;
   Figur 48 zeigt eine Draufsicht auf einen kompletten Satz der erfindungsgemäßen Dichtungskomponenten;
   Figur 49 zeigt eine Draufsicht auf die große Dichtungskomponente mit angebrachter Halte- und Ausgleichseinrichtung;
   Figur 50 bis 52 zeigen Querschnitte des Verschlussmechanismus zu dessen Erläuterung;
   Figur 53 ist ein Längsschnitt des erfindungsgemäßen Behältnisses im geschlossenen Zustand und zeigt die Verschlussmechanik in einer Frontansicht;
   Figur 54 ist ein Schnitt durch ein erfindungsgemäßes Bodenteil;
   Figur 55 ist eine schematische Ansicht auf das Bodenteil ohne die eingesetzten Menüschalen mit daran angebrachten Stapelplättchen;
   Figur 56 ist eine Querschnittsansicht von zwei aufeinander gestapelten Behältnissen entlang der großen Schale mit angebrachten Stapelplättchen;
   Figur 57 zeigt eine Draufsicht eines Deckelteils für große Dichtungskomponenten des erfindungsgemäßen Behältnisses mit eingehängten Dichtungskomponenten;
   Figur 58 ist eine schematische Ansicht auf ein Bodenteil für 3 große Menüschalen mit eingesetzten Menüschalen;
   Figur 59 zeigt eine Draufsicht auf ein Bodenteil für 3 große Menüschalen mit eingesetzten Menüschalen;
   Figur 60 zeigt eine Längsschnittsansicht des Transportrostes für 3 große Menüschalen im geschlossenen Zustand;
   Figur 61 zeigt eine Längsschnittsansicht des Transportrostes für 3 große Menüschalen im offenen Zustand;
   Figur 62 zeigt eine Querschnittsansicht des Transportrostes für 3 große Menüschalen im geschlossenen Zustand;
   Figur 63 zeigt eine Querschnittsansicht von 2 aufeinander gestapelten Transportrosten für 3 große Menüschalen;
   Figur 64 zeigt eine Querschnittsansicht des Transportrostes für 3 große Menüschalen im offenen Zustand;
   Figur 65 zeigt eine Querschnittsansicht von 2 aufeinander gestapelten Deckelteilen des Transportrostes für 3 große Menüschalen mit eingehängten Dichtungskomponenten;
   Figur 66 ist ein Querschnitt des erfindungsgemäßen Trägerrostes für 3 große Menüschalen mit eingesetzten Menüschalen frei stehend sowie gestapelt;
   Figur 67 zeigt eine Querschnittsansicht des Transportrostes für 3 große Menüschalen im geschlossenen, gestapelten Zustand wobei die Menüschalen unten hervorstehen;
   Figur 68 ist ein Querschnitt des erfindungsgemäßen Trägerrostes für 3 große Menüschalen mit eingesetzten überhohen Menüschalen frei stehend sowie gestapelt;
   Figur 69 zeigt eine Draufsicht eines Deckelteils für kleine Dichtungskomponenten des erfindungsgemäßen Behältnisses mit eingehängten Dichtungskomponenten;
   Figur 70 ist eine schematische Ansicht auf ein Bodenteil für 6 kleine Menüschalen mit eingesetzten Menüschalen;
   Figur 71 zeigt eine Längsschnittsansicht des Transportrostes für 6 kleine Menüschalen im offenen Zustand;
   Figur 72 zeigt eine Querschnittsansicht des Transportrostes für 6 kleine Menüschalen im offenen Zustand;
   Figur 73 zeigt eine Querschnittsansicht des Transportrostes für 6 kleine Menüschalen im geschlossenen Zustand;
   Figur 74 ist ein Querschnitt des erfindungsgemäßen Trägerrostes für 6 kleine Menüschalen mit eingesetzten Menüschalen frei stehend sowie gestapelt;
   Figur 75 zeigt eine Querschnittsansicht von 2 aufeinander gestapelten Deckelteilen des Transportrostes für 6 kleine Menüschalen mit eingehängten Dichtungskomponenten;
   Figur 76 zeigt schematisch gestapelte Bodenteile mit eingehängten Schalen;
   Figur 77 zeigt eine Draufsicht eines Deckelteils für große runde Dichtungskomponenten einer weiteren Ausführungsform des erfindungsgemäßen Behältnisses mit eingehängten Dichtungskomponenten;
   Figur 78 ist eine schematische Ansicht auf ein Bodenteil für 2 flache Teller mit eingesetzten Rundtellern;
   Figur 79 zeigt eine Längsschnittsansicht des Transportrostes für 2 flache Teller im geschlossenen Zustand;
   Figur 80 zeigt eine Längsschnittsansicht des Transportrostes für 2 flache Teller im offenen Zustand;
   Figur 81 zeigt eine Längsschnittsansicht des erfindungsgemäßen Deckelteils des Transportrostes für 2 flache Teller mit eingehängten Dichtungskomponenten frei stehend sowie gestapelt;
   Figur 82 ist ein Längsschnitt des erfindungsgemäßen Trägerrostes für 2 flache Teller mit eingesetzten Rundtellern frei stehend sowie gestapelt;
   Figur 83 zeigt eine Querschnittsansicht des Transportrostes für 2 flache Teller im offenen Zustand;
   Figur 84 zeigt eine Querschnittsansicht des Transportrostes für 2 flache Teller im geschlossenen Zustand;
   Figur 85 zeigt eine Querschnittsansicht von 2 aufeinander gestapelten Deckelteilen des Transportrostes für 2 flache Teller mit eingehängten Dichtungskomponenten;
   Figur 86 zeigt eine Draufsicht von einer Dichtungskomponente für große Rundteller;
   Figur 87 ist eine Draufsicht einer Dichtungskomponente für große Rundteller mit angebrachter Halte- und Ausgleichseinrichtung;
   Figur 88 ist ein Querschnitt der Dichtungskomponente für große Rundteller frei stehend sowie gestapelt;
   Figur 89 ist ein Querschnitt der großen Rundteller frei stehend sowie gestapelt;
   Figur 90 zeigt eine Draufsicht eines Deckelteils für 6 kleine runde Dichtungskomponenten des erfindungsgemäßen Behältnisses mit eingehängten Dichtungskomponenten;
   Figur 91 ist eine schematische Ansicht auf ein Bodenteil für 6 kleine runde Schalen mit eingesetzten Schalen;
   Figur 92 zeigt eine Querschnittsansicht des Transportrostes für 6 kleine runde Schalen im offenen Zustand;
   Figur 93 zeigt eine Draufsicht von einer Dichtungskomponente für kleine runde Schalen;
   Figur 94 ist eine Draufsicht einer Dichtungskomponente für kleine runde Schalen mit angebrachter Halte- und Ausgleichseinrichtung;
   Figur 95 bis 97 zeigen Querschnitte des Verriegelungsmechanismus der Transportroste zu dessen Erläuterung;
   Figur 98 zeigt einen Verschlusshebel des in den Figuren 95 bis 97 gezeigten Verriegelungsmechanismus im geschlossenen Zustand;
   Die Figuren 99 bis 102 zeigen den oberen Abdichtvorgang der Druckausgleichsöffnung sowie die Aufhängung und die variable Positionierung der Dichtungskomponente zur Schale bzw. Teller in einzelnen Sequenzen des erfindungsgemäßen Behältnisses im Querschnitt;
   Figur 103 zeigt eine Draufsicht eines universalen Spülrostes;
   Figur 104 ist eine Draufsicht auf einen vakuumierfähigen Satz Dichtungskomponenten für die Portionsschale;
   Figur 105 zeigt einen Querschnitt eines vakuumierfähigen Satzes von Dichtungskomponente.
   Figur 106 ist eine Draufsicht auf einen vakuumierfähigen Satz Dichtungskomponenten für die Portionsschale komplett mit dem elastischen Abdichtelement oben;
   Figur 107 zeigt einen Querschnitt eines vakuumierfähigen Dichtungskomponentensatzes komplett mit dem elastischen Abdichtelement oben und dem umlaufenden Abdichtelement unter der Dichtlippe;
   Figur 108 ist eine Draufsicht eines Deckelteils des erfindungsgemäßen Behältnisses mit eingehängten vakuumierfähigen Dichtungskomponenten komplett mit den oberen elastischen Abdichtelementen;
   Figur 109 ist eine Querschnittsansicht des erfindungsgemäßen Behältnisses im geschlossenen Zustand entlang der kleinen Schale ohne Deckelteil aber mit vakuumierfähigen Dichtungskomponenten und den dazugehörigen Abdichtelementen oben bzw.; unter der Dichtlippe;
   Figur 110 zeigt einen Querschnitt des erfindungsgemäßen Behältnisses mit einer daran angebrachten Saugvorrichtung, das elastische Abdichtelement oben und das umlaufende Abdichtelement unter der Dichtlippe;
   Figur 111 zeigt eine weitere Ausführungsform eines Teils des erfindungsgemäßen Behältnisses in einer schematischen Schnittansicht;
   Figur 112 zeigt die Dichtungskomponente von Fig. 110, welche in einem Deckelteil aus geschäumtem Kunststoff eingehängt ist; und
   Fig. 113 ist eine schematische Darstellung der Dichtungskomponente von Fig. 111, welche in einem Deckelteil aus Gitterstruktur eingehängt ist.

### Beschreibung der Ausführungsbeispiele der Erfindung

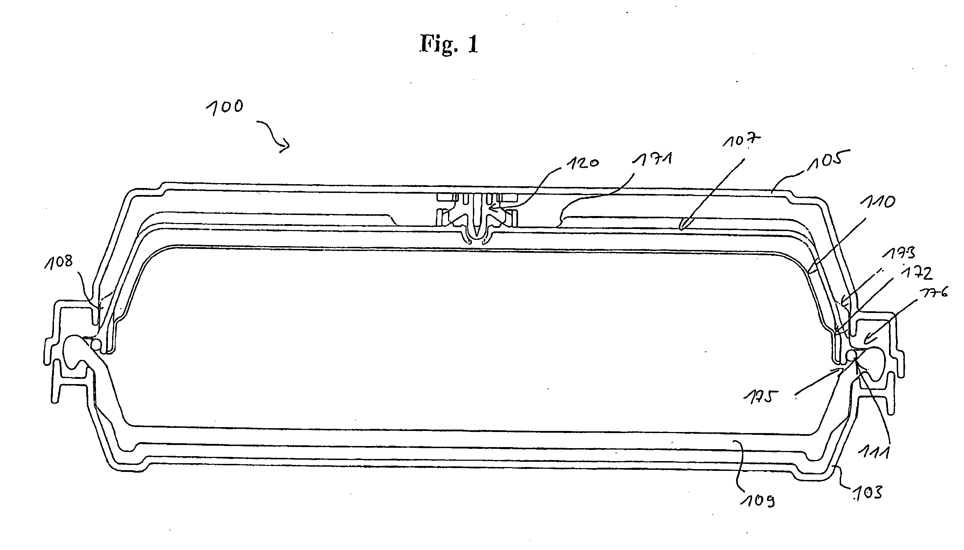

Figur 1 ist eine Querschnittsansicht des erfindungsgemäßen Behältnisses 100, welches ein Bodenteil 103, ein Deckelteil 105, eine Dichtungskomponente 107, eine einstellbare Einzelschale 109, eine Metallinnenkomponente 110 und ein ringförmiges Abdichtungselement 111 aufweist. Zwischen dem Deckelteil 105 und der Dichtungskomponente 107 ist ein Ausgleichselement 120 bzw. eine Ausgleichseinrichtung vorgesehen, welches an dem Deckelteil 105 durch eine Presspassung befestigt ist und derart mit der Dichtungskomponente 107 verbunden ist, dass die Dichtungskomponente 107 durch eine variable Lagerung mittels des Ausgleichselements sowohl nach oben und unten als auch in der horizontalen Auflageebene an dem Bodenteil 103 bzw. der einlegbaren Schale 109 variabel einstellbar ist. Dies bedeutet, dass die variable Aufhängung der Dichtungskomponente 107 durch das Ausgleichselement 120 stets für eine Abdichtung der Dichtungskomponente 107 an der Einzelschale 109 bzw. dem Bodenteil 103 sorgt. Dies wird dadurch ermöglicht, dass das Ausgleichselement 120 zum einen eine einstellbare Positionierung der Dichtungskomponente 107 zu dem Bodenteil 103 bzw. der Einzelschale 109 ermöglicht, wobei der Anpressdruck der Dichtungskomponente 107 ebenso hinsichtlicht der Einzelschale 109 und des ringförmigen Abdichtelements 111 variiert werden kann, so dass die Abdichtfunktion je nach herstellungsbedingten Toleranzen des Bodenteils 103 und der Einzelschale 109 optimal erzielt werden kann. Dies wird insbesondere dann erreicht, wenn ein Spiel zwischen der Dichtungskomponente und dem Deckelteil im Bereich der Einführungsstege 108 vorhanden ist. Andererseits kann das Ausgleichselement 120 ebenso für einen Druckausgleich innerhalb eines Speiseunterbringungsraums sorgen, welcher von der Dichtungskomponente und der Einzelschale 109 begrenzt wird, wie im Laufe der Figurenbeschreibung näher erläutert werden wird. Somit wirkt das Ausgleichselement 120 in der in Figur 1 beschriebenen Ausführungsform als Multifunktionshebel.

Ferner weist die Dichtungskomponente 107 Stapelstege 171 auf, die beim Stapeln im Rost verwendet werden. Die Metallinnenkomponente 110 kann bei Beaufschlagung mit Induktion als Kondensatverdunster arbeiten und ist über Verstärkungen 172 mit der Dichtungskomponente 107 am Stützrand verbunden, welche als Halt für die Metallinnenkomponente 110 dienen. Dabei erstreckt sich ein Teil der Metallinnenkomponente 110 parallel zu den Verstärkungen 172 der Dichtungskomponente 107. Des Weiteren weist die Dichtungskomponente 107 Stapelnocken 173 auf, welche zum Stapeln der einzelnen Dichtungskomponenten übereinander verwendet werden. Wie aus Figur 1 ersichtlich endet die Unterkante der Metallinnenkomponente 110 an dem umlaufenden Rand der Dichtungskomponente 10 unter Bildung eines gemeinsamen Abschlusses, wie durch den Pfeil 175 angedeutet. Der gemeinsame umlaufende Rand der Dichtungskomponente 107 und der Metallinnenkomponente 110 liegt jedoch nicht auf der Einzelschale 109 auf, da diese zur Abdichtung über das ringförmige Abdichtelement 111 abgedichtet werden, welches zusammen mit der Dichtlippe 176 dafür sorgt, dass es zu keinerlei Luftaustausch nach außen kommt und somit das Vakuum bzw. der Unterdruck oder Überdruck zwischen der Dichtungskomponente 110 und der Einzelschale 109 nicht beeinträchtigt wird.

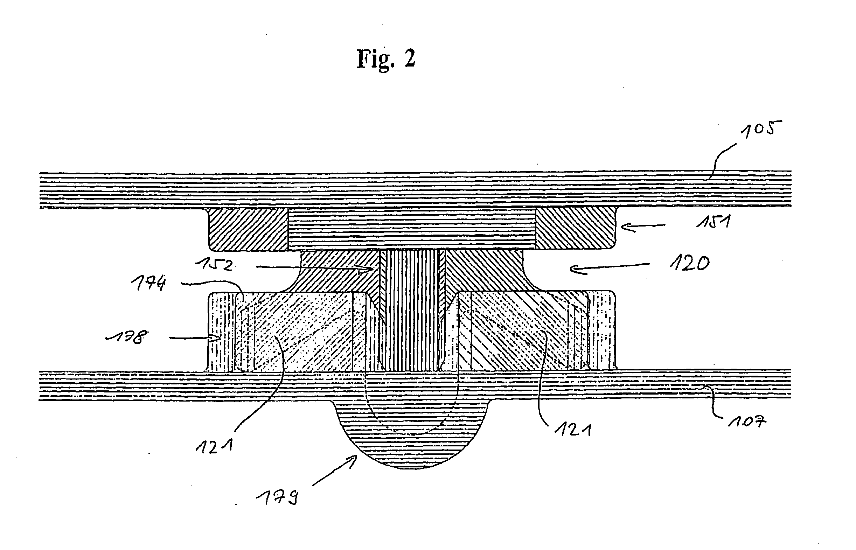

In Figur 2 ist eine Querschnittsansicht des Teilbereichs des Deckelteils 105 und der Dichtungskomponente 110 dargestellt, wobei diese beiden Elemente durch das Ausgleichselement 120 verbunden sind. In dieser vergrößerten Darstellung von Figur 2, welche teilweise verdickte Elemente in gestrichelter Form darstellt, sind Widerstandselemente 151 gezeigt, die insbesondere einstückig an dem Deckelteil 105 ausgebildet sind. Die Widerstandselemente 151 verhindern ein nach oben biegen von Flügelelementen 121, welche in Figur 2 in gestrichelter Form nach rechts und nach links gezeigt sind. Diese Flügelelemente 121 befinden sich in Aussparungen der Dichtungskomponente 110, welche zwischen Stegelementen 174 der Dichtungskomponente 110 ausgebildet werden. Dabei sind die Flügelelemente 121 verschiebbar sowohl in vertikaler als auch in horizontaler Richtung in diesen Aussparungen gelagert, um für den notwendigen Halt zwischen der Dichtungskomponente 110 und dem Ausgleichselement 120 zu sorgen. Ferner sind Verstärkungselemente 178 im Bereich der unterbrochenen Stegelemente 174 dargestellt, welche beim Niederdrücken der Flügel für entsprechende Stabilität und somit einen entsprechenden Halt sorgen. Um eine derartige verschiebliche und variable Lagerung des Ausgleichelements 120 an der Dichtungskomponente 110 bereitzustellen, sind zumindest die Flügelelemente 121 aus einer elastischen Komponente aufgebaut. Hierzu weist das Ausgleichselement zu verpressende Lamellen auf, die über eine 60° Schräge in der Aufnahme der Dichtungskomponente 107 verpresst werden und somit für den notwendigen Halt.

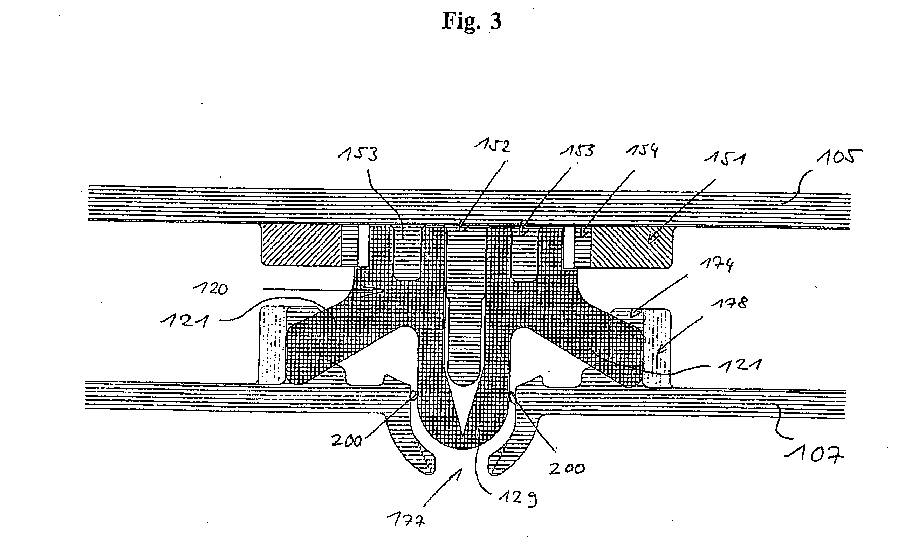

Des Weiteren ist schematisch ein Fortsatz 152 des Deckelteils 105 gezeigt, welcher zusammen mit der elastischen Komponente des Ausgleichelements für die Abdichtung einer in Figur 2 nicht gezeigten Druckausgleichsöffnung der Ausbuchtung 179 der Dichtungskomponente 107 bewerkstelligt, wie in Figur 3 näher gezeigt.

Figur 3 zeigt nun eine Querschnittsansicht von Figur 2 zur Erläuterung der Abdichtfunktion der Druckausgleichsöffnung 177 in der Dichtungskomponente 107. Ferner ist die integrale Ausbildung der unterbrochenen Stegelemente 174 mit der Dichtungskomponente 107 ersichtlich, zwischen welchen sich die Flügelelemente 121 befinden. Ferner sind die Verstärkungselement 178 gezeigt, welche einen Halteverlust beim Auseinanderbiegen der Flügelelemente 121 verhindern. Wie in Figur 3 zu sehen, ist das Ausgleichselement 120 vollständig aus einer Silikonkomponente aufgebaut, die durch die karierte Schraffierung dargestellt ist und bildet somit die elastische Komponente 120. Die elastische Komponente bzw. das Ausgleichselement 120 ist mittels einer Presspassung an Stabilisierungssäulen 153 des Deckelteils 105 fest angebracht. Ferner ist das Ausgleichselement 120 durch eine Presspassung des oberen Teils des säulenartigen Fortsatzes 152 des Deckelteils 105 befestigt. Des Weiteren ist eine äußere Umrandung bzw. Aufnahme 154 gezeigt, welche die Aufnahme des Ausgleichselement 120 an dem Deckelteil 105 begrenzt. Neben dieser Aufnahme 154 befinden sich die Widerstandselemente 151, die ein nach oben biegen der Flügelelemente 121 verhindern.

Im Folgenden wird nun die Abdichtung der Druckausgleichsöffnung 177 näher erläutert. Beim Schließen des Deckelteils 105 wird der Fortsatz 152 aus der in Figur 3 gezeigten Position tiefer nach unten gedrückt, so dass das Ende des Fortsatzes 152 mit den konischen Innenwänden der Ausstülpung 129 des Ausgleichselements 120 in Berührung kommt, und wobei durch diese Berührung die Ausstülpung 129 des Ausgleichselements 120 in diesem Bereich einen größeren Außenumfang erhält, so dass es an den durch das Bezugszeichen 200 angedeuteten kleinen Kreises zu einer Abdichtung mit der Druckausgleichsöffnung 177 kommt. Die Umfangszunahme bzw. die Ausdehnung der Ausstülpung 129 sorgt somit zu einer absoluten Dichtheit an dieser Stelle. Durch das oben beschriebene Zusammenwirken des Fortsatzes 152 und der Ausstülpung 129 aus einer elastischen Komponente kann die gewünschte Abdichtung genau berechnet werden. Somit sorgt die Wechselwirkung zwischen der elastischen Ausstülpung 129 und dem Fortsatz 152 für einen geeigneten Druck, welcher für die Dichtheit der darunterliegenden Essenskammer sorgt, wobei jedoch überschüssige Luft vor dem Abdichten entweichen konnte, und wobei auch weiterhin bei einem zu starken Druck nach dem Abdichten überschüssige Luft entweichen kann, da sich die Abdichtung an den Stellen 200 zum Ausgleich eines Überdrucks wieder kurzfristig lösen kann, wobei dies zu einem geringen Spalt führt, um den überschüssigen Druck abzubauen. Als Folge davon kann die Abdichtung des erfindungsgemäßen Behältnisses in vorteilhafter Art und Weise verbessert werden.

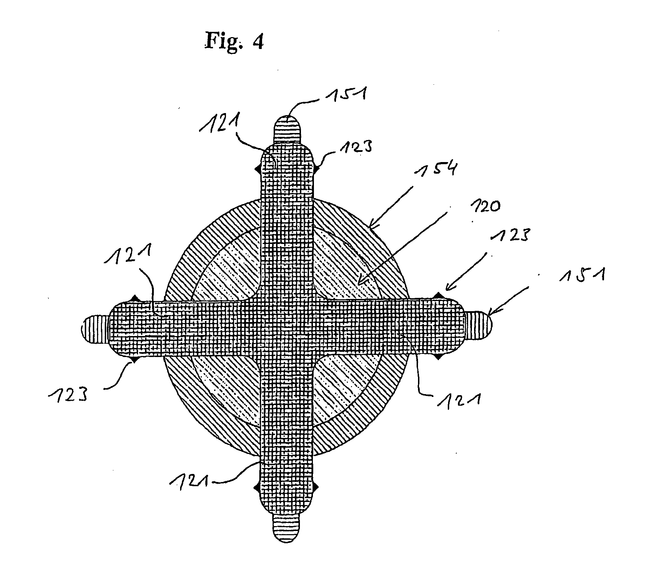

Figur 4 zeigt eine Draufsicht der Deckelaufnahme mit einem darin eingesetzten Ausgleichselement. Wie in dieser Ansicht gezeigt, ist die Aufnahme des Deckelteils 105 durch die Umrandung 154 kreisförmig ausgebildet. Darüber hinaus sind in Figur 4 die vier Flügelelemente 121 des Ausgleichselements 120 dargestellt, wobei im Bereich der Enden der Flügelelemente 121 jeweils an den Seitenflächen zu verpressende Lamellen 123 in Form von Dreiecken dargestellt sind. Über die Flügelelemente 121 stehen jeweils die darunter liegenden Widerstandselement 151 hervor.

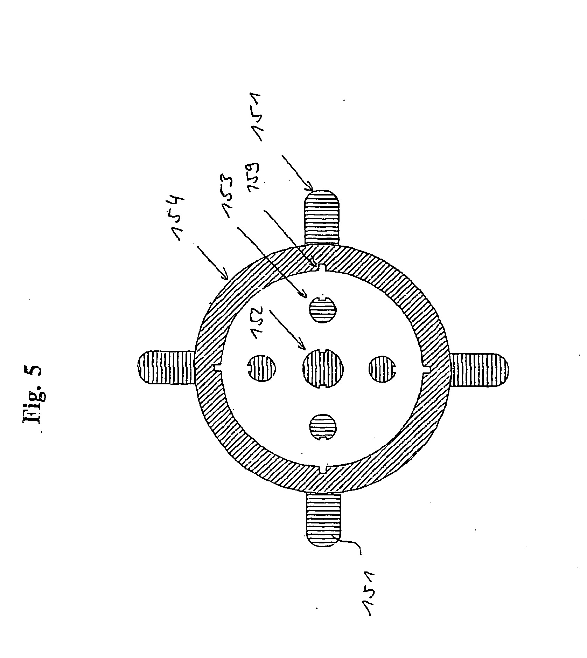

Gemäß Figur 5 ist eine Draufsicht der Deckelaufnahme von Figur 4 ohne Ausgleichselement dargestellt. Wie bereits erwähnt umfasst die Aufnahme für das Ausgleichselement des Deckelteils 105 eine Umrandung bzw. runde äußere Begrenzung 154, die an ihrem inneren Umfang Lüftungsschlitze 159 aufweist, die dazu dienen, dass Luft beim Aufstecken des Ausgleichselements entweichen kann, um für einen festen Sitz dieses Ausgleichselements zu sorgen. Die vier Stabilisierungssäulen 153 weisen ebenso jeweils einen Lüftungsschlitz auf, wie auch der säulenartige Fortsatz 152. Des Weiteren sind die vier Widerstandselemente 151 an dem äußeren Umfang der Aufnahme des Ausgleichselements angeordnet.

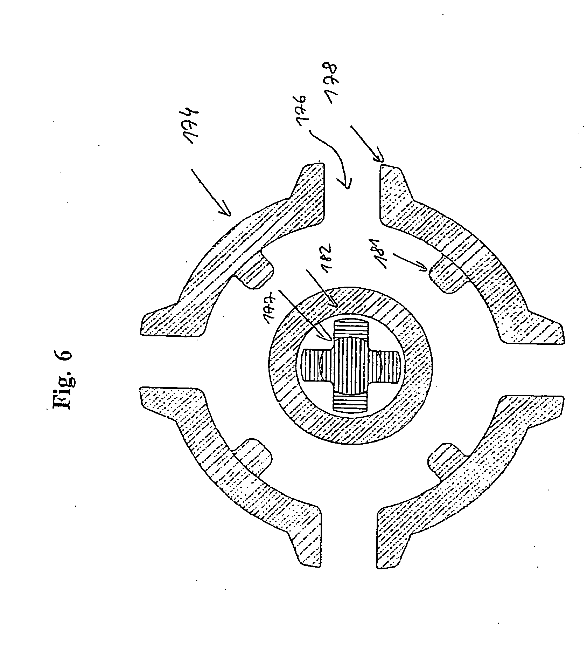

In Figur 6 ist nun der Bereich der Aufnahme des Ausgleichselements an der Dichtungskomponente 107 dargestellt. Die Verstärkungselemente 178 sind einstückig mit den ringförmigen unterbrochenen Segmenten 174 ausgeführt, wobei sich die Aussparungen in der Dichtungskomponente 107 zwischen zwei sich gegenüber liegenden Segmente bzw. Stegelemente 174 im Bereich der Verstärkungselemente 178 ausbilden. Diese Aussparungen 176 dienen zur Aufnahme der Flügelelemente 121 des Ausgleichselements 120. Im Zentrum der Darstellung befindet sich die Druckausgleichsöffnung 177 mit Lüftungsschlitzen. Ferner sind an den unterbrochenen Stegelementen 174 Auflageelemente 181 für eine nicht gezeigte Vakuumierscheibe angeordnet. Eine derartige Vakuumierscheibe wird ebenso auf eine Umrandung 182 der Druckausgleichsöffnung 177 aufgebracht, was später beschrieben werden wird.

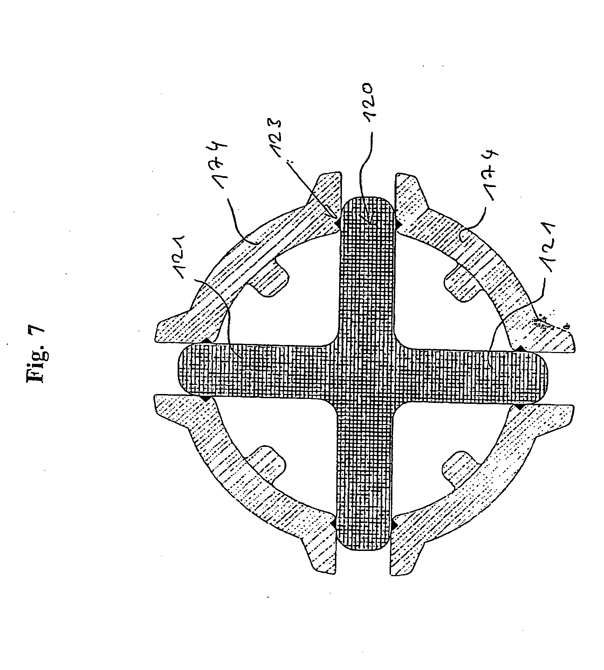

Figur 7 zeigt nun die Aufnahme der Dichtungskomponente 107 von Figur 6, wobei ein Ausgleichselement 120 in die Aufnahme der Dichtungskomponente 107 eingesetzt ist. Dabei ist ersichtlich, dass die zu verpressenden Lamellen 123 sich jeweils an die angrenzenden Stegelemente 174 anschmiegen, wobei dies in Figur 7 schematisch dargestellt ist. Durch das Zusammendrücken der Dichtungskomponente 107 und des Deckelteils 105 in dieser Aufnahme werden die Flügelelemente 121 zusammen mit den Lamellen 123 derart verpresst, dass es zu dem erforderlichen Halt zwischen der Dichtungskomponente 107 dem Deckelteil 105 kommt.

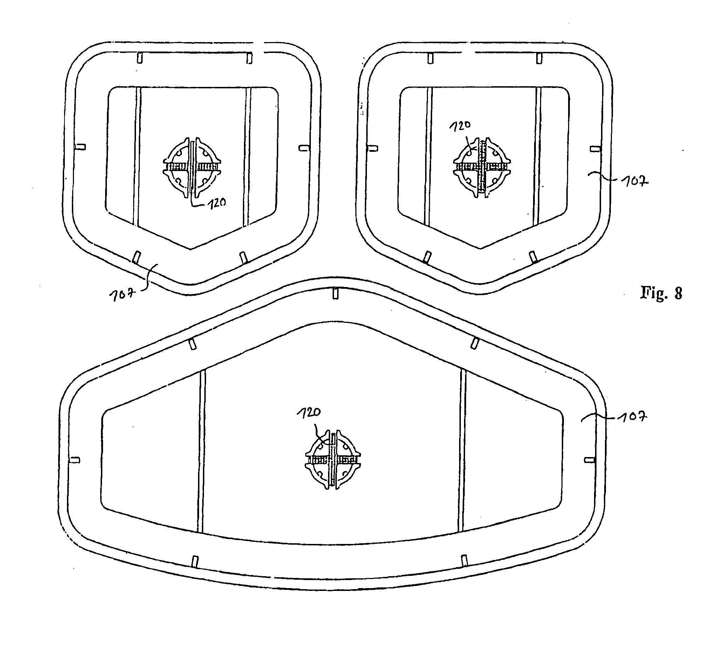

Figur 8 zeigt eine Draufsicht von mehreren Dichtungskomponenten 107 mit jeweils darin eingesetzten Ausgleichselementen 120.

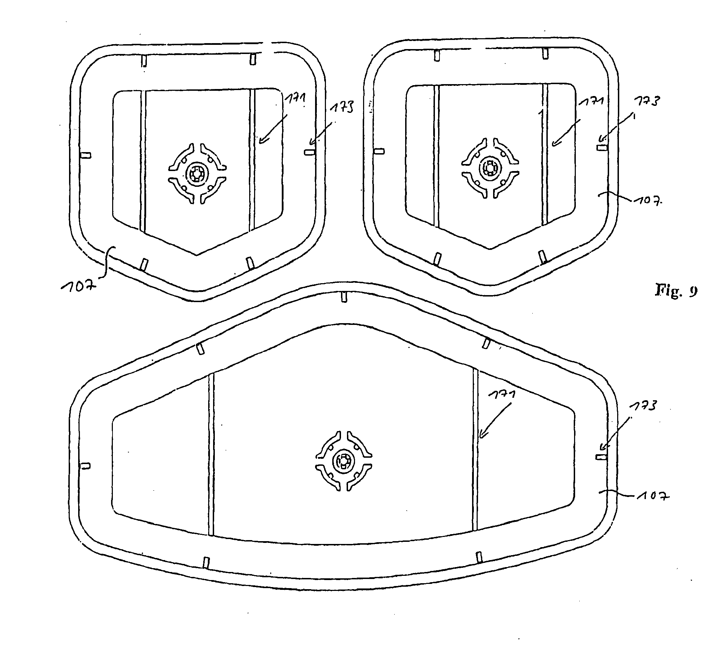

Figur 9 ist wiederum eine Draufsicht von Figur 8, wobei die Ausgleichselemente nicht gezeigt sind. In dieser Draufsicht sind die Stapelnocken 173 der einzelnen Essenabteil erkennbar. Des Weiteren sind die Stapelstege 171 der jeweiligen Dichtungskomponenten 107 gezeigt.

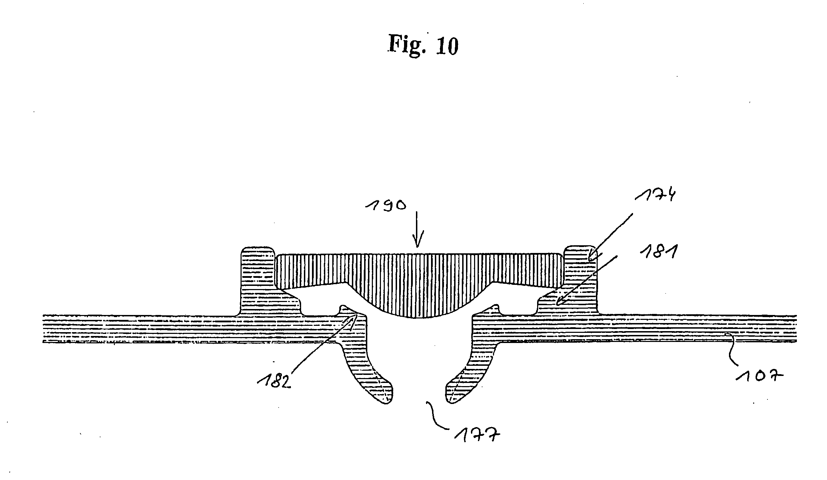

Figur 10 zeigt nun eine Querschnittsansicht des Teils der Dichtungskomponente mit der Druckausgleichsöffnung, in welcher eine Vakuumierscheibe 190 eingelegt ist. Diese Vakuumierscheibe ist ein elastisches Abdichtelement, welche an die Druckausgleichsöffnung 177 der Dichtungskomponente 107 angelegt wird. Dabei dichtet die Vakuumierscheibe 190 die Druckausgleichsöffnung 177 in der ursprünglichen vorgeformten Form nicht ab. Die Vakuumierscheibe 190 wird von den ringförmigen Stegelementen 174 aufgenommen, und liegt an den Auflageelementen 181 auf, so dass Luft durch die Aussparungen der Dichtkomponente aus dem Speiseunterbringungsraum entweichen kann.

Im Weiteren wird das Verfahren zur Erzeugung eines Vakuums in dem erfindungsgemäßen Behältnis beschrieben. Nach dem in Figur 10 gezeigten Einlegen der Vakuumierscheibe 190 wird ein Unterdruck beispielsweise mittels eines nicht gezeigten Vakuumierschlauches um die Druckausgleichsöffnung und insbesondere um die ringförmigen Segmentelemente 174 angelegt, so dass Luft aus dem Speiseunterbringungsraum zwischen der Dichtungskomponente 107 und der Einzelschale 109 abgesaugt wird.

Daraufhin wird die Vakuumierscheibe 190 entweder durch einen mechanischen Eingriff an die Umrandung 182 der Druckausgleichsöffnung 177 gedrückt oder durch einen Druckausstoß an die Umrandung 182 aufgebracht, um die Druckausgleichsöffnung 177 abzudichten. Wenn der Vakuumierschlauch nicht mehr außen an den Stegelementen 174 anliegt, dann wird die Vakuumierscheibe 190 durch den Unterdruck weiterhin an der Umrandung 182 angepresst.

Alternativ kann jedoch vor dem Anpressen der Vakuumierscheibe 190 auch eine Rückbegasung der Speiseunterbringungskammer vorgesehen sein, um für eine längere Haltbarkeit und ein schmackhafteres Aussehen der Speisen bei längerer Aufbewahrung zu sorgen.

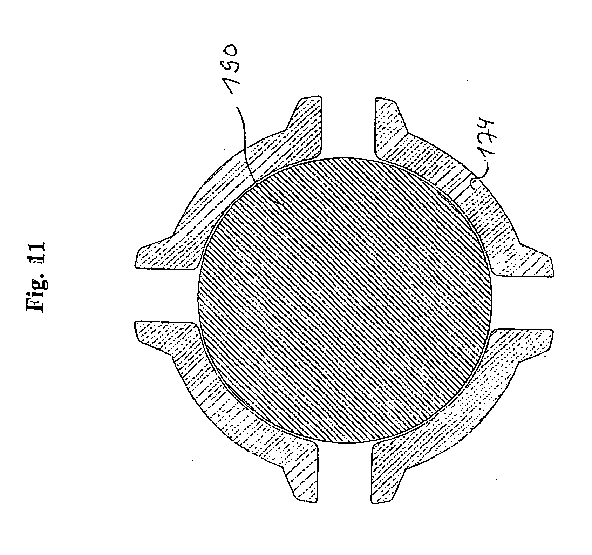

Figur 11 zeigt eine Draufsicht der Ansicht von Figur 10 von oben, wobei die Vakuumierscheibe 190 zwischen die Stegelemente 174 eingelegt ist, wobei ersichtlich wird, dass Luft zwischen den Aussparungen abgesaugt werden kann, welche für die Flügelelemente 121 des Ausgleichselements beschrieben worden sind.

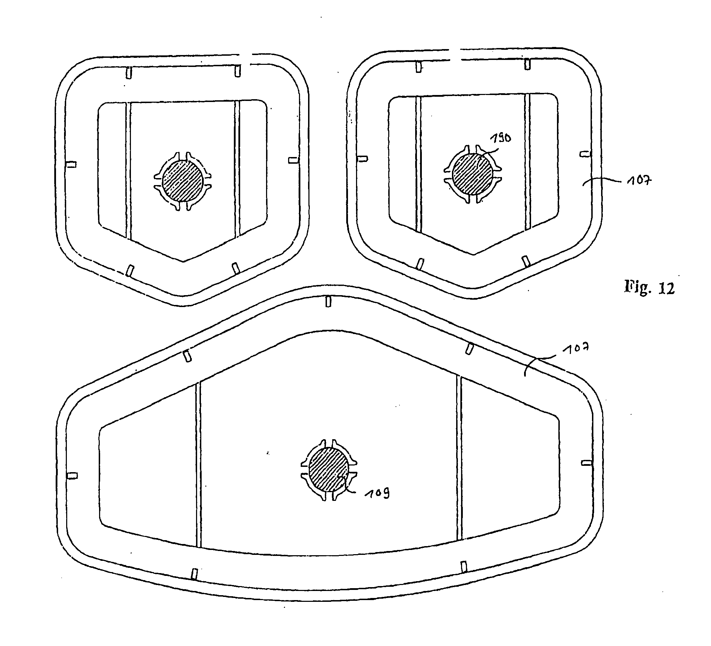

Gemäß Figur 12 sind die Dichtungskomponenten 107 mit jeweils eingelegter Vakuumierscheibe 190 dargestellt.

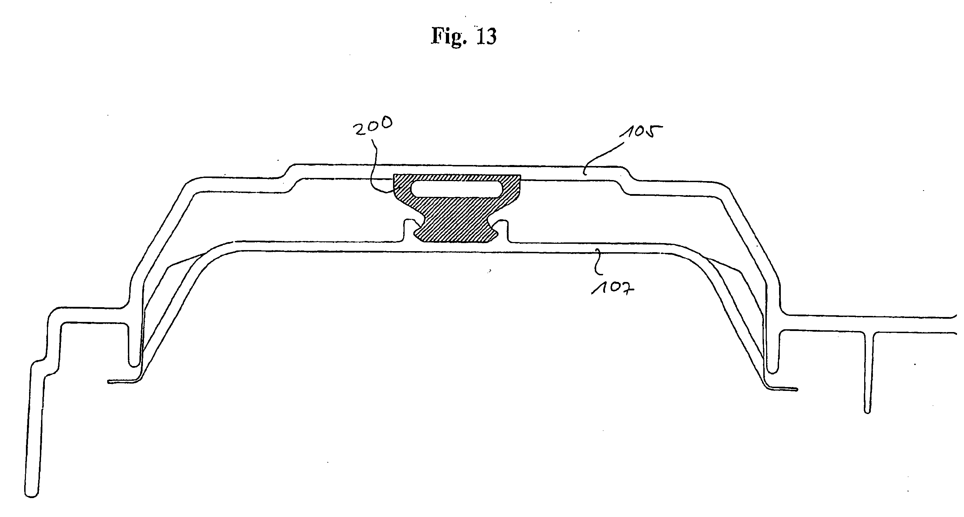

Eine weitere Ausführungsform des erfindungsgemäßen Ausgleichselements in form eines Gummipuffers ist in Figur 13 dargestellt, wobei dadurch die Austarierung der Dichtungskomponente erfolgt. Zwischen der Dichtungskomponente 107 und dem Deckelteil 105 ist ein Ausgleichselement 122 angeordnet, welches für eine variable Einstellbarkeit der Dichtungskomponente 107 zu einem nicht gezeigten Bodenteil durch das Gummimaterial ermöglicht. Bei dieser Ausführungsform erfolgt jedoch kein Druckausgleich wie bei der obigen Ausführungsform.

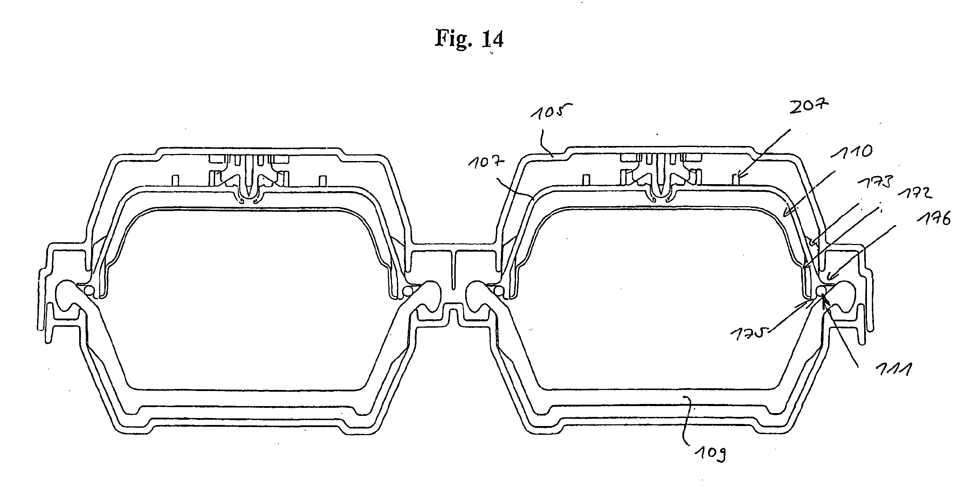

Figur 14 zeigt eine schematische Querschnittsansicht eines Behältnisses mit zwei Essensfächern welche gemäß der Ausführungsform der Figur 1 aufgebaut sind. Im Unterschied zur Ausführungsform von Figur 1 sind die Stapelstege 207 unterschiedlich ausgebildet. Die weiteren Merkmale entsprechen der Ausführungsform von Figur 1, wie durch die identischen Bezugszeichen dargestellt.

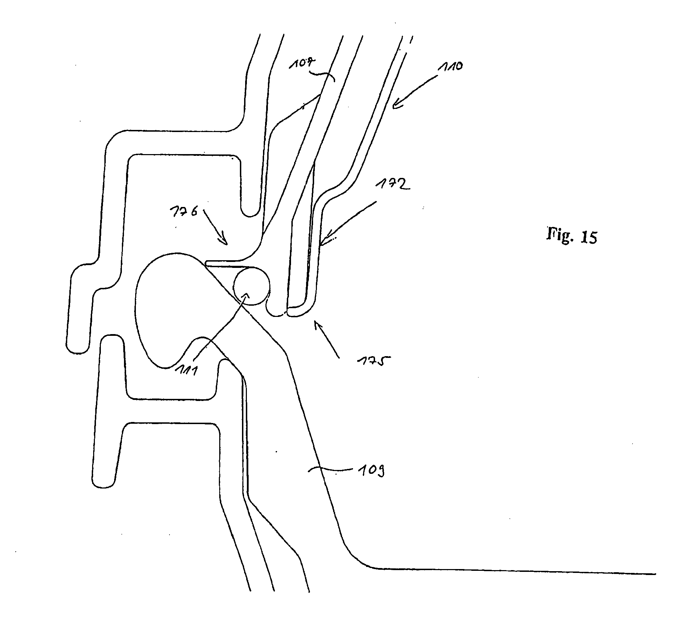

Figur 15 zeigt nun eine vergrößerte Ansicht der Abdichtung zwischen der Dichtungskomponente 107 und der Einzelschale 109, wie bereits bezüglich Figur 1 erläutert.

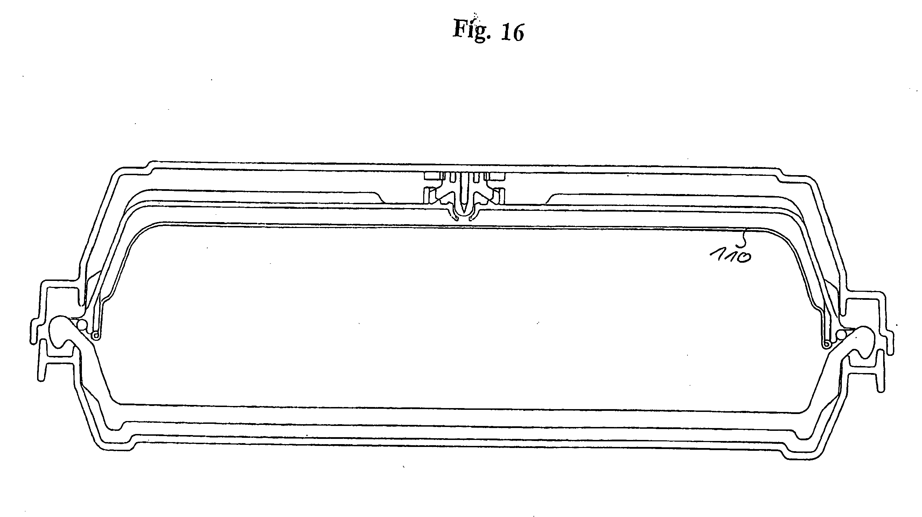

Figur 16 zeigt eine Querschnittsansicht des erfindungsgemäßen Behältnisses gemäß einer weiteren Ausführungsform, wobei die untere Kante der Metallinnenkomponente 110 eingerollt ist und so für eine erhöhte Stabilität sorgt.

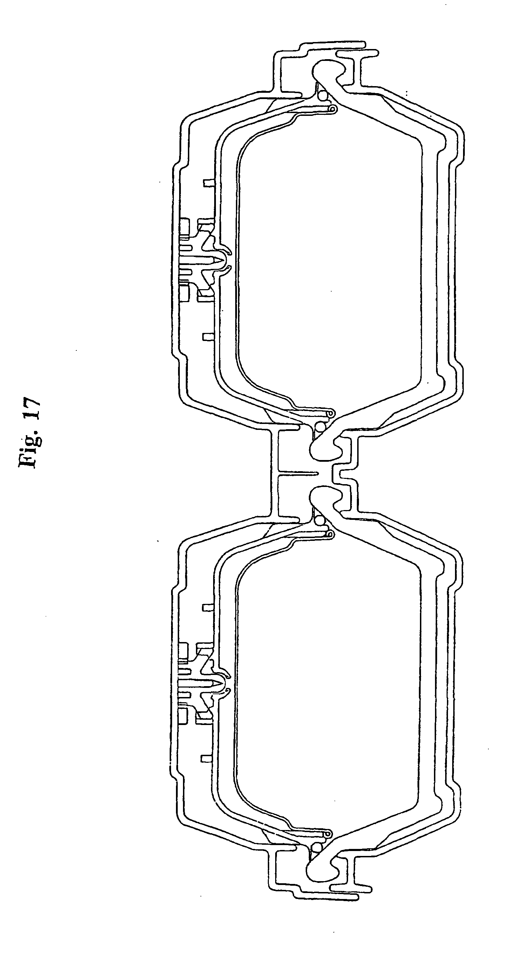

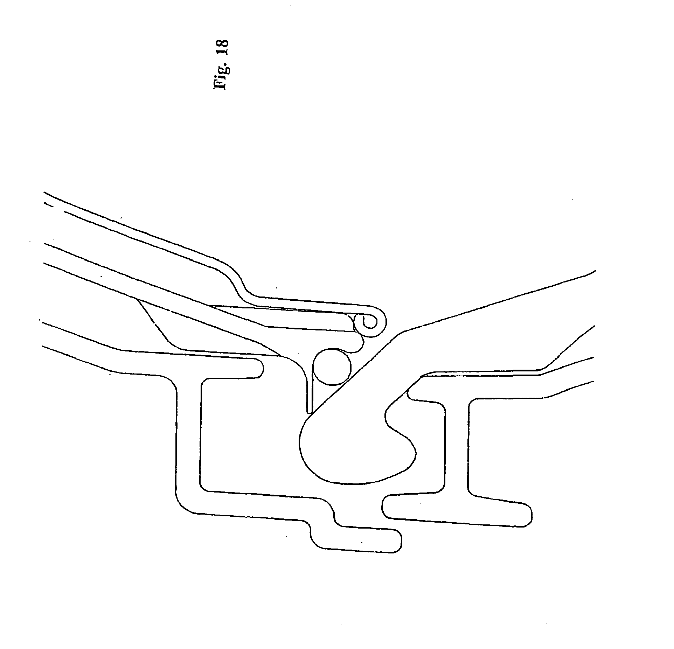

Die Figuren 17 und 18 zeigen jeweils Ansichten mit einer derartig eingerollten Metallinnenkomponente.

Wie aus den Figuren ersichtlich, sind eine Vielzahl von Unterkombinationen der einzelnen Elemente möglich. Insbesondere können die elastischen Elemente aus jeglichem geeigneten Material hergestellt sein.

Durch das erfindungsgemäße Behältnis bzw. Transportsystem ist es möglich, dass einzelne Schalen mit Speisen im gekühlten Zustand bestückt werden, unmittelbar nach der Bestückung mit einem Transportelementdeckel bzw. durch ein Teil der Transporteinrichtung gleichzeitig abgedeckt und abgedichtet werden und zu der Ausgabestelle transportiert werden. Je nach Bedarf werden dann die Transportelemente geöffnet und Einzelschalen entnommen oder komplett auf die für den Verbraucher notwendige Temperatur erhitzt. Dieses auf Grund den anmeldungsgemäßen Behältnis möglichen Verfahren kann als sogenannter "ROPA Mechanismus" bezeichnet werden. Die Transportelemente können darüber hinaus aus Chrom, Nickel, Stahl bestehen.

Es wird somit gemäß den Fig. 1 bis 18 ein Behältnis für Speisen, insbesondere zum Servieren, Aufbewahren und Transportieren von Speisen mit im wesentlichen zwei Behältnisteilen und einer Dichtungskomponente zum Abdichten der beiden Behältnisteile sowie ein Verfahren zum Abdichten von erfindungsgemäßen Behältnissen beschrieben. Dabei wirkt die Dichtungskomponente mit den beiden Behältnisteilen über eine Ausgleichseinrichtung derart zusammen, dass die Position und/oder der Anpressdruck der Dichtungskomponente relativ zu zumindest einem der beiden Behältnisse einstellbar ist, um Undichtigkeiten zwischen diesen Elementen auszugleichen.

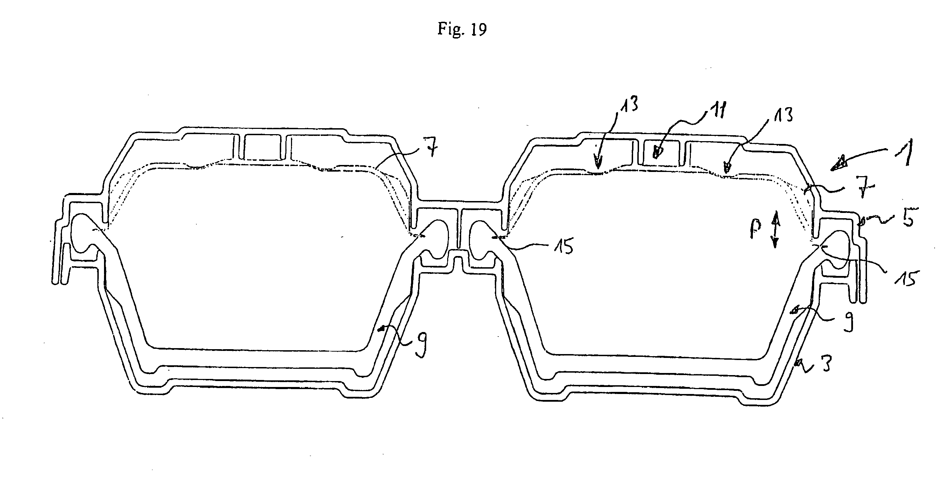

In Fig. 19 ist eine Querschnittsansicht des anmeldungsgemäßen Behältnisses 1 dargestellt, welches ein Bodenteil 3, ein Deckelteil 5, eine Dichtungskomponente 7 und einstellbare Einzelschalen 9 aufweist. Im zusammengefügten Zustand bilden die eingehängten Einzelschalen 9 und das Bodenteil 3, welches auch als Serviereinheit dient, eine Isoliereinheit, da zwischen dem Boden der Einzelschale 9 und dem Boden des Bodenteils 3 ein Zwischenraum entsteht, welcher als Luftisolierung herangezogen werden kann. Die Dichtungskomponente 7 ist über den Befestigungsabschnitt 11 mit dem Deckelteil 5 verbunden. Gemäß dieser Ausführungsform ist der Befestigungsabschnitt, sowohl in der Dichtungskomponente als auch in eine Vertiefung des Deckelteils zentriert positioniert. In dieser Ausführungsform ist unmittelbar benachbart das Materialscharnier 13 vorgesehen, welches ringförmig den Befestigungsabschnitt umläuft. Die Dichtungskomponente 7 weist einen Einfassungsrand auf, welcher als waagrechte Dichtungslippe 15 ausgestaltet ist. Wie in Fig. 1 mit dem Pfeil P dargestellt ist, ermöglicht das Materialscharnier 13 eine vertikale Auf- und Abbewegung der waagrechten Dichtungslippe, so dass die Abdichtungsfunktion je nach herstellungsbedingten Toleranzen des Bodenteils 3 oder der Einzelschale 15 optimal herbeigeführt werden kann. Dies wird insbesondere dann erreicht, wenn ein Spiel zwischen der Dichtungskomponente und dem Deckelteil 5 im Bereich der Einführungsstege 7 vorhanden ist.

Gemäß der Ausführungsform von Fig. 19 wird ein Behältnis bereitgestellt, welches ein Materialscharnier aufweist. Anhand des Materialscharniers kann der Auslenkungswiderstand und somit der Andruck- bzw. Anpressdruck auf das Bodenteil bzw. auf die in dem Bodenteil eingestellten Einzelschalen eingestellt werden. Dies ist insbesondere dann von Vorteil, wenn herstellungsbedingte Toleranzunterschiede sowohl des Bodenteils als auch der Einzelschalen, wie z. B. bei Porzellan, unvermeidbar sind, jedoch eine für den Transport notwendige Dichtigkeit maßgeblich ist. Je nach Auslegung des Materialscharniers ist es ferner möglich, auch Höhenunterschiede auszugleichen. Über die Wahl und Form des Materialscharniers wird somit die Elastizität festgelegt, die das Zusammenführen und die Zuhalteeigenschaft des Behältnisses auf vielfältigste Art und Weise unterstützt.

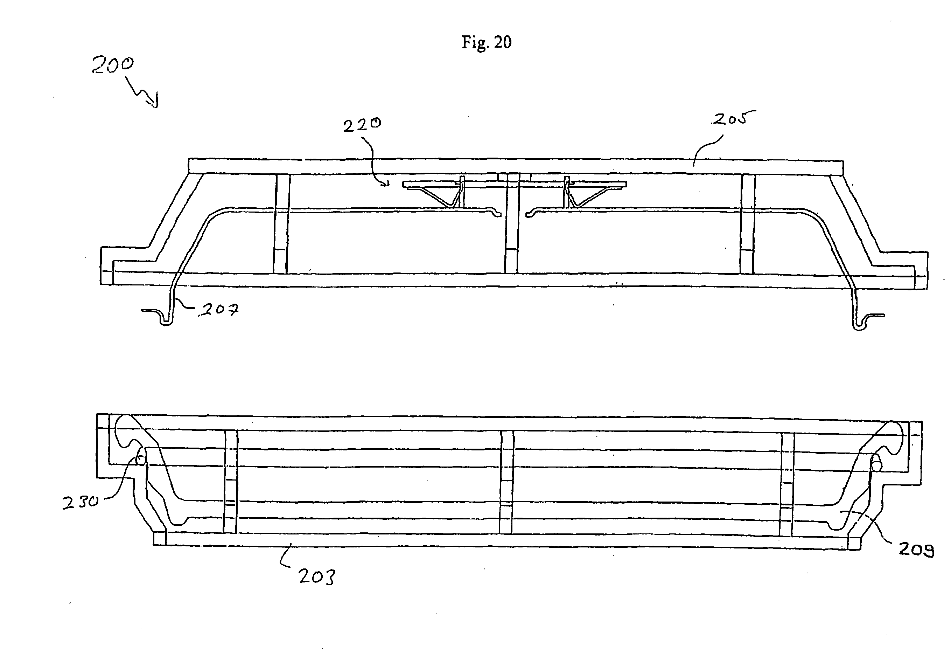

Im Folgenden wird nun eine weitere Ausführungsform der Erfindung gemäß den Figuren 20 bis 22 erläutert.

So zeigt Figur 20 eine Querschnittsansicht eines erfindungsgemäßen Behältnisses 200, welches ein Bodenteil 203, ein Deckelteil 205, eine Dichtungskomponente 207, eine einstellbare Einzelschale 209, welche insbesondere aus Porzellan aufgebaut ist, und eine Ausgleichseinrichtung 220. Ferner ist zwischen dem Bodenteil 203 und der Schale 209 ein Pufferelement 230 in Form eines O-Ringes bzw. eines mit Gummi oder Kunststoff versehenen Drahtes, so dass das aus Metall bestehende Bodenteil 203 keine Klappergeräusche mit der darin eingehängten Schale 209 erzeugen kann und es beim Einhängen der Schale nicht zu Beschädigungen kommt.. In Figur 1 ist das Behältnis nun geöffnet, so dass ein für das cook and chill Verfahren geeignetes Essen in die Schale bzw. die Schalen 209 eingebracht werden kann.

Das Deckelteil 205 ist aus einer metallischen Gitterstruktur aufgebaut, insbesondere aus CNS gefertigten Rundstählen, wobei das Deckelteil Nestaufnahmen für zumindest eine Ausgleichseinrichtung 220 aufweist, um für eine variable und flexible Aufhängung zwischen der Dichtungskomponente 207 und dem Deckelteil 205 zu sorgen, wie im Weiteren näher erläutert werden wird.

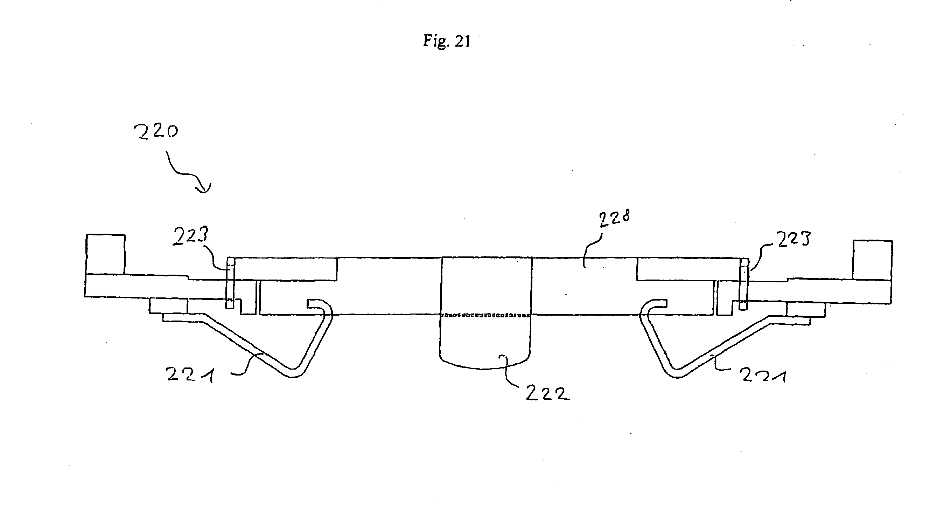

Figur 21 zeigt nun die Ausgleichseinrichtung 220 im Querschnitt, welche Blattfedern 221 aufweist, um die Dichtungskomponente 207 lösbar und beweglich aufzunehmen, so dass die Position und/oder der Anpressdruck der Dichtungskomponente relativ zu der Schale einstellbar ist, um mögliche Toleranzunterschiede auszugleichen, so dass die Speiseunterbringungskammer zwischen der Schale und der Dichtungskomponente sicher abgedichtet werden kann. Des Weiteren weist die Ausgleichseinrichtung 220 ein Verschließelement 222 auf, um eine Druckausgleichsöffnung der Dichtungskomponente 207 abzudichten, wie im Weiteren näher erläutert wird. Dieses Verschließelement 222 ist mittels Federringen 223 beweglich gelagert, um die Druckausgleichsöffnung der Dichtungskomponente abzudichten, durch welche überschüssige Luft aus der Speiseunterbringungskammer entweichen kann, wenn die Dichtungskomponente an die Schale gepresst wird.

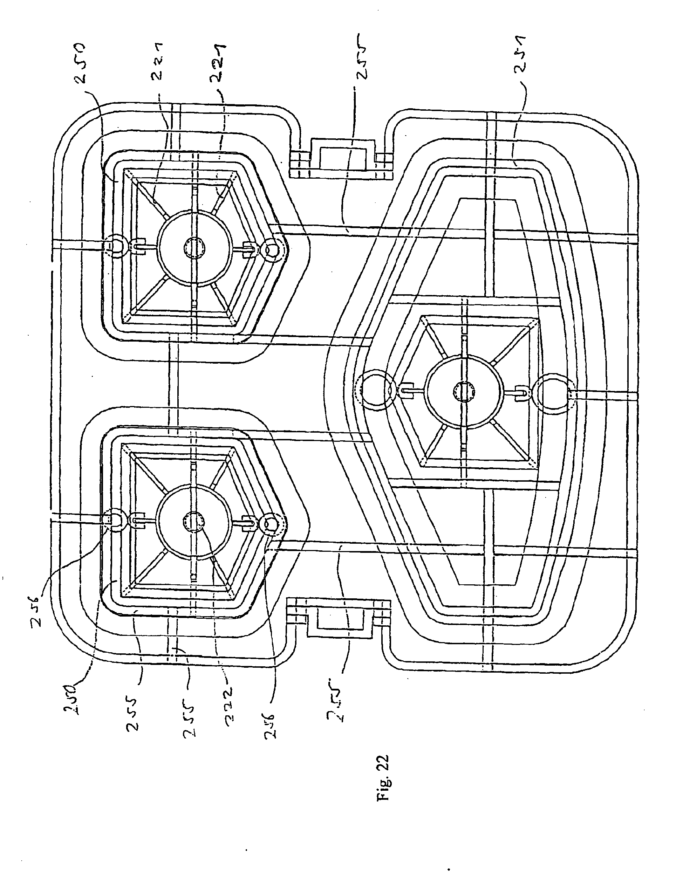

Figur 22 zeigt eine schematische Draufsicht auf das erfindungsgemäße Behältnis, wobei die Gitterstruktur des Deckelteils 205 durch die einzelnen Stäbe 255 erkennbar ist. Das erfindungsgemäße Behältnis weist in dieser Ausführungsform beispielhaft drei Schalen auf, nämlich zwei kleine Schalen 250 und eine große Schale 251. Diese Schalen sind jeweils durch eine Dichtungskomponente abgedeckt, die mittels der Blattfedern 221 variabel an dem Deckelteil gelagert sind. Die Ausgleichseinrichtung, welche die Blattfedern 221 umfasst, ist durch Verbindungsringe 256 mit der Nestaufnahme bzw. dem Deckelteil verbunden.

Im Zentrum der Aufnahmenester 250 sind die Verschließelemente 222 der Ausgleichseinrichtungen 220 dargestellt, welche die Druckausgleichsöffnung der Dichtungskomponente 207 abdichten können.

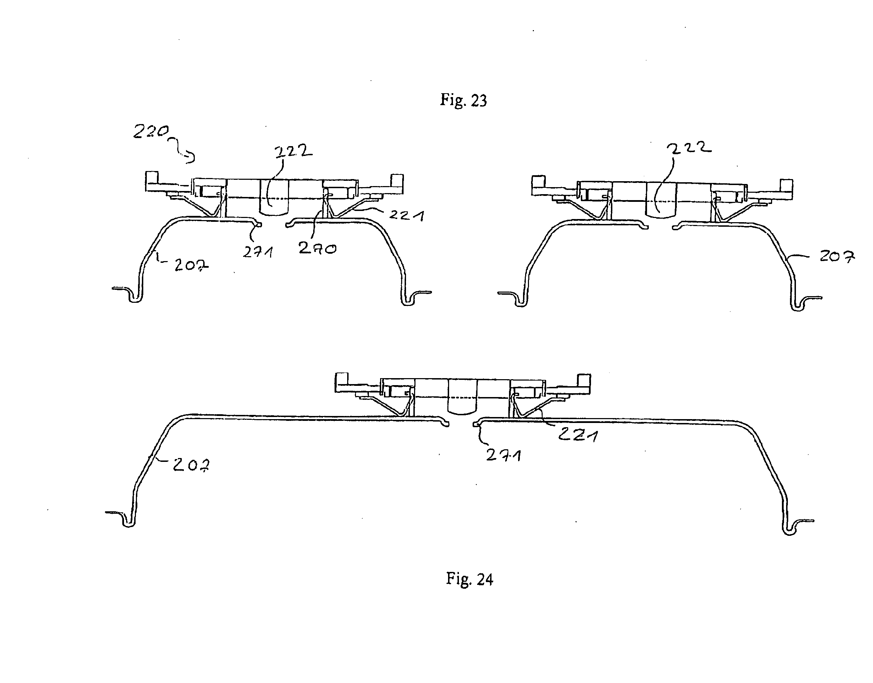

In Figur 23 ist nun ein Querschnitt durch das Deckelteil des erfindungsgemäßen Behältnisses von Figur 22 entlang der beiden kleinen Dichtungskomponenten 207 lediglich mit Bezug auf die Ausgleichseinrichtung 220 und die Dichtungskomponente 207 gezeigt. Die Dichtungskomponente 207 wird mittels der Blattfedern 221 flexibel aufgehängt, wobei die Dichtungskomponente 207 eine im Wesentlichen runde sich nach oben erstreckende Federaufnahmeeinrichtung 270 aufweist, an welche sich von außen die Schenkel der Blattfedern 221 lösbar anpassen. Dies geschieht lediglich durch ein Aufstecken der Dichtungskomponente 207 auf die Blattfedern 221 von unten.

Analog hierzu ist die Verbindung der Dichtungskomponente 207 für die in Figur 24 gezeigte große Schale mittels der Blattfedern 221 vorgesehen. Wie in den Figuren 23 und 24 gezeigt, ist das Verschließelement 222 noch nicht mit der Druckausgleichsöffnung in Kontakt, so dass in diesem Zustand überschüssige Luft aus der Speiseunterbringungskammer entweichen kann.

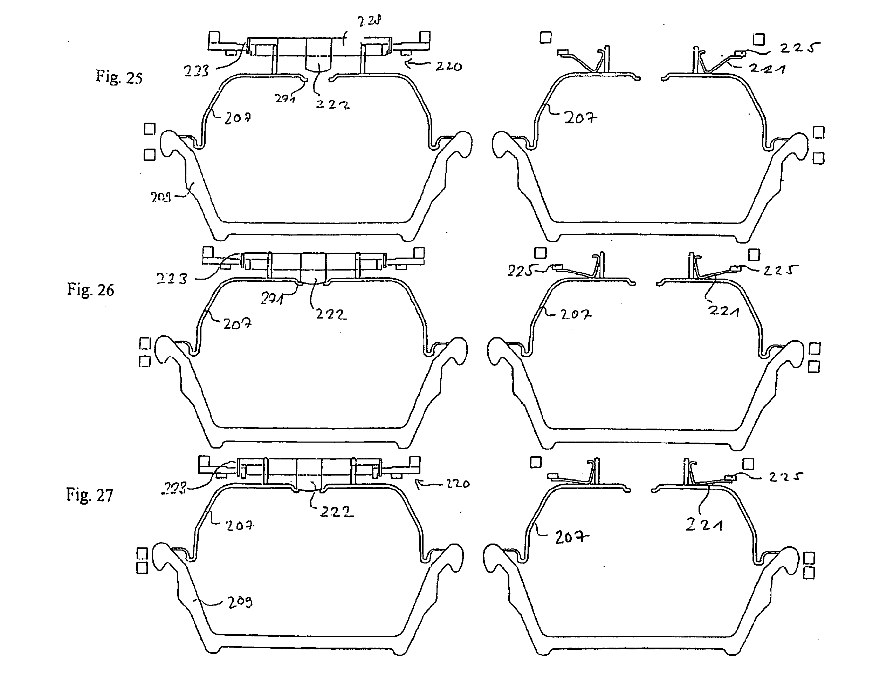

In den Figuren 25 bis 27 sind Querschnitte gezeigt, die den oberen Abdichtmechanismus und die zur Schale variable Aufhängung der Dichtungskomponente des erfindungsgemäßen Behältnisses näher erläutern. Figur 25 zeigt in der linken Ansicht die Schale 209 mit der Dichtungskomponente 207 und dem Verschließelement 222, wobei jedoch die Ausgleichseinrichtung 220 nicht dargestellt ist. Um die Funktion der Blattfedern genauer darzustellen und besser erläutern zu können, sind diese in der rechten Ansicht von Figur 25 dargestellt. Diese schematische Aufteilung der Blattfedern und der Ausgleichseinrichtung analog zu Figur 25 ist auch in den Figuren 26 und 27 dargestellt.

Figur 25 zeigt den geöffneten Zustand der Druckausgleichsöffnung 271, da das Verschließelement 222 die Druckausgleichsöffnung 271 nicht abdeckt. In diesem Zustand sind die Blattfedern 221 in horizontaler Richtung nicht durch eine Verschließkraft vorgespannt, wie in der rechten Ansicht von Figur 25 dargestellt.

Figur 26 zeigt nun den Zustand, in welchem eine Verschließkraft entweder von oben oder von unten zwischen dem Deckelteil bzw. der Ausgleichseinrichtung 220 und der Dichtungskomponente 207 aufgebracht ist. Beispielsweise wird hierbei ein Verfahrweg von 3 mm überwunden, so dass das Verschließelement 222 an der Druckausgleichsöffnung 271 der Dichtungskomponente 207 anliegt. Wie aus der rechten Ansicht von Figur 26 zu sehen, befinden sich die Blattfedern 221 nun in einem vorgespannten bzw. gespannten Zustand, da diese aufgrund einer äußeren Verschlusskraft nach oben gedrückt worden sind, so dass die Aufnahmen 225 der Blattfedern 221 einen näheren Abstand zur Dichtungskomponente wie bei Figur 25 aufweisen. Die Federringe 223 sind jedoch in Figur 25 und 26 noch im entspannten Zustand, da das Verschließelement 222 lediglich an der Druckausgleichsöffnung 271 anliegt und noch keine Abdichtkraft zwischen diesen beiden Elementen in den Zustand in Figur 26 aufgebracht ist.

In Figur 27 ist nun eine gegenüber Figur 26 höhere Verschließkraft auf die Ausgleichseinrichtung 220 bzw. die Dichtungskomponente 207 von oben und/oder unten aufgebracht worden, so dass nun ein Anpressdruck zwischen dem Verschließelement 222 und der Druckausgleichsöffnung 271 der Dichtungskomponente 207 vorliegt. Dieser Anpressdruck wird beispielsweise durch einen Verfahrweg des Verschließens von einem weiteren mm gegenüber Figur 26 aufgebracht, so dass die Ausgleichseinrichtung, insbesondere die Aufnahmen der Blattfedern 225 um einen weiteren mm näher an die Dichtungskomponente 207 im Vergleich zu Figur 26 heranrücken. In diesem in Figur 27 nun dargestellten verschlossenen und abgedichteten Zustand werden die Federringe 223 durch die Anpresskraft des Verschließelements 222 entgegen ihrer Federwirkung in einen angespannten Zustand gebracht. Wie in der linken Ansicht von Figur 27 gezeigt, sind die Federringe 223 nun in horizontaler Richtung entgegen ihrer Federkraft ausgeweitet, wie später genauer beschrieben wird. In der rechten Ansicht von Figur 27 sieht man den weiteren Verfahrweg zwischen der Dichtungskomponente und der Ausgleichseinrichtung bzw. den Blattfedern 221, die nun gegenüber Figur 26 in horizontaler Richtung noch weiter vorgespannt sind. Das gemäß den Figuren 25 bis 27 beschriebene Verschließen und Abdichten der Speiseunterbringungskammer kann dadurch bewerkstelligt werden, dass die Ausgleichseinrichtung 220 fest mit dem nicht gezeigten Deckelteil 205 verbunden ist, so dass beim Verriegeln des Deckelteils mit dem Bodenteil das erfindungsgemäße Behältnis in vorteilhafter Art und Weise abgedichtet werden kann, ohne dass weitere Maßnahmen zur Abdichtung der Speiseunterbringungskammer bzw. der einzelnen Speiseunterbringungskammern der in diesem Beispiel dargestellten drei Schalen erforderlich sind.

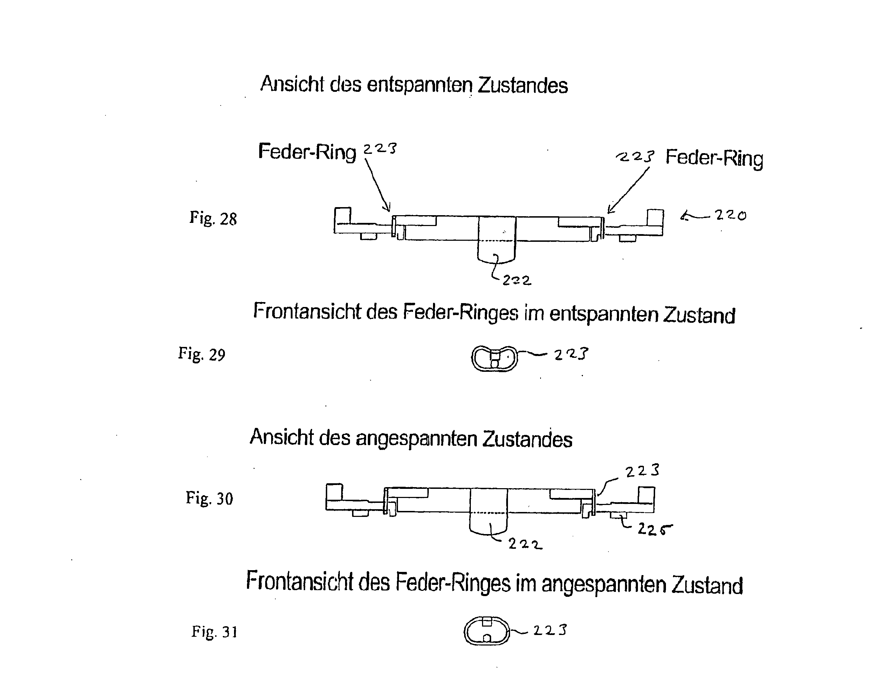

In den Figuren 28 bis 31 sind nun zur näheren Erläuterung des Abdichtens der Speiseunterbringungskammer zwischen dem Verschließelement 222 und der Dichtungskomponente 207 der entspannte Zustand des Federrings 223 wie in dem Zustand von Figur 26 und der angespannte Zustand des Federrings 223 wie in dem Zustand von Figur 27 näher erläutert. Figur 28 zeigt die Ausgleichseinrichtung 220 ohne Blattfedern, wobei diese Ansicht dem Zustand von Figur 25 und 26 bezüglich der Federringe 223 entspricht, in welchem sich die Federringe 223 im entspannten Zustand befinden. Figur 29 zeigt die Frontansicht des Federrings 223, wobei das eckige Element des Federringes 223 am runden Element der Federringaufnahme anliegt.

Die Figuren 30 und 31 zeigen den Federring nun im angespannten Zustand, welcher dem Zustand von Figur 8 entspricht. Hierbei sind die Federringe 223 durch die Anpresskraft des Verschließelements 222 an der Druckausgleichsöffnung 271 der Dichtungskomponente 207 entgegen ihrer Federkraft nach oben ausgeweitet, so dass sich der horizontale Abstand zwischen dem Verschließelement 222 und der Blattfederaufnahme 225 bzw. des Deckelteils verringert. In Figur 12 ist nun dieser angespannte Zustand des Federrings 223 dargestellt, in welchem dieser in horizontaler Richtung ausgeweitet ist, wobei als Folge davon ein Abstand zwischen dem runden Element der Federringaufnahme und dem viereckigen Element des Federrings 223 entsteht.

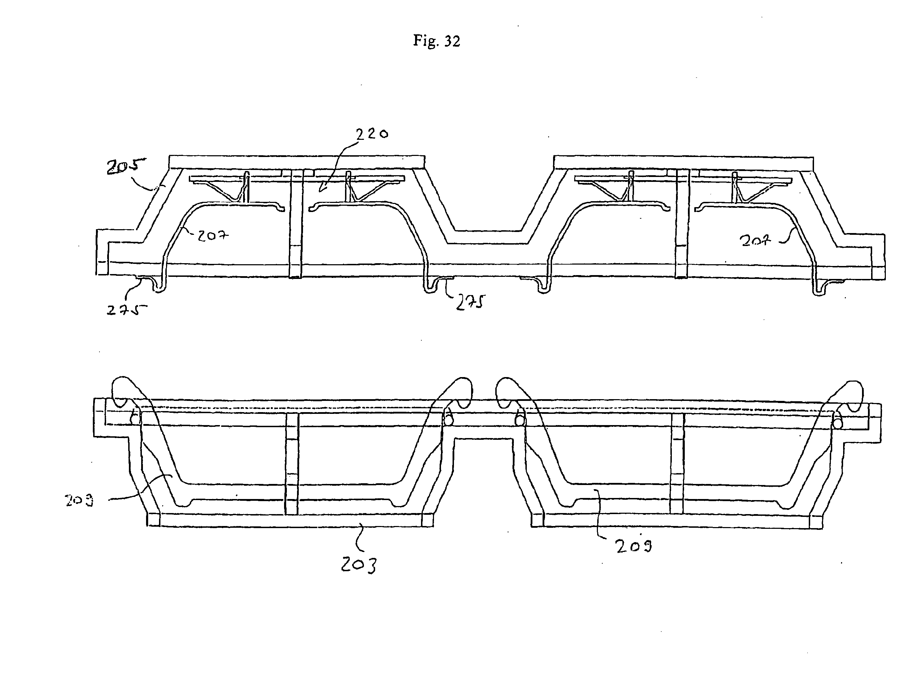

Figur 32 zeigt nun den Querschnitt durch ein erfindungsgemäßes Behältnis durch beispielsweise zwei kleine Schalen hindurch. Aus dieser Ansicht kann man entnehmen, dass das Abdichten von mehreren Schalen und Dichtungskomponenten durch das Verschließen von jeweils nur einem Bodenteil 203 und einem Deckelteil 205 möglich wird. Ebenso werden in diesem Beispiel zwei Schalen durch das Öffnen von nur einem Deckelteil 205 und einem Bodenteil 203 geöffnet. Wenn nun nach der Benutzung des erfindungsgemäßen Behältnisses für Speisen ein Spülvorgang vorgenommen werden soll, so muss das Deckelteil von dem Bodenteil geöffnet werden bzw. von diesem gegebenenfalls abgenommen werden und daraufhin lediglich in eine Spülvorrichtung eingestellt werden, um die Essensreste vollständig zu entfernen. Dies wird insbesondere dadurch möglich, dass das Deckelteil eine Gitterstruktur aufweist, welche es ermöglicht, dass die Dichtungskomponente 207 und das Deckelteil 205 in verbundenem Zustand mit Hilfe der Ausgleichseinrichtung 220 abgespült werden kann. Wenn das Deckelteil 205 vollständig aus einem Metalldrahtaufbau hergestellt ist, insbesondere CNS gefertigten Rundstählen, dann kann das Deckelteil mitsamt Ausgleichseinrichtung und Verschließelement und die Außenseite der Dichtungskomponente von der einen Seite und die Innenseite der Dichtungskomponente von der anderen Seite abgespült werden. Analog hierzu kann das Bodenteil 203 und die eingestellten Schalen 209 von beiden Seiten ohne Demontage abgespült werden, wobei beispielsweise bei einer Scharnierverbindung zwischen dem Deckelteil und dem Bodenteil für den Spülvorgang das Deckelteil von dem Bodenteil lediglich vollständig aufgeklappt werden muss und in eine Spülvorrichtung eingestellt werden kann, um dort von beiden Seiten vollständig gereinigt zu werden.

Ansonsten kann das Bodenteil mit darin eingestellten Schalen mittels eines Spülrosts abgedeckt werden, um ein Herausfallen der Schalen beim Spülen zu vermeiden.

Aufgrund der Gitterstruktur ist es insbesondere bezüglich der funktionalen Verbindung zwischen Dichtungskomponente und Deckelteil mittels der Ausgleichseinrichtung gewährleistet, dass eine Demontage des Deckelteils von der Dichtungskomponente nicht erforderlich ist, um diese verbundenen Teile vollständig von Verunreinigungen durch den Spülvorgang zu entfernen.

Wie in Figur 32 dargestellt, weist die Dichtungskomponente 207 eine umlaufende Dichtungslippe 275 auf, die sich zum Abdichten an die Schale 209 anschmiegt. An dem Schenkel der Dichtungslippe 275 schließt sich ein im Wesentlichen u-förmiger Abschnitt der Dichtungskomponente an, wobei die Dichtungslippe 275 und insbesondere der erste Schenkel der U-Form eine sehr flexible Anpassung der Dichtungskomponente an die Schale ermöglichen.

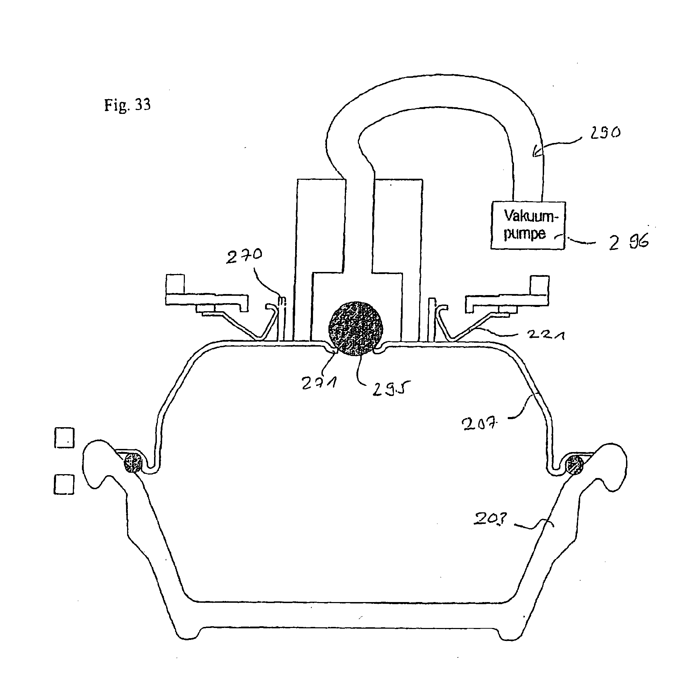

Als Nächstes wird nun gemäß den Figuren 33 bis 35 ein Verfahren zur Erzeugung eines Vakuums in dem oben beschriebenen erfindungsgemäßen Behältnis erläutert. Figur 33 zeigt das erfindungsgemäße Behältnis, wobei zwischen der Schale 209 und der Dichtungskomponente 207 zur Abdichtung zusätzlich ein umlaufendes ringförmiges Abdichtungselement insbesondere in Form eines O-Rings vorgesehen ist. In Figur 33 ist zwar das Bodenteil und Deckelteil nicht dargestellt, jedoch kann die Saugvorrichtung 290 an die Dichtungskomponente 207 direkt angelegt werden, ohne dass das Deckelteil entfernt werden muss. Dies wird insbesondere dadurch ermöglicht, dass innerhalb der ringförmigen Aufnahme 270 der Dichtungskomponente 207 kein fest angebrachtes Element vorgesehen ist, da das verschiebbare Verschließelement 222 mit dessen länglicher Aufnahme 228 ohne weiteres entfernt werden kann. Anstelle davon wird ein elastisches Abdichtelement, insbesondere eine Abdichtkugel 295 anstelle des Verschließelements 222 an die Druckausgleichsöffnung 271 der Dichtungskomponente 207 angelegt. Wenn nun die Saugvorrichtung 290 an der Dichtungskomponente 207 angelegt ist und die Vakuumpumpe 296 betätigt wird, so löst sich die Abdichtkugel 295 von der Druckausgleichsöffnung 271 und die Luft kann aus der Speiseunterbringungskammer zur Erzeugung eines Vakuums abgesaugt werden, um die darin untergebrachten Speisen länger haltbar zu machen. Wenn nun der Unterdruck um die Drucksausgleichsöffnung aufgehoben wird, d.h., wenn die Vakuumpumpe abgeschaltet wird und die Saugvorrichtung weggenommen wird, so legt sich die Abdichtkugel 295 aufgrund des Vakuums in der Speiseunterbringungskammer wieder an der Druckausgleichsöffnung 271 an und wird durch den Unterdruck in der Speiseunterbringungskammer dort festgehalten.

Insbesondere für das Vakuumieren kann die Dichtungskomponente 207 aus Metall bzw. Blech hergestellt sein, wobei zur Abdichtung gegenüber der Schale eine Silikonlippe angeformt ist. Dadurch erhält man ein einstückiges Element für die Abdichtung, sodass beim Spülen dieses Element nicht demontiert werden muss. Des Weiteren kann bei einer Dichtungskomponente aus Metall eine federnde Einrichtung am Rand zur Abdichtung gegenüber der Schale vorgesehen sein, um Fertigungstoleranzen der Schale auszugleichen.

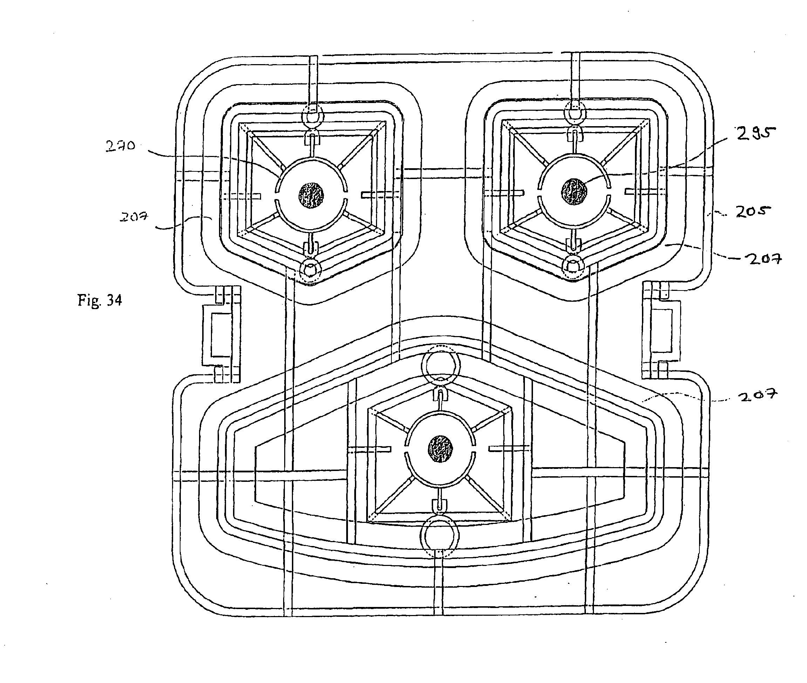

Wie in der Figur 34 zu sehen, ist es aufgrund der Gitterstruktur des Deckelteils möglich, die Saugvorrichtung an die Druckausgleichsöffnung anzulegen, wobei jedoch das Behältnis vollständig montiert ist und beispielsweise das Deckelteil 205, die Ausgleichseinrichtungen 220 und entsprechende Dichtungskomponenten 207, die eingestellten Schalen und das Bodenteil aufweist. Ferner können das Deckelteil und das Bodenteil des erfindungsgemäßen Behältnisses von Figur 34 bereits vor dem Vakuumieren mittels der Saugvorrichtung mit Hilfe eines Verriegelungsmechanismus verschlossen bzw. abgedichtet sein.

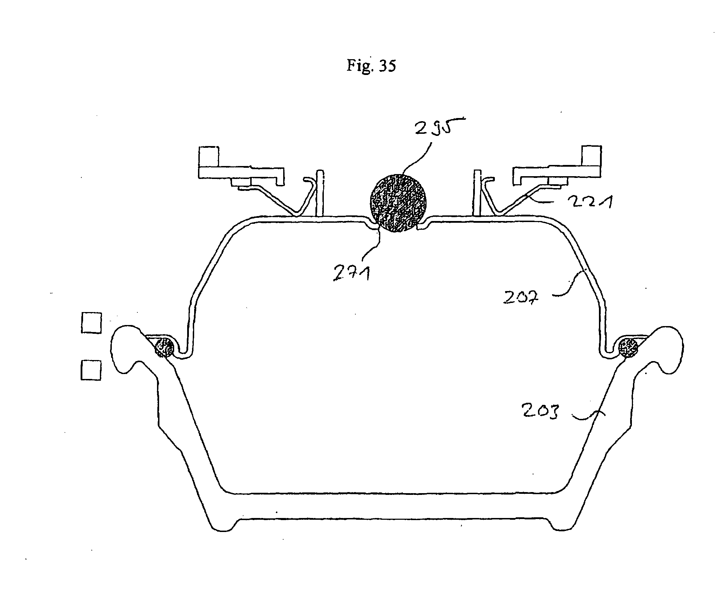

Figur 35 zeigt zum einen den Zustand vor dem Vakuumieren und insbesondere zum anderen den Zustand nach dem Vakuumieren, wobei die Abdichtkugel 295 durch den Unterdruck in der Speiseunterbringungskammer an der Druckausgleichsöffnung 271 festgehalten wird. Wie in dieser Figur ersichtlich, ist die Druckausgleichsöffnung 271 mit einer Vertiefung in der Druckausgleichsöffnung ausgebildet, so dass die Abdichtkugel 295 ohne weiteres in die Druckausgleichsöffnung 271 zentriert angelagert werden kann.

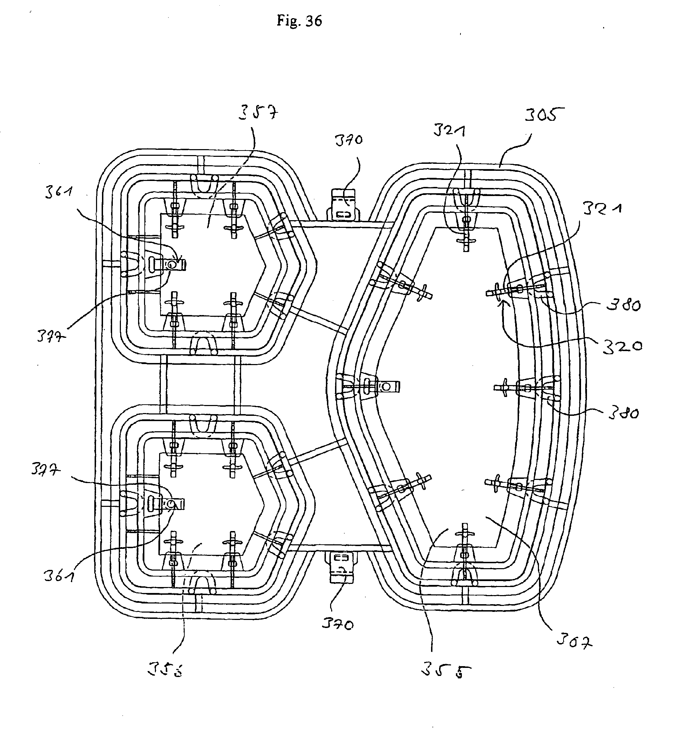

Die Figuren 36 bis 56 zeigen ein erfindungsgemäßes Behältnis in Form einer Einzelportionsschale, in der ein Essen mit einer Hauptspeise und zwei Beilagen aufbewahrt und serviert werden kann.

Figur 36 zeigt eine schematische Draufsicht auf ein Deckelteil 305 eines erfindungsgemäßen Behältnisses, wobei das Deckelteil 305 drei Nester 355, 356, 357 aufweist, in welche drei Dichtungskomponenten 307, nämlich eine große und zwei kleine, eingebracht sind, die mittels einer Vielzahl von Blattfedern oder Federdrähten bzw. Drahtfedern 321 variabel am Deckelteil 305 gelagert werden. Die Federn 321 bilden somit einen Hauptbestandteil der Ausgleichseinrichtung 320. Neben den Blattfedern 321 und deren Halterungen zeigt diese Figur auch noch ein Verschließelement 361 pro Nest, welches eine Druckausgleichsöffnung 377 im geschlossenen Zustand abdichten soll. Ebenfalls sind rechts und links je ein Schnappverschluss 370 erkennbar und vorne und hinten je ein Schutzbügel, die verhindern sollen, dass die Dichtungskomponenten 307 durch unsachgemäße Behandlung beschädigt werden. Die Nester weisen drei Ebenen auf, die über v-förmige Verbindungsstücke 380 miteinander verbunden sind. Diese Verbindungsstücke dienen in Wechselwirkung mit den Arretierflügeln der Dichtungskomponente und der Formgebung der Nester als Einführhilfe und Arretierung. Die Federaufnahmen an der Oberseite der Dichtungskomponenten weisen im mittleren Bereich nach außen hin eine Verdickung auf, die eine Fehlpositionierung der Federn unmöglich macht.

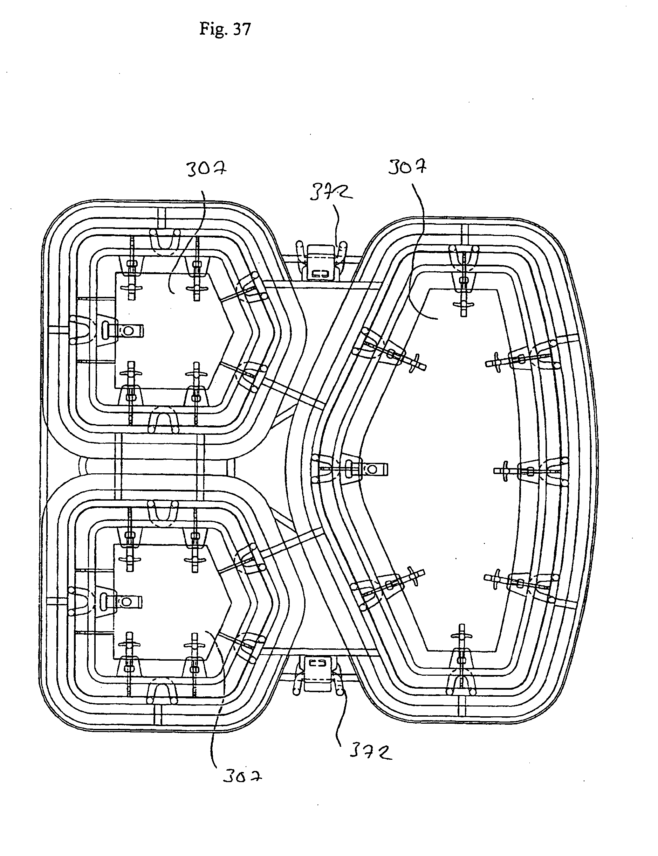

Figur 37 ist eine schematische Draufsicht auf ein erfindungsgemäßes Behältnis, wobei hier die drei eingebrachten und variabel gelagerten Dichtungskomponenten je eine Schale, nämlich zwei kleine und eine große, abdecken und -dichten. Entsprechende Einführbügel 372 sorgen dafür, dass die beiden Schnappverschlüsse immer an die richtige Position gesetzt werden müssen, bevor ein Verschließen möglich wird.

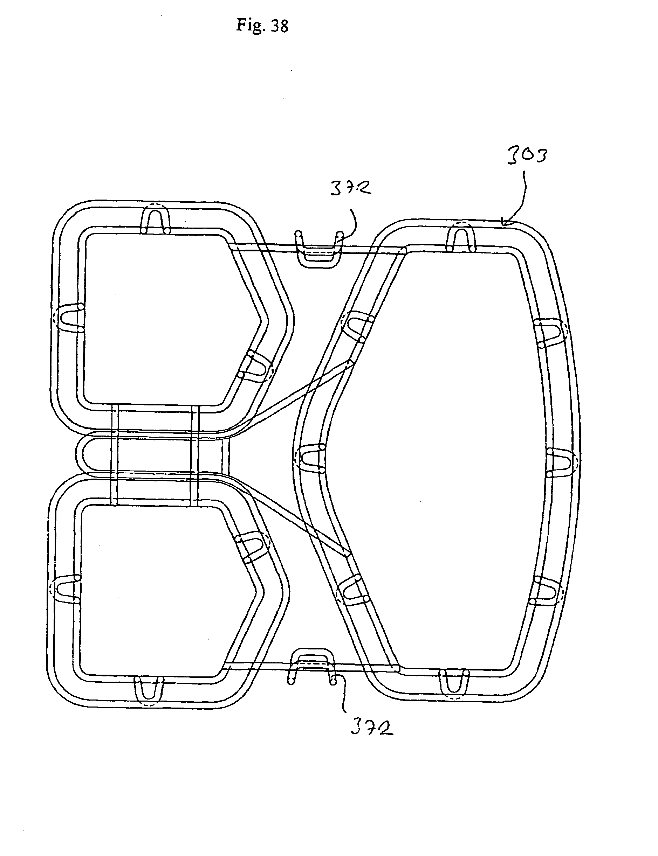

Figur 38 stellt eine Draufsicht auf ein Bodenteil 303 des Behältnisses dar. Dieses Bodenteil 303 weist zwei Ebenen auf, wobei diese Ebenen ebenfalls durch v-förmige Verbindungsstücke miteinander verbunden sind. In die obere Ebene wird die Schale eingehängt und die untere Ebene ist die Auflagefläche des Behältnisses. Die Bereiche, in welche die Schalen eingehängt werden, sind über Streben miteinander verbunden, was für eine besonders vorteilhafte Statik und Biegefestigkeit sorgt. Die Einführbügel 372 für die Schnappverschlüsse des Deckelteils sind geschlossene Formen, die so gebogen werden, dass der untere Teil des Bügel etwas weiter nach hinten geht, um das Einschnappen des Verschlusses nicht zu gefährden. Die Breite dieser Einführbügel 372 wurde so gewählt, dass der Schnappverschluss bei eingehängten Menüschalen nicht rechts oder links daran vorbei kann.

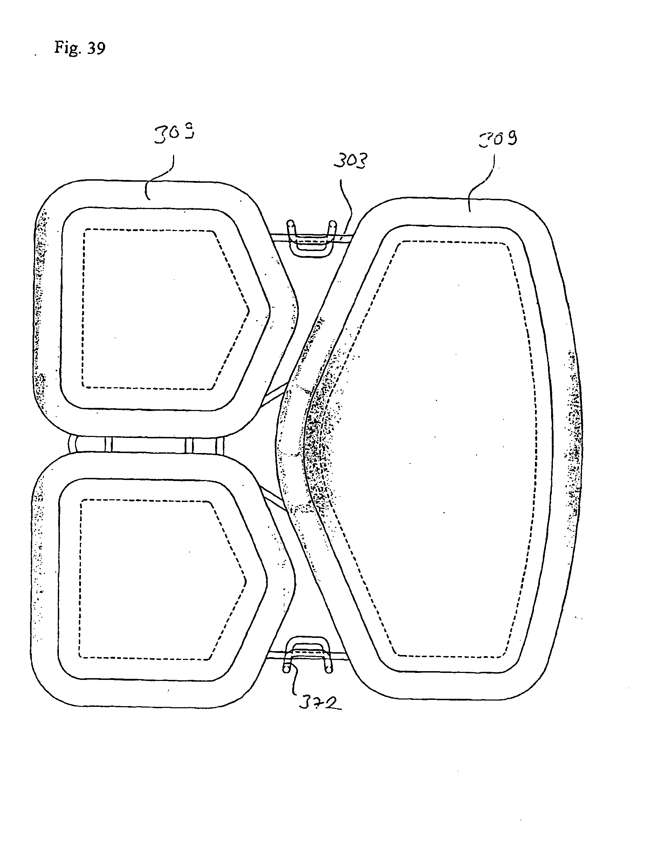

Figur 39 zeigt eine Ansicht von oben auf ein Bodenteils mit eingehängten Menüschalen und den Einführbügeln 372 für die Schnappverschlüsse eines Deckelteils.

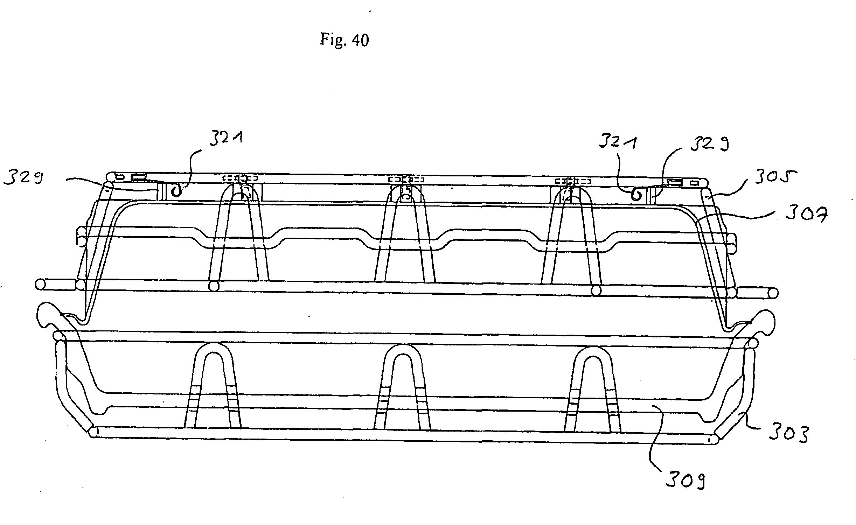

Die Querschnittsansicht des erfindungsgemäßen Behältnisses in Figur 40 verdeutlicht nun einige Vorgänge. Das Behältnis befindet sich im geschlossenen Zustand, d.h. der Schnappverschluss des Deckelteiles wurde über die Verschlussaufnahme im Bodenteil gedrückt, bis dieser schließlich einschnappte, und die Blattfedern 321 werden von den Federaufnahmen an der Oberseite der Dichtungskomponente 307 nach oben gedrückt, so dass der nach außen gehende federnde Bauch der Feder 321 keinen Kontakt mehr mit der Innenseite der Federaufnahme 329 hat. Der Federdruck, der nun von oben auf die Federaufnahmen 329 der Dichtungskomponente 307 wirkt, sorgt für ein dreidimensionales Ausrichten der Dichtungskomponente 307 in Bezug auf die abzudeckende Schale 309. Ebenfalls erkennbar sind die drei Ebenen des Deckelnestes und die zwei Ebenen des Bodenteils 303. Die untere und die mittlere Ebene des Deckelteils 305 dienen zur Einführung und Arretierung der Dichtungskomponenten 307, da die Arretierflügel an beiden Ebenen vorbei müssen um variabel mit den Blattfedern 321 aufgehängt zu werden. Die v-förmigen Verbindungsstücke im Bodenteil haben eine andere Form als die v-förmigen Verbindungsstücke im Deckelteil 305. Das ist darauf zurückzuführen, dass die Verbindungsstücke im Bodenteil 303 in Wechselwirkung mit der Stapelstufe der Menüschalen gleichzeitig als Halterung für die eingehängten Menüschalen dienen, damit beim Verzehr des in den Schalen 309 befindlichen Menüs kein Schwanken oder Verschieben stattfinden kann.

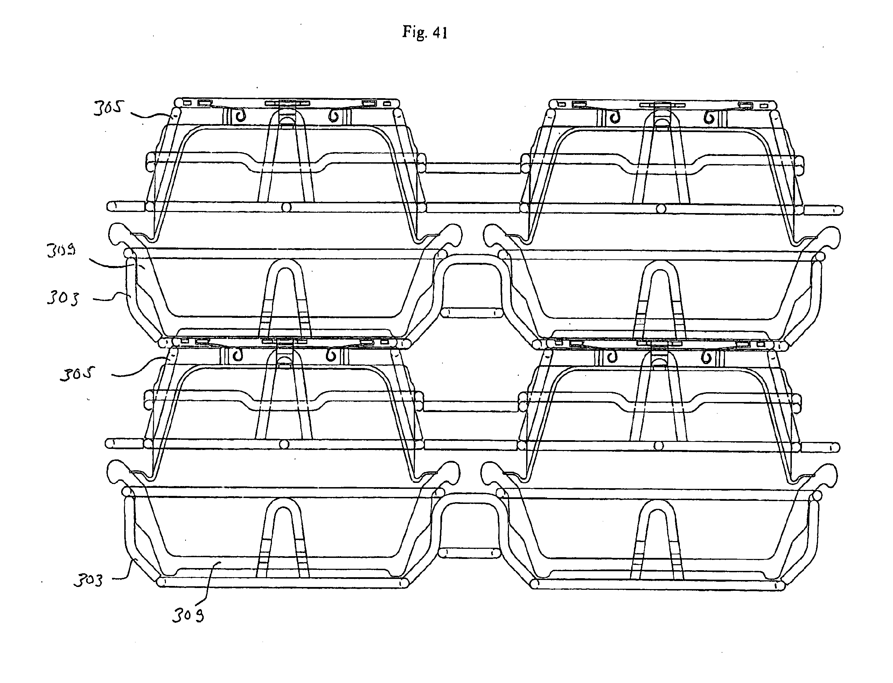

Figur 41 zeigt eine Querschnittsansicht des erfindungsgemäßen Behältnisses entlang der kleinen Schalen im geschlossenen, gestapelten Zustand. Hier stülpt sich die untere Ebene des oberen Bodenteiles 303 über die obere Ebene des unteren Deckelteiles 305 und zwar soweit, bis der Fuß der Menüschale auf der oberen Ebene des unteren Deckelteils zum Stehen kommt. Dadurch dass sich hier zwei Ebenen ineinander verschachteln, ist ein Verrutschen oder gar schiefes Stapeln ausgeschlossen.

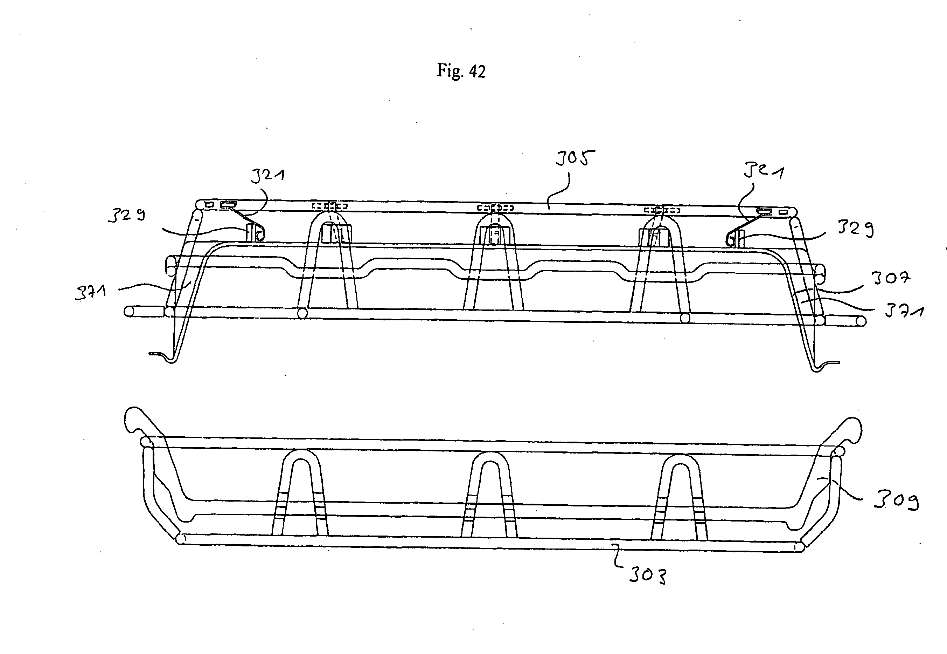

In Figur 42 ist die gleiche Querschnittsansicht wie in Figur 40 zu sehen, allerdings diesmal im geöffneten Zustand. Die Dichtungskomponente 307 ist in die Blattfedern 321 eingehängt und befindet sich deshalb ca. 5 mm weiter unten. Der nach außen gehende federnde Bauch der Feder 321 hat Kontakt mit der Innenseite der Federaufnahme 329 und wird durch die Gewichtskraft der Dichtungskomponente 307 etwas nach innen gedrückt, wodurch zusätzlich zu der nach unten wirkenden Federkraft, die die Feder 321 in ihre Ausgangsposition bringen will, eine zusätzliche Federkraft entsteht, die die Dichtungskomponente 307 an dieser Position hält. Die Arretierflügel 371, welche an der Dichtungskomponente angebracht sind, befinden sich in der arretierten Position, das bedeutet, es kann kein schiefes Aufliegen der Dichtungskomponente 307 auf die abzudeckende Schale geben.

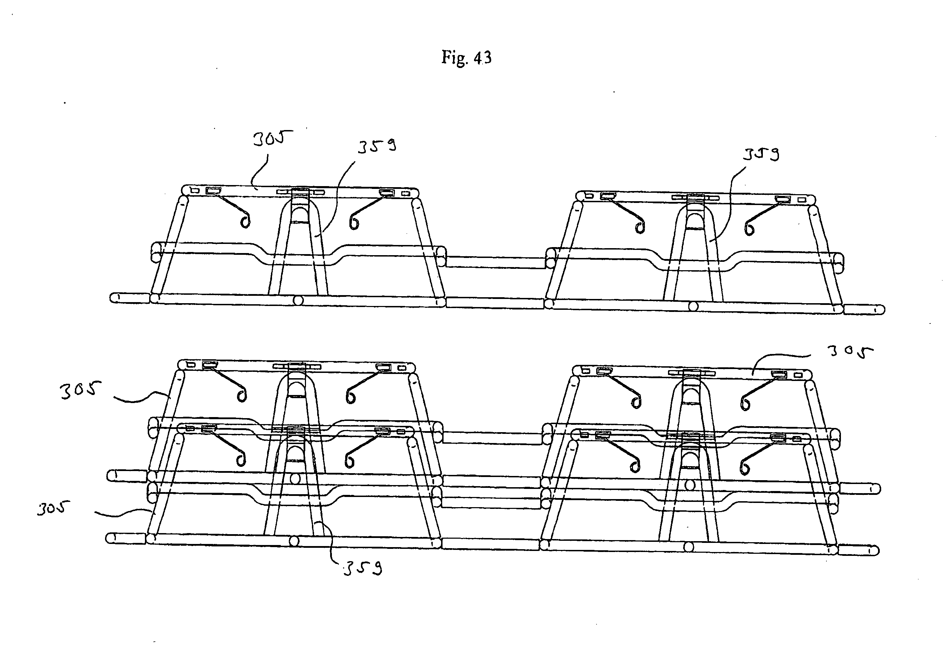

In Figur 43 ist eine Querschnittsansicht von Deckelteilen 305 entlang der kleinen Schalen zu sehen und zwar in gestapelter Form, wobei das oberste Deckelteil 305 kurz davor steht auf den Stapel aufgesetzt zu werden. Das Stapeln von Deckelteil 305 auf Deckelteil 305 ist im wesentlichen ein Zusammenspiel von der unteren Ebene des oberen Deckelteils 305 und der mittleren Ebene des unteren Deckelteils 305.

Die untere Ebene des oberen Deckelteils stapelt auf Grund der Formgebung der mittleren Ebene auf den hohen Abschnitten der mittleren Ebene des unteren Deckelteils. Der parallele Abstand zwischen den v-förmigen Verbindungsstücken 359 des unteren und des oberen Deckelteils ist so groß, dass ein Verklemmen ausgeschlossen wird, was für Automatisierungszwecke unbedingt erforderlich ist.

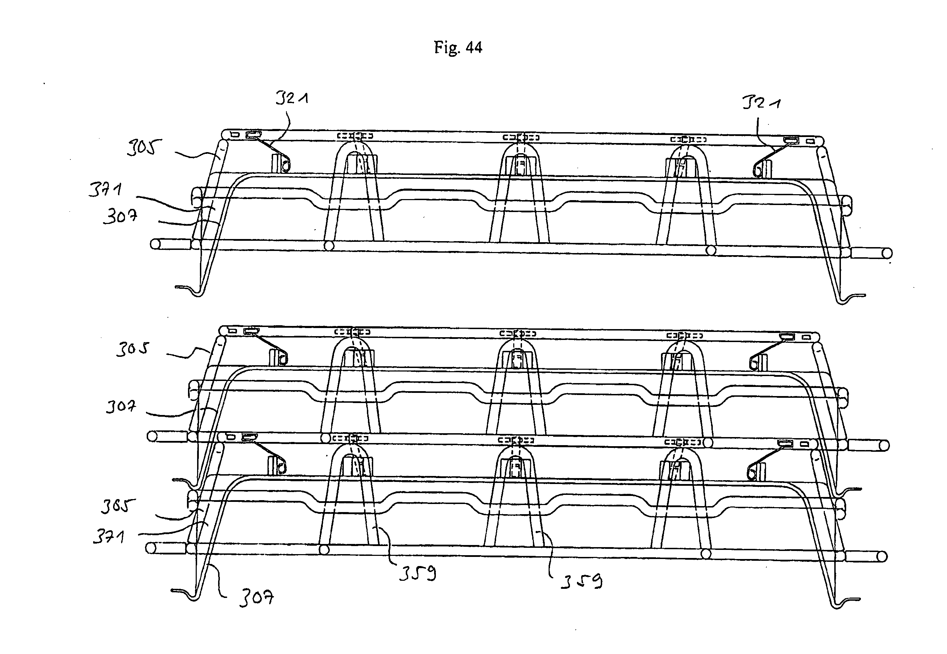

Die in Figur 44 erläuterte Stapelfunktion lässt sich natürlich ebenfalls mit eingebrachten Dichtungskomponenten 307 bewerkstelligen. Wobei hier zwar wieder auf den hohen Teilstücken der mittleren Ebene gestapelt wird, nun allerdings stapelt der unterste Teil der Dichtungskomponente 307, nämlich die Vertiefung vor der Dichtlippe. Um die Dichtungskomponente 307 bzw. die Blattfedern 321 des untersten Deckelteils sind über zu beanspruchen, wird dieses unterste Deckelteil entweder auf ein Bodenteil aufgesetzt oder in einen eigens dafür kreierten Stapler eingebracht, der dafür Sorge trägt, dass die Dichtungskomponente nicht nach oben gedrückt wird. Der Abstand der v-förmigen Verbindungsstücke 359 zur Innenseite der Dichtungskomponente 307 und die vergleichsweise geringe Anzahl der Anlagepunkte garantieren eine ausreichende Belüftung des Innenraumes der Dichtungskomponenten 307 im gestapelten Zustand.

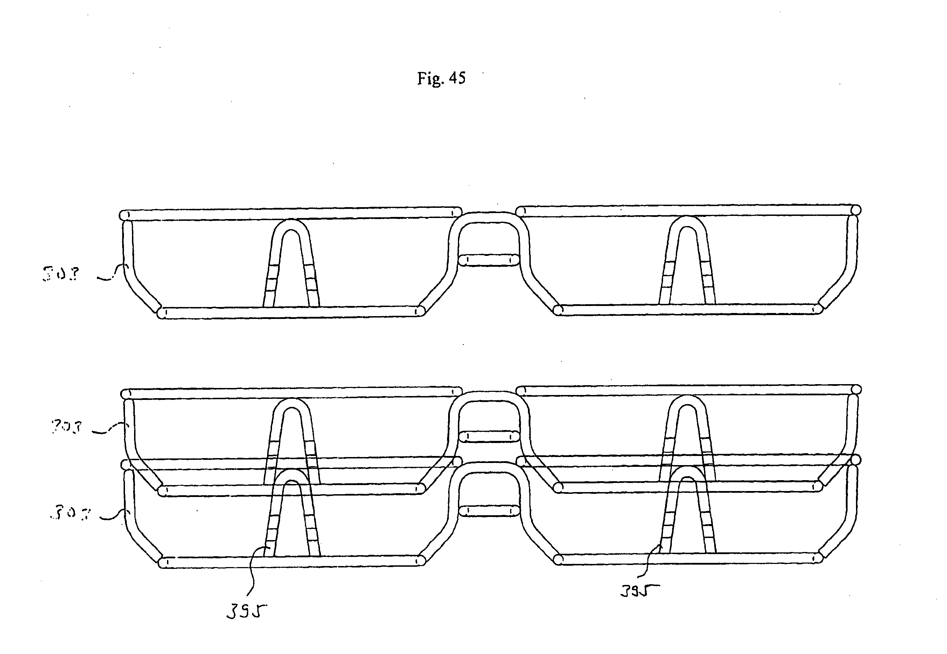

Figur 45 zeigt eine Querschnittsansicht von Bodenteilen 303 entlang der kleinen Schalen im gestapelten Zustand, wobei das oberste Bodenteil kurz davor steht in den Stapel eingebracht zu werden. Die v-förmigen Verbindungsstücke 395 des oberen Bodenteils liegen bei dieser Stapelung auf der oberen Ebene des unteren Bodenteils auf. Durch den umlaufenden Charakter der oberen Ebene der unteren Schale und die Anzahl der Verbindungsstücke pro Seite ist eine plane Stapelbarkeit gewährleistet.

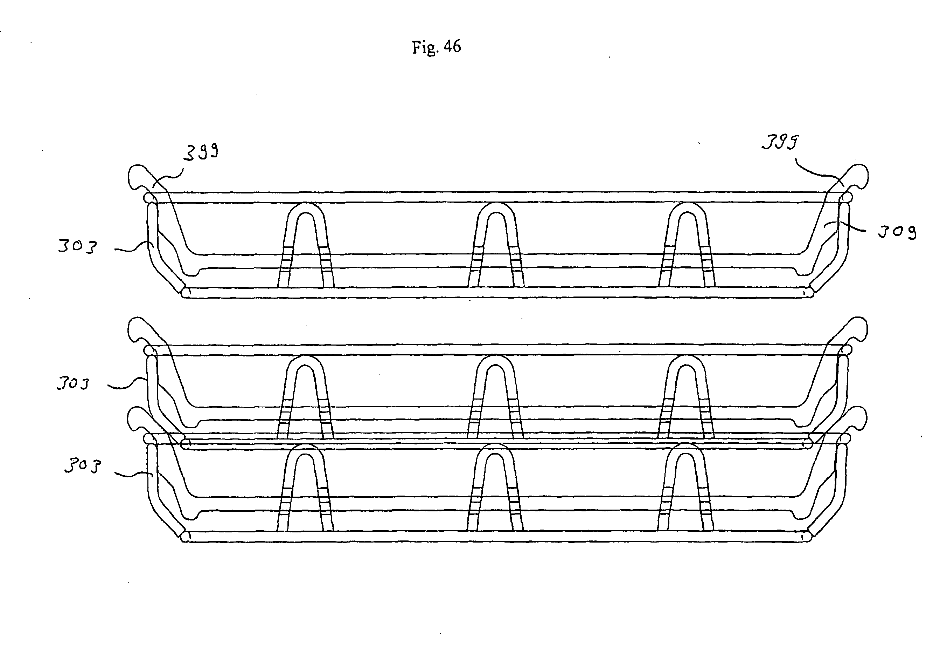

Das bei Figur 45 geltende Stapelprinzip gilt ebenfalls bei Figur 46, wobei hier die untere, im 45° Winkel gebogenen Hälften der v-förmigen Verbindungsstücke des oberen Bodenteiles 303 auf dem 45° winkligen Schalenhals 399 aufliegen. Auch hier sorgt der umlaufende Charakter des Schalenhalses 399 und die Anzahl der Verbindungsstücke 395 pro Seite für ein planes Aufliegen. Falls für die Schale ein zerbrechliches werden würde, so könnten die 45° winkligen Hälften der v-förmigen Verbindungsstücke mit Kunststoff ummantelt werden, um eine Beschädigung der Menüschale zu verhindern.

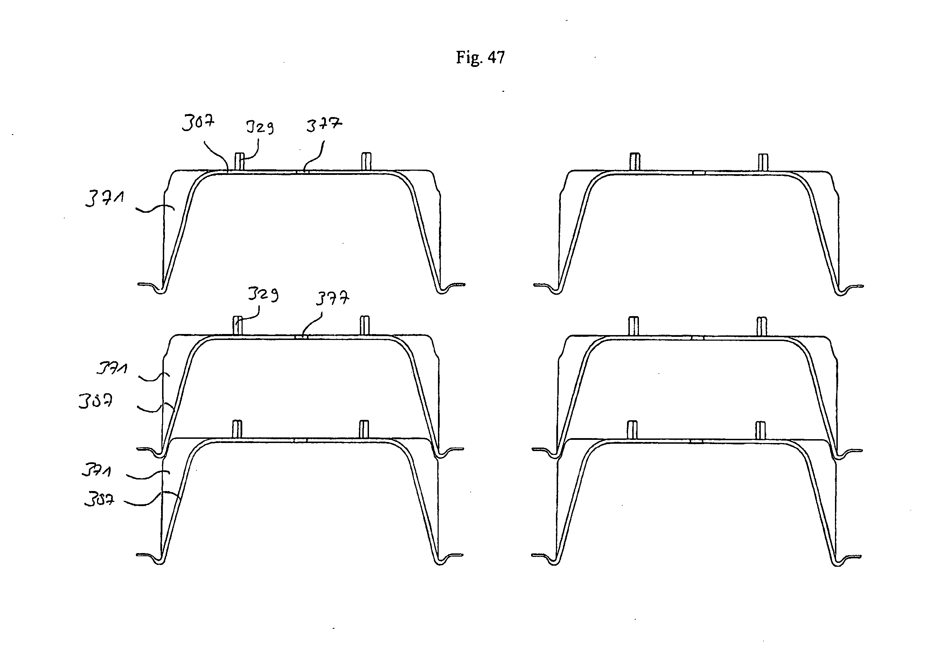

Figur 47 zeigt eine Querschnittsansicht der kleinen Dichtungskomponenten 307 im gestapelten Zustand. Durch die, an die untere Form der Dichtungskomponenten 307 angepassten Aussparungen in den Arretierflügeln 371 können Dichtungskomponenten 307 aufeinander gestapelt werden. Die Positionierung der Arretierflügel 371 sorgt dafür, dass der Stapel stabil ist und die vergleichsweise geringe Auflagefläche führt zu keinerlei Verklemmung. Ebenfalls zu sehen sind die Druckausgleichsöffnungen 377 und die Federaufnahmen 329 mit ihrer nach außen zeigenden Verdickung.

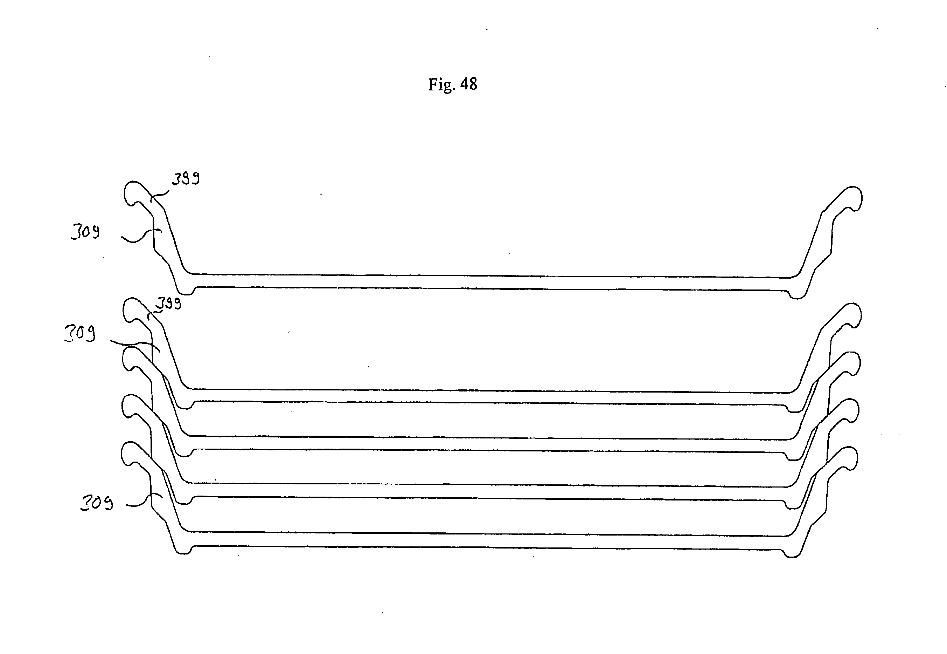

In Figur 48 ist der Querschnitt durch einen Stapel großer Schalen 309 zu sehen. Die Stapelung wird hierbei durch die Stapelstufe, deren untere Kante einen 45° Winke besitzt und durch den 45° winkligen Schalenhals 399 realisiert. Durch die Winkelstellung der Schalenwände ist gewährleistet, dass dieses Stapelprinzip immer gilt, egal wie hoch die zu stapelnden Schalen sein mögen.

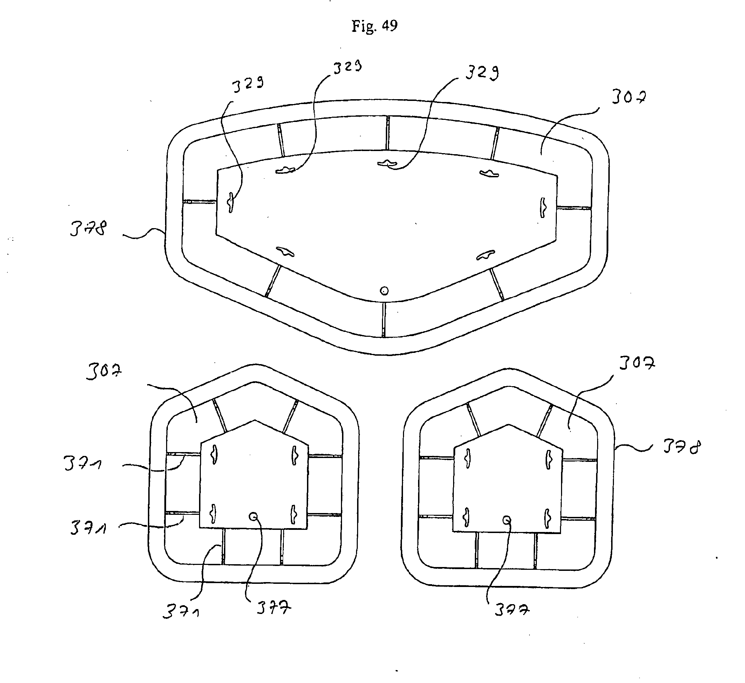

Figur 49 ist eine schematische Draufsicht auf einen Satz Dichtungskomponenten 307, die deutlich die Arretierflügel 371, die Federaufnahmen 329, die Druckausgleichsöffnung 377, die Dichtlippen 378 und deren Positionen zeigt.

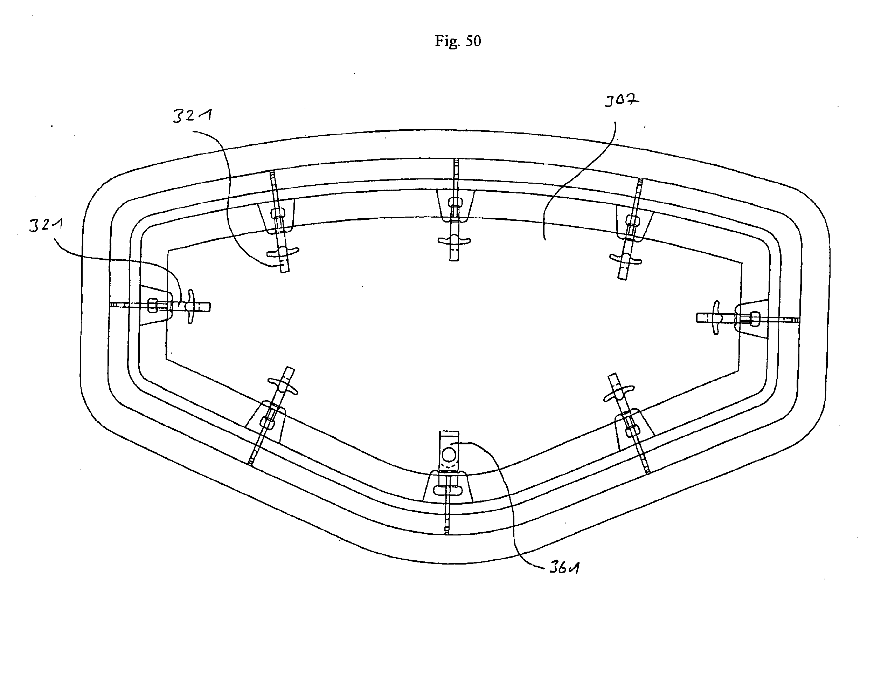

Figur 50 zeigt eine schematische Draufsicht auf die große Dichtungskomponente 307 mit angebrachten Blattfedern 321 und Verschließelement 361, sowie deren Halterungen.

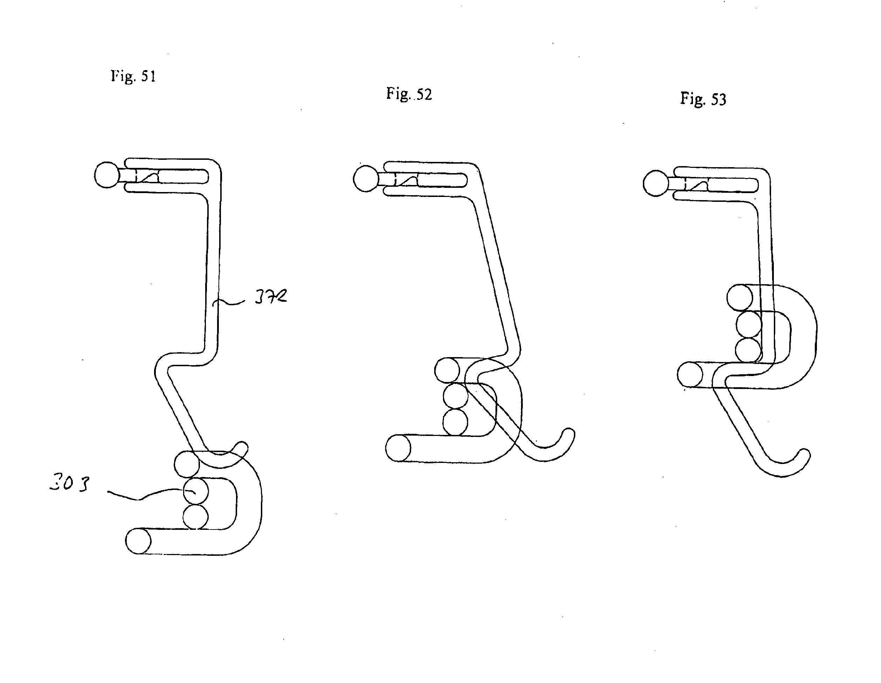

Figur 51 bis 53 verdeutlichen die Funktionsweise des Schnappverschlusses. Die zwei aneinander liegenden Verbindungsstreben des Bodenteils werden von dem Arretierbügel 371 umfasst. Der Schnappverschluss ist auf eine Halterung aufgeschoben und arretiert. Werden Boden- und Deckelteil nun aufeinandergesetzt, so kommt der Punkt, da der Schnappverschluss am oberen Boden des Arretierbügels anliegt (Figur 51). Wird nun das Deckelteil fester auf das Bodenteil 303 gedrückt, so biegt sich der Schnappverschluss nach außen und seine Spitze fährt an dem oberen Boden des Arretierbügels 371 vorbei (Figur 52). Durch kontinuierlichen Kraftaufwand, wird die Spitze des Schnappverschlusses schließlich an den beiden aneinander liegenden Verbindungsstreben vorbeigeführt und schnappt unter der untern Verbindungsstrebe ein. Der Verschließvorgang ist abgeschlossen. Damit das Einschnappen in keiner Weise beeinträchtigt wird, ist der untere Bogen des Arretierbügels weiter nach innen gezogen, wie in Fig. 53 gezeigt.

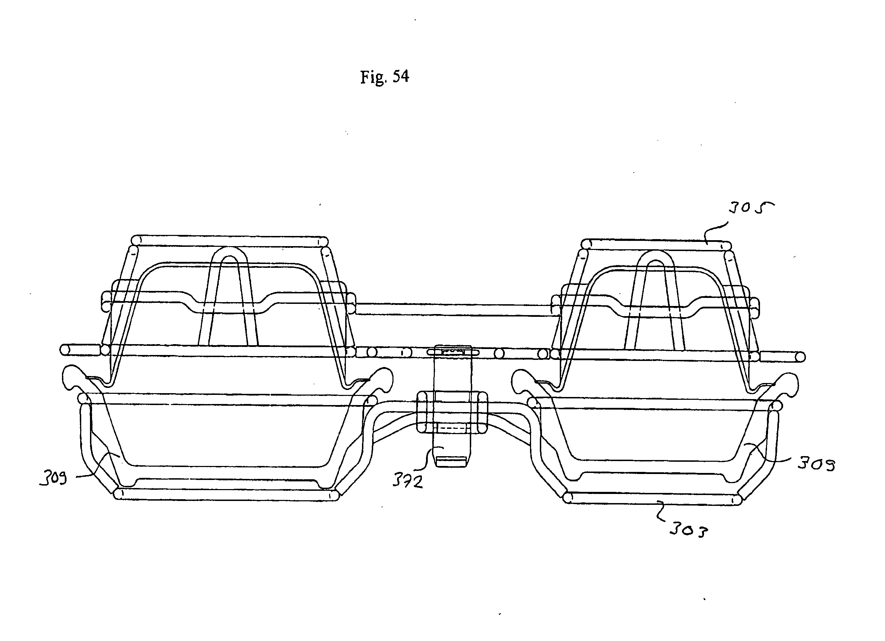

Figur 54 stellt einen schematischen Querschnitt durch die große und kleine Schale 309 dar. Zu erkennen sind insbesondere der Schnappverschluss, dessen Halterung, der Arretierbügel sowie die aneinander liegenden Verbindungsstreben. Aus diesem Schnitt wird deutlich, dass der Schnappverschluss nicht seitlich am Arretierbügel 371 vorbei kann und somit ein falsches Aufsetzten des Deckelteils ausgeschlossen ist.

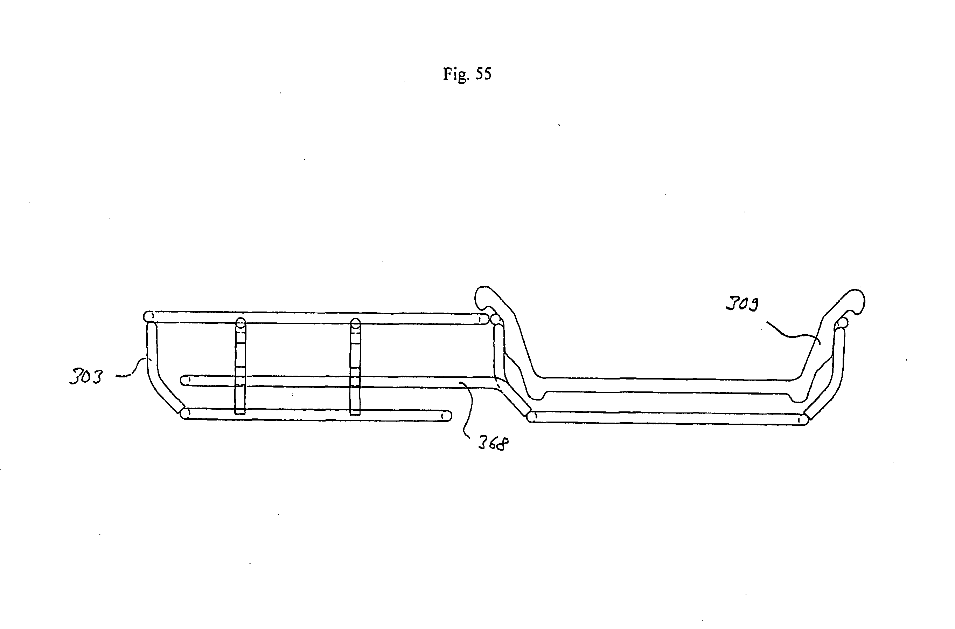

Der schematische Mittelschnitt durch das Bodenteil des erfindungsgemäßen Behältnisses in Figur 55 zeigt die Formgebung und Ausmaße der Verbindungsstrebe 368, die maßgeblich für die Statik des Bodenteiles verantwortlich zeichnet.

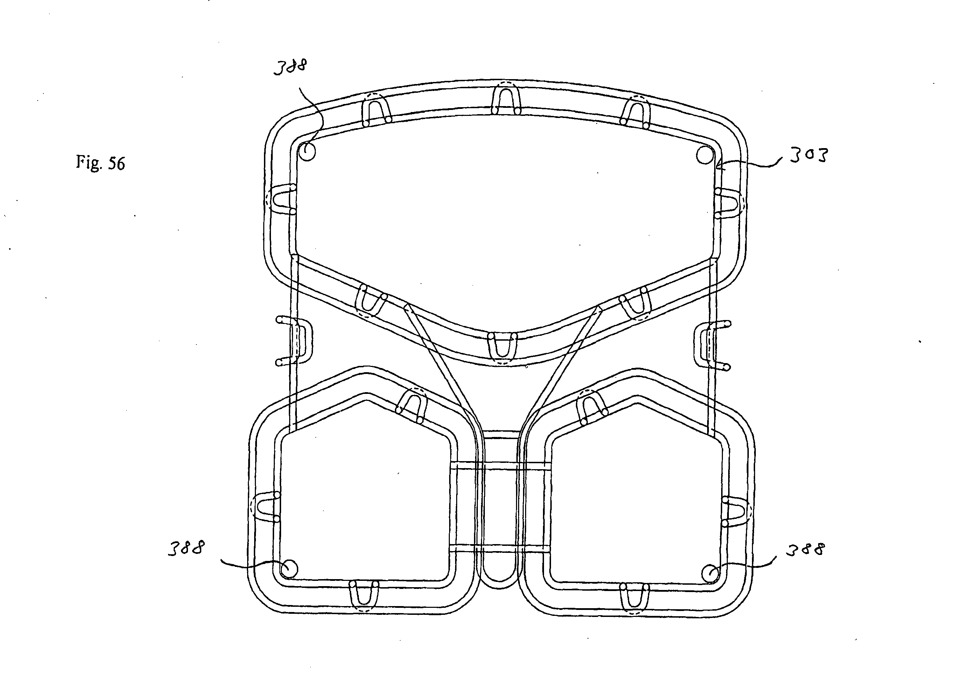

Figur 56 zeigt wieder eine Draufsicht auf ein Bodenteil 303 ohne die eingebrachten Schalen. In dieser Ansicht wurden in den vier Ecken der unteren Ebene Stapelplättchen 388 angebracht. Diese Stapelplättchen 388 sind notwendig, wenn in das Bodenteil 303 verschieden hohe Schalen eingehängt werden, damit ein Stapel von erfindungsgemäßen Behältnissen immer gerade ist.

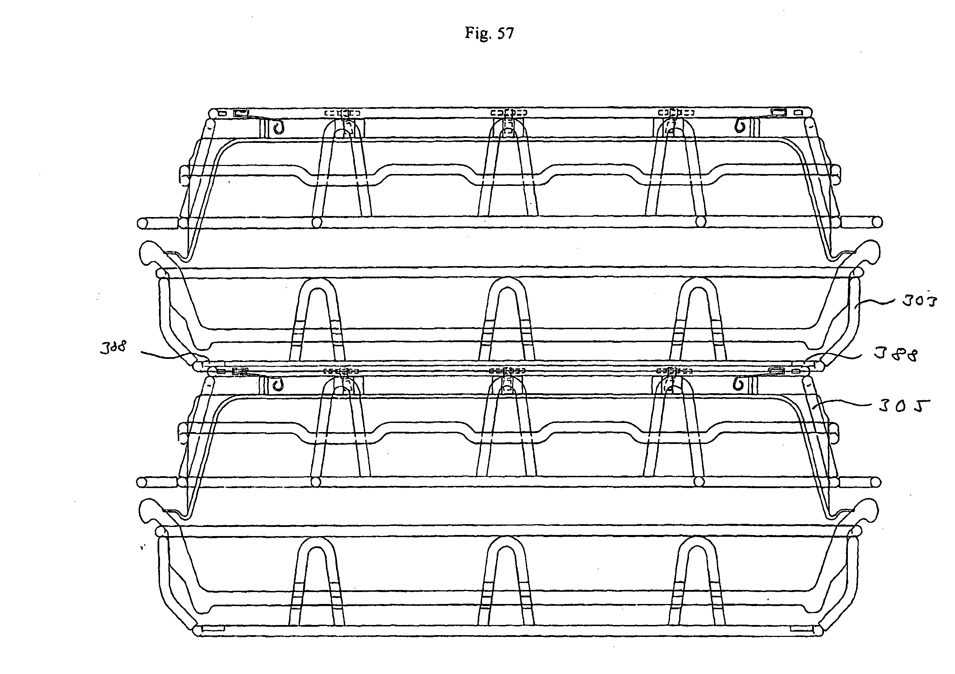

Figur 57 verdeutlicht den Einsatz der Stapelplättchen 388. Beim Aufeinanderstellen von zwei oder mehreren erfindungsgemäßen Behältnissen, liegt das Stapelplättchen 388 des oberen Behältnisses auf der oberen Deckelebene des unteren Behältnisses auf. Die Stapelplättchen 388 sind so in das Bodenteil 303 eingebracht, dass sie mit der Oberkante der unteren Ebene abschließen, aber eine geringere Materialstärke haben, so dass es zu einer ca. 2,5 mm hohen Einstapelung kommt, was ein Verrutschen verhindert.

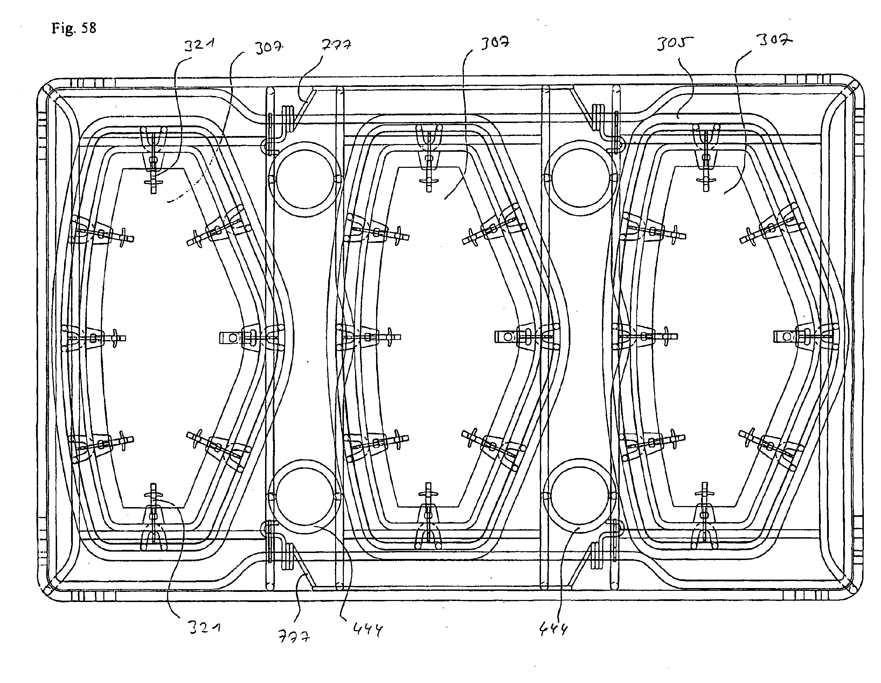

Die Figuren 58 bis 69 zeigen ein erfindungsgemäßes Behältnis mit mehreren Menüschalen.

Figur 58 zeigt eine schematische Draufsicht auf ein Deckelteil des erfindungsgemäßen Behältnisses mit drei Nestaufnahmen durch welche mittels der Blattfedern 321 in diesem Fall drei Dichtungskomponenten 307 in das Deckelteil 305 eingehängt werden können. Wie aus dieser Ausführungsform des Deckelteils 305 ersichtlich, können die Gitterelemente in unterschiedlicher Ausgestaltung angeordnet sein. Zu erkennen sind ferner der Grundrahmen die nach oben führenden Streben die die Verbindung des Grundrahmens mit den Nestaufnahmen herstellt, die oben befindlichen Streben, die für weitere Verbindungspunkte sorgen, die vier aufgehängten Arretierungsringe 444, die zwei Verschlussfedern 777 samt Halterung , der Stapelrahmen mit zwei Aussparungen, die Verschließelemente und die eingehängten Dichtungskomponenten 307.

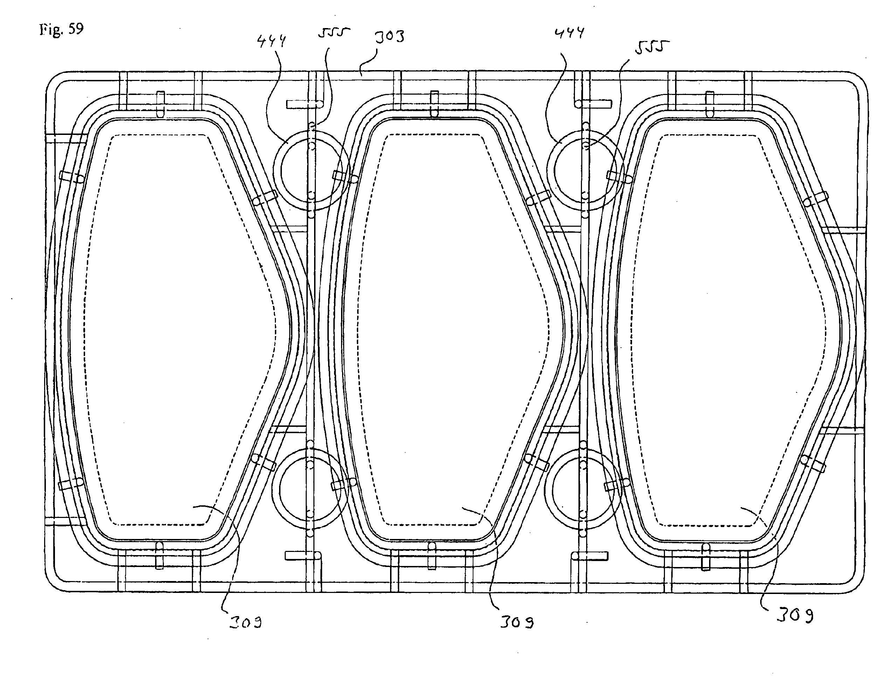

Figur 59 ist die schematische Ansicht auf ein Bodenteil 303 des erfindungsgemäßen Behältnisses, in welches drei Menüschalen 309 eingehängt sind. Deutlich zu sehen sind die vier Verschlussaufnahmen, die Stapelringe 444, die darüber gebogenen Dome 555, die oberen und die unteren Ebenen der Schalenbereiche, sowie deren Verbindungsstücke, die Verbindungsstreben vom Grundrahmen und den Querstreben zu den Schalenbereichen und die eingehängten Menüschalen.

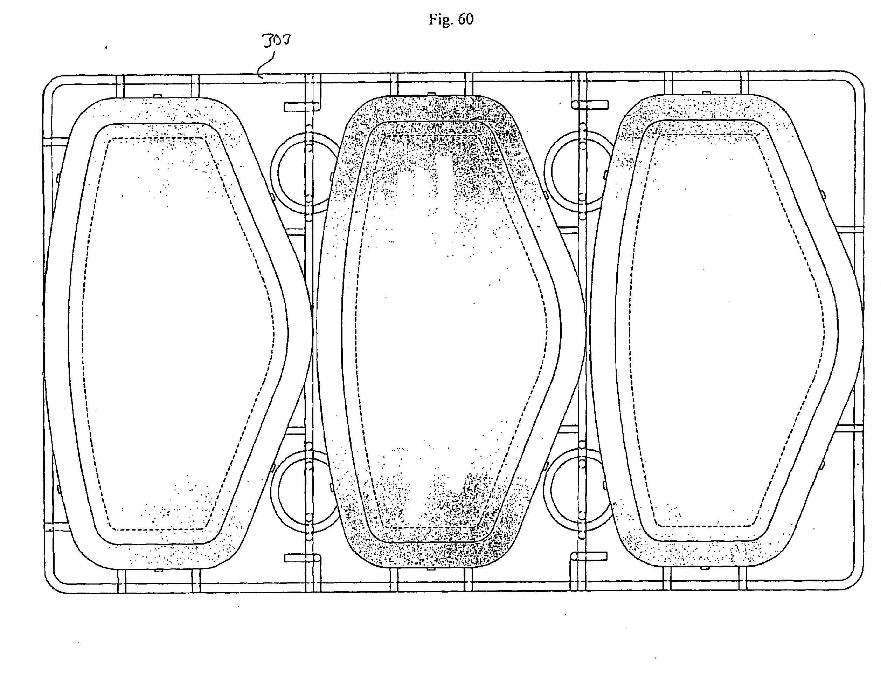

Figur 60 zeigt eine Draufsicht auf das in Figur 59 beschriebene Bodenteil 303.

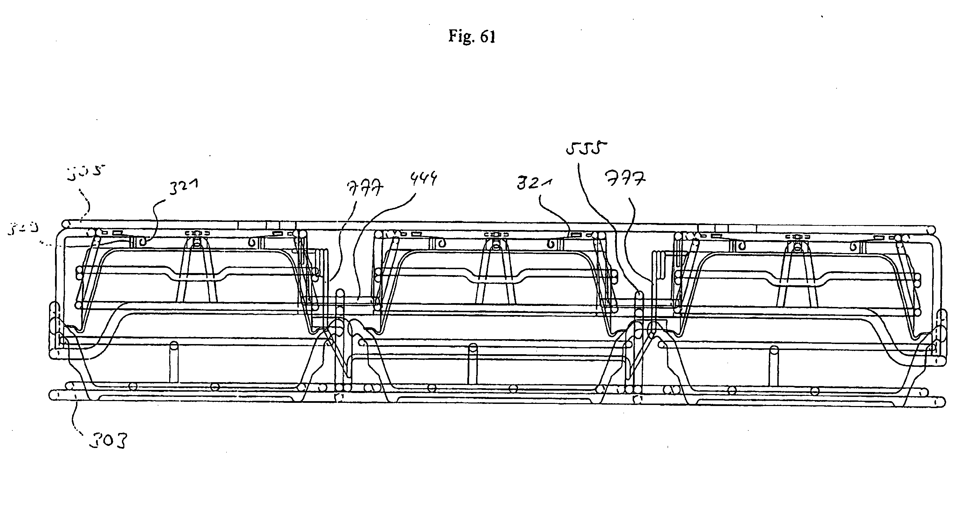

Der in Figur 61 dargestellte schematische Längsschnitt des erfindungsgemäßen Behältnisses zeigt dieses in geschlossenem Zustand, wobei die Verschlussfeder 777 unter die Verschlussaufnahmen geschnappt ist, die Blattfedern 321 auf den Federaufnahmen 329 aufliegen und so für eine dreidimensionale Ausrichtung sorgen und die Einführringe im Deckelteil ca. 1 mm über den Stufen der Dome 555 des Bodenteils 303 zum Liegen gekommen sind.

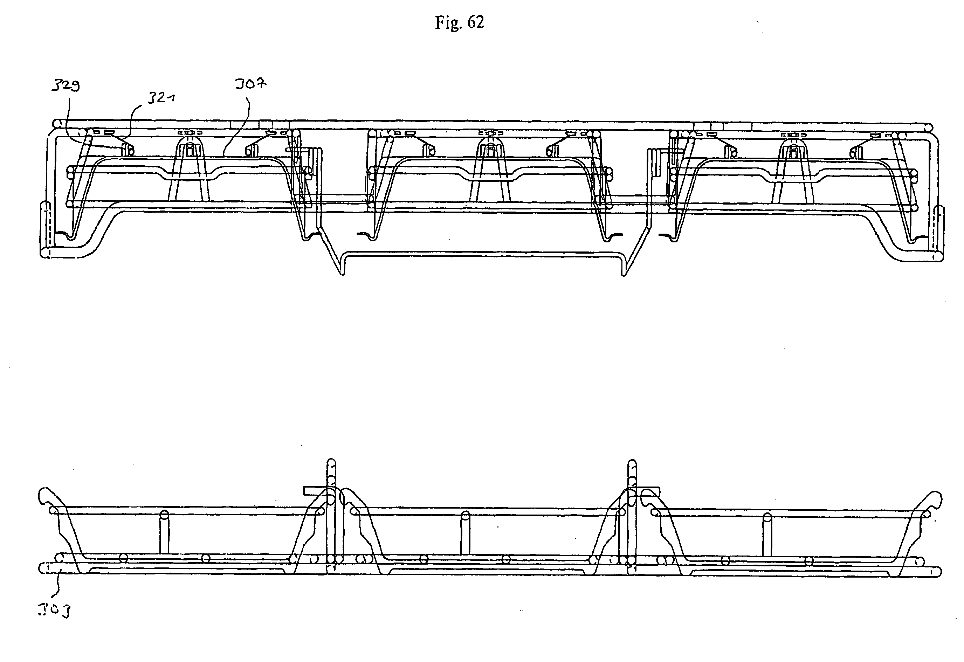

Figur 62 zeigt das Behältnis aus Figur 61 im geöffneten Zustand. Dies ist deutlich daran zu erkennen, dass die Blattfedern 321 Kontakt mit der Federaufnahme 329 haben und somit die Dichtungskomponente 307 gehalten wird.

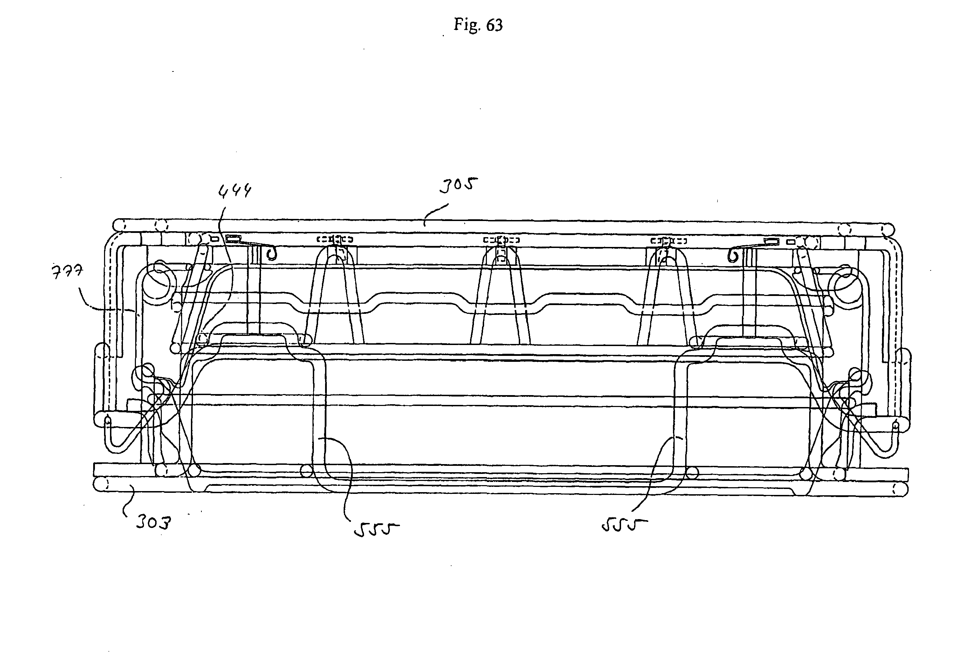

In Figur 63 ist nun das Behältnis aus Figur 61 im schematischen Querschnitt und zwar im geschlossenen Zustand zu sehen. Zu beachten sind hier zum einen die Querstrebe im Bodenteil 303, die aus einem Teil gebogen wurde und die Dome 555 sowie die mittlere Auflage beinhaltet und zum anderen die Einführringe 444, die im Deckel 305 aufgehängt sind und die nun ca. 1 mm über den Stufen der Dome 555 zum Halten gekommen sind. Weiter sind die Verschlussfeder 777 samt Halterung zu erkennen, die unterhalb der Verschlussaufnahme eingeschnappt ist, das Schalennest mit seinen zwei Ebenen im Bodenteil mitsamt den Verbindungsstücken die gleichzeitig auch den Halt der eingehängten Schale gewährleisten und der Stapelrahmen mit seinen Aussparungen am Deckelteil.

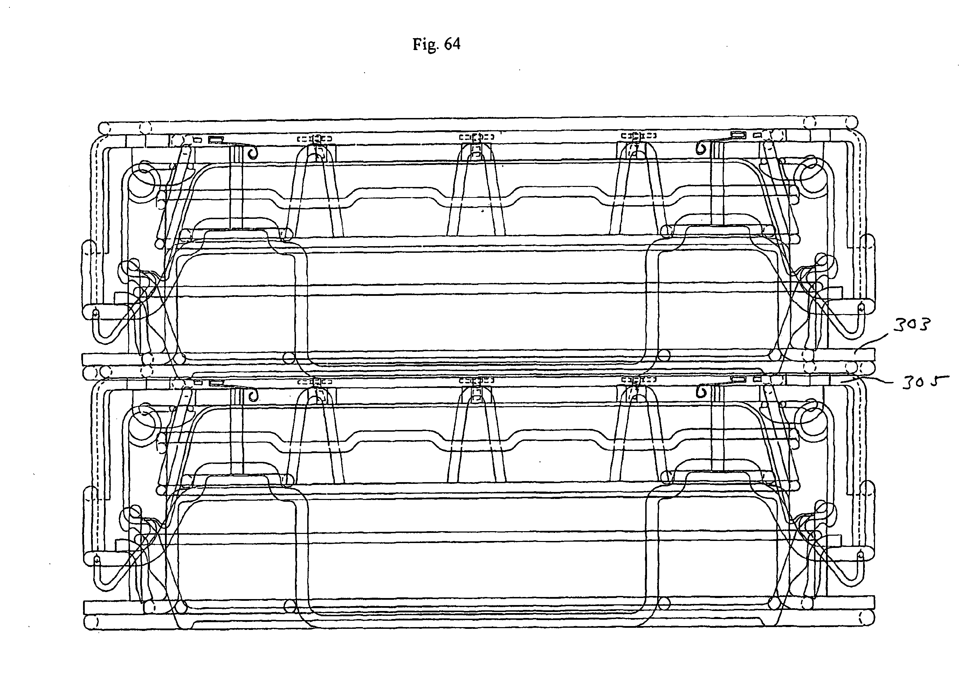

Figur 64 macht nun den Einsatz des Stapelrahmens deutlich. Beim Aufeinandersetzen von zwei geschlossenen Behältnissen stülpt sich der Grundrahmen des oberen Bodenteiles 303 über den Stapelrahmen des unteren Deckelteiles 305. Der geringe Abstand zwischen den beiden Rahmen macht ein Verrutschen und somit ein schiefes Stapeln unmöglich.

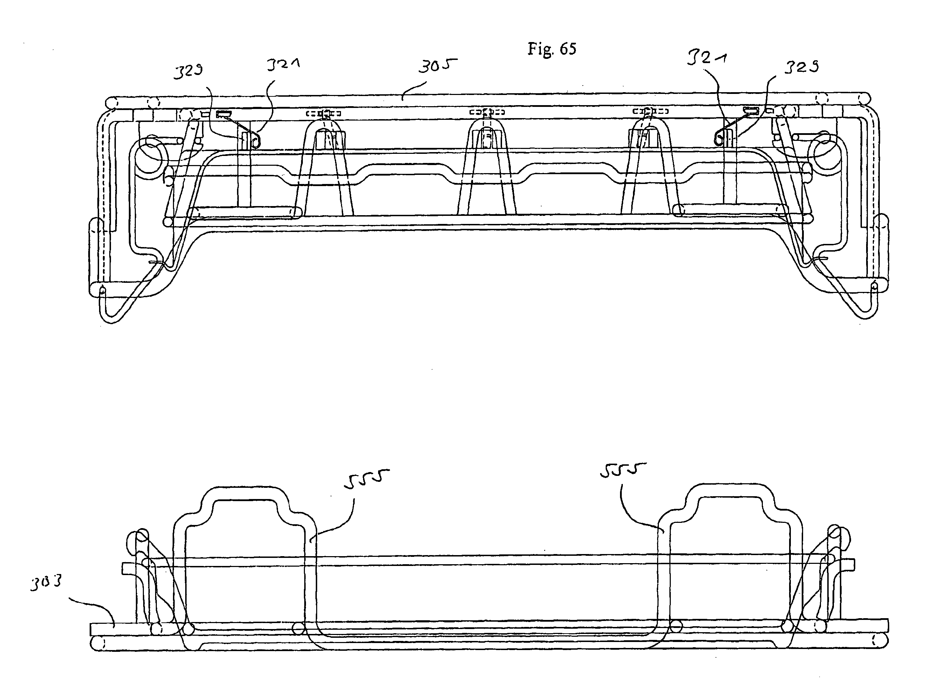

Figur 65 entspricht dem schematischen Querschnitt aus Figur 63, allerdings zeigt diese Figur den geöffneten Zustand. Sehr schön zu erkennen sind die Blattfedern 321, die mit der Innenseite der Federaufnahme 329 Kontakt haben und so für den Halt der Dichtungskomponente 307 sorgen und im Bodenteil 303 die Verbindungsstücke des Schalennestes sowie die durchgehende Querstrebe, die an zwei Stellen Dome 555 ausbildet und dazwischen den Boden berührt. Es ist eine Notwendigkeit, dass diese Strebe zwischen dem linken und dem rechten Dom 555 den Boden berührt, damit die Gewichtskraft von vielen aufeinander gestapelten Behältnissen gleichmäßig aufgefangen wird und es somit nicht zum Verbiegen einzelner Streben kommen kann.

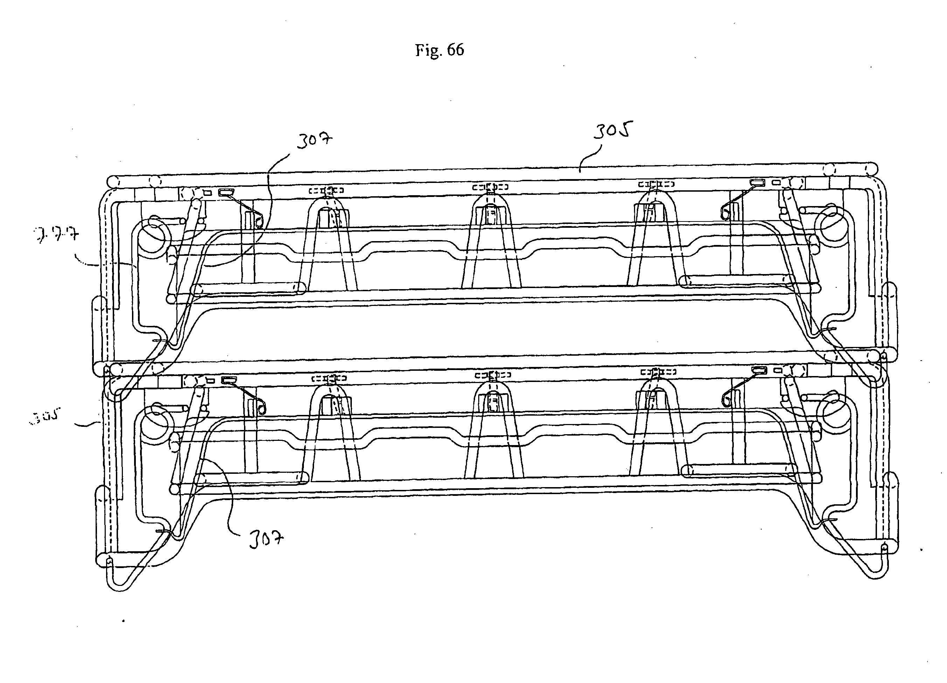

Figur 66 zeigt eine schematische Querschnittsansicht von zwei übereinander gestapelten Deckelteilen 305 komplett mit eingebrachten Dichtungskomponenten 307. Auch hier wird wieder die Funktion des Stapelrandes ganz deutlich, da sich die unteren Teilstücke des Grundrahmens des oberen Deckelteils 305 über den Stapelrahmen des unteren Deckelteils stülpen und nach einer Einstapelhöhe von ca. 4 mm zum Liegen kommen. Auf Grund des Rücksprunges im Stapelrahmen wird die Verschlussfeder 777 nicht aufgebogen und läuft somit nicht Gefahr sich abzunutzen. Auch die obere Dichtungskomponente 307 hat keinerlei Kontakt mit dem unteren Deckelteil 305, wodurch eine gute Belüftung gegeben ist, und somit der Hygiene keine Steine in den Weg geworfen werden.

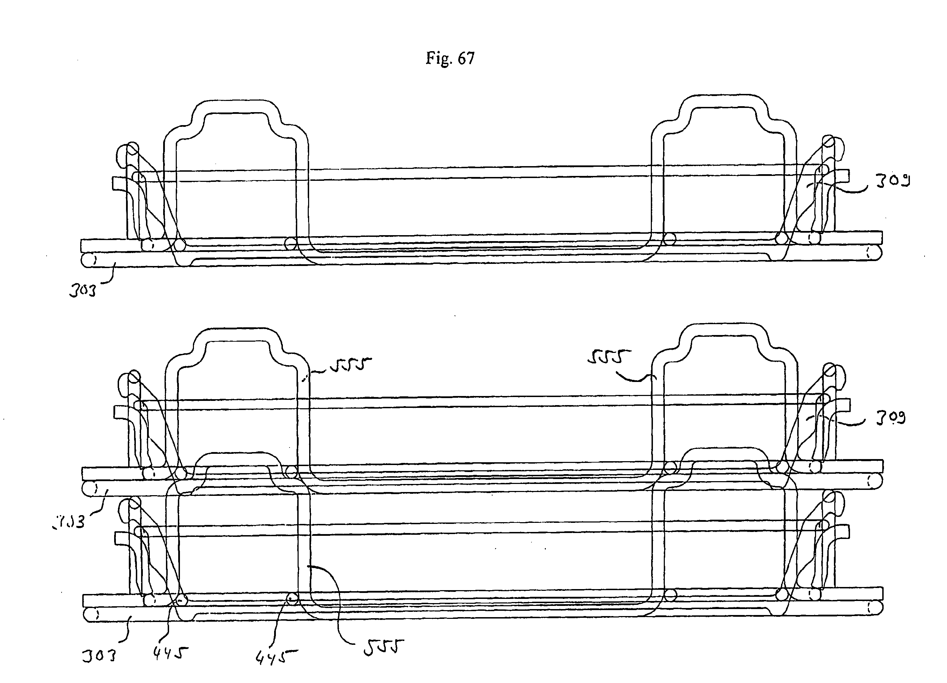

Die in Figur 67 gezeigte Stapelung von Bodenteilen 303 mit eingehängten Schalen 309 benötigt erstmals den, in den Dom eingebrachten Stapelring 445. Diese vier Stapelringe 445 liegen auf den Stufen der vier Dome auf und sorgen für eine uneingeschränkte Stapelbarkeit. Der Kopf der, in das untere Bodenteil 303 eingehängten Menüschale 309 hat keinerlei Kontakt zum oberen Bodenteil 303, wodurch etwaige Beschädigungen komplett vermieden werden.

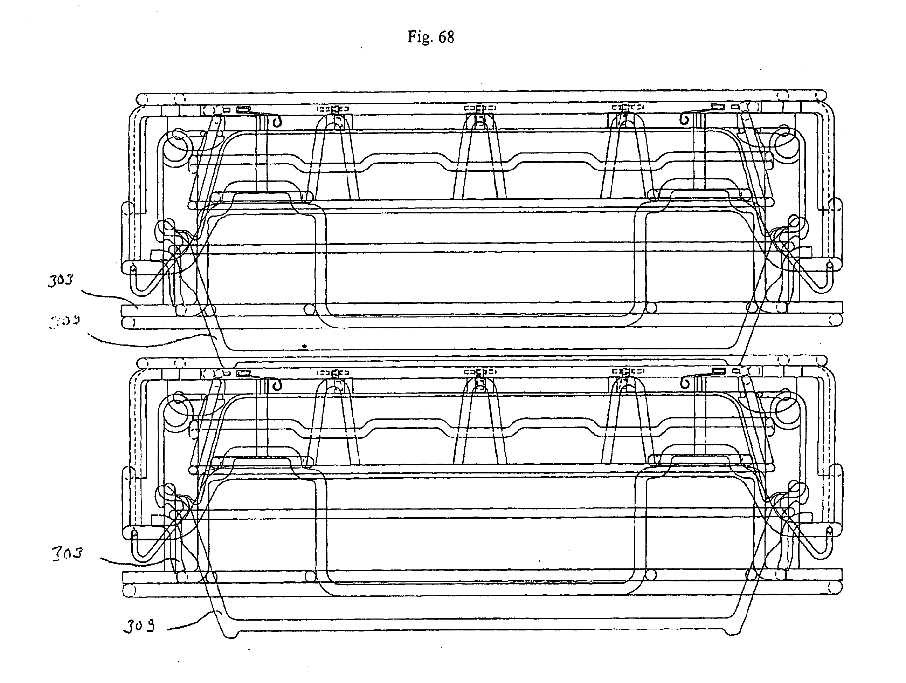

Figur 68 zeigt, dass ebenfalls die Möglichkeit besteht, eine höhere Schale 309 in das Bodenteil 303 einzuhängen. Durch die Gitterstruktur hängt diese höhere Schale einfach unten durch. Beim Stapeln von 2 oder mehreren Behältnissen, stülpt sich zwar der Grundrahmen des oberen Bodenteils 303 nicht mehr über den Stapelrahmen, allerdings stehen die Menüschalen 309 direkt auf den Quer- und Längsstreben des unter ihnen befindlichen Deckelteils und zwar innerhalb des Stapelrahmens, der somit, und insbesondere im Bereich der Einbuchtung als Arretierung für die Schalen dient.

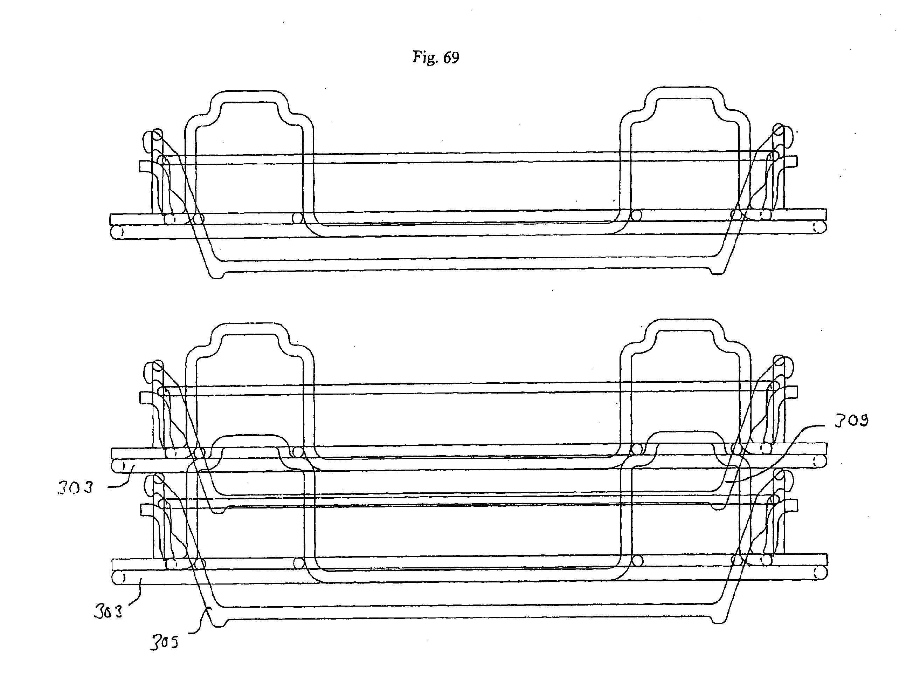

Figur 69 verdeutlicht noch einmal, was weiter oben bereits erwähnt wurde, nämlich, dass die Bodenteile 303 immer gestapelt werden können, egal wie hoch die eingehängten Menüschalen 309 sind. Die oben befindliche Menüschale 309 stapelt einfach in die darunter befindliche Menüschale 309 ein und es entstehen keinerlei Auswirkungen für die Stapelfunktionalität der Bodenteile 303.

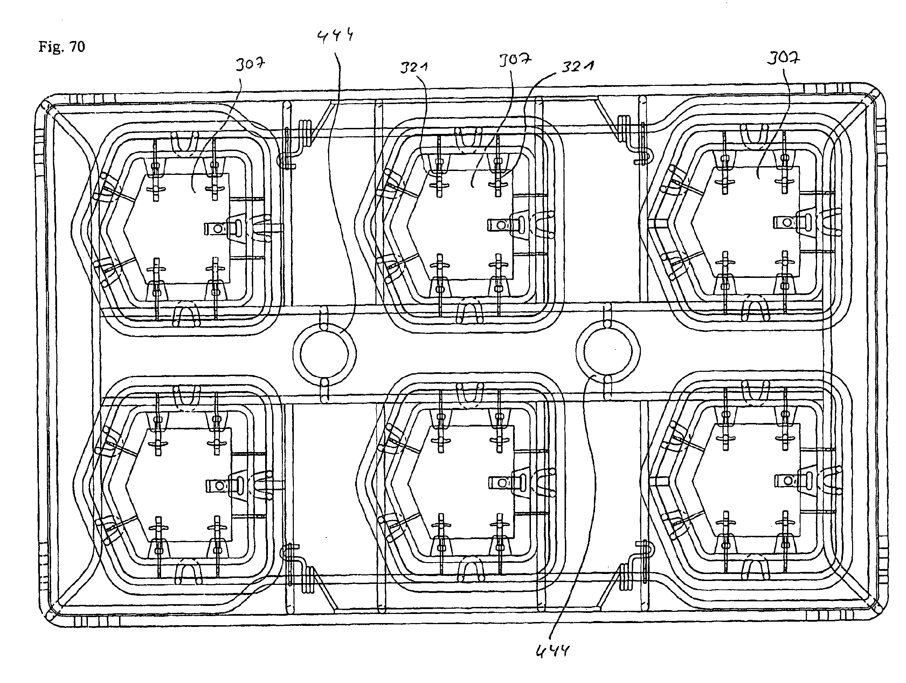

In den Figuren 70 bis 76 ist ein erfindungsgemäßes Behältnis für eine kleine Menüschale beschrieben.

Figur 70 entspricht im wesentlichen der Figur 58, nur dass hier sechs kleine Dichtungskomponenten 307 in die dafür vorgesehenen Nester mittels der Blattfedern 321 eingehängt werden können. Der zweite Unterschied liegt darin, dass die Einführringe 444 nicht mehr die im Bodenteil befindlichen Dome als Aufnahme haben, sondern eigens dafür ausgebildete Arretiertürme. Auch hat sich die Zahl der Einführringe 444 von vier Stück auf zwei Stück reduziert.

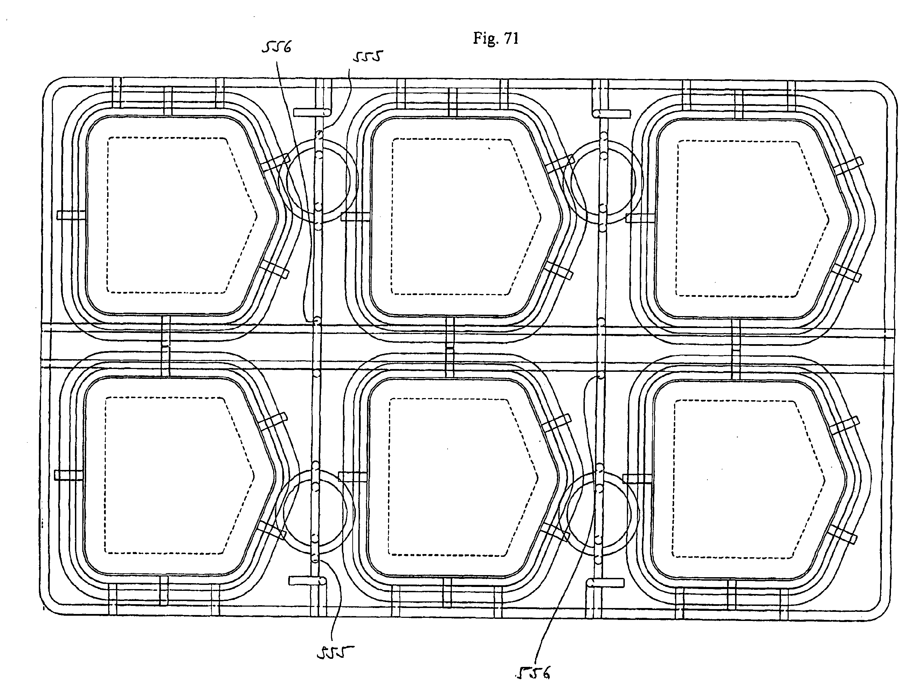

In Figur 71 ist ebenfalls im wesentlichen das gleiche wie in Figur 59 zu sehen, bis auf die zwei Arretiertürme 556, die sich mittig zwischen je zwei Domen 555 befinden und ebenfalls aus dem gleichen Biegeteil ausgeformt wurden.

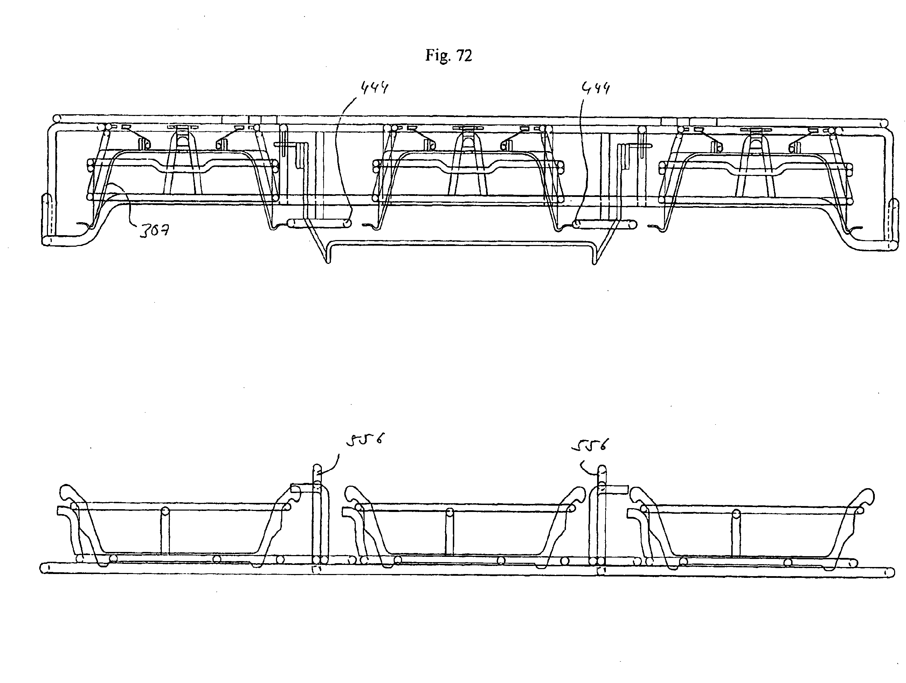

Figur 72 zeigt einen schematischen Längsschnitt eines Behältnisses für sechs kleine Menüschalen im geöffneten Zustand. Gut zu erkennen sind hier die beiden aufgehängten Einführringe 444, die sich beim Verschließen des Behältnisses über die Arretiertürme 556 stülpen, um ein ebenes Aufliegen der Dichtlippe der Dichtungskomponente 307 auf dem Menüschalenhals zu gewährleisten.

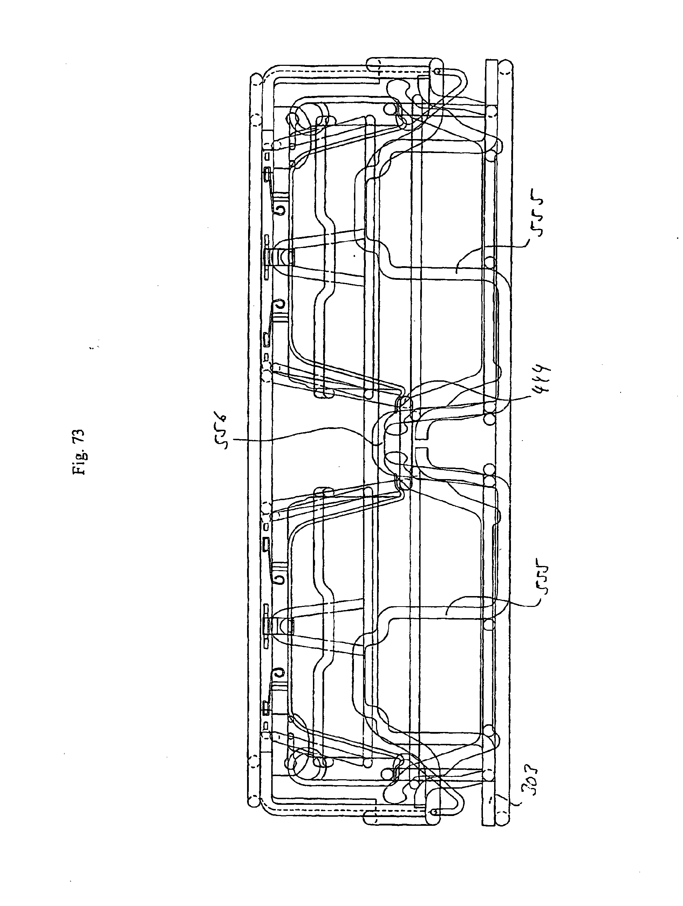

Figur 73 zeigt nun einen schematischen Querschnitt eines erfindungsgemäßen Behältnisses für sechs kleine Menüschalen im geschlossenen Zustand. Der einzige Unterschied zum geschlossenen Zustand des Behältnisses für drei große Menüschalen besteht darin, dass sich die im Deckel befindlichen Einführringe 444 über die Arretiertürme 556 im Bodenteil 303 geschoben haben, und so eine gerades Aufliegen der Dichtlippen auf den Hälsen der Menüschalen gegeben ist. Die Ringe haben zu den Arretiertürmen 556 auch im geschlossenen Zustand noch etwas Abstand, da sie auf keinen Fall das Verschließen, oder noch schlimmer das Abdichten der Menüschalen durch die Dichtungskomponenten verhindern sollen. Es ist auch deutlich zu sehen, dass der im Bodenteil 303 befindliche Arretierturm 556 aus der gleichen Strebe ausgeformt ist, aus der auch die rechts und links befindlichen Dome 555 ausgeformt sind. Weiterhin befindet sich an jeder Seite zwischen Dom und Turm ein Abschnitt, der auf dem Boden aufliegt, damit die Gewichtskraft mehrerer aufeinander gestapelter Behältnisse kein Verbiegen dieser Streben zur Folge hat.

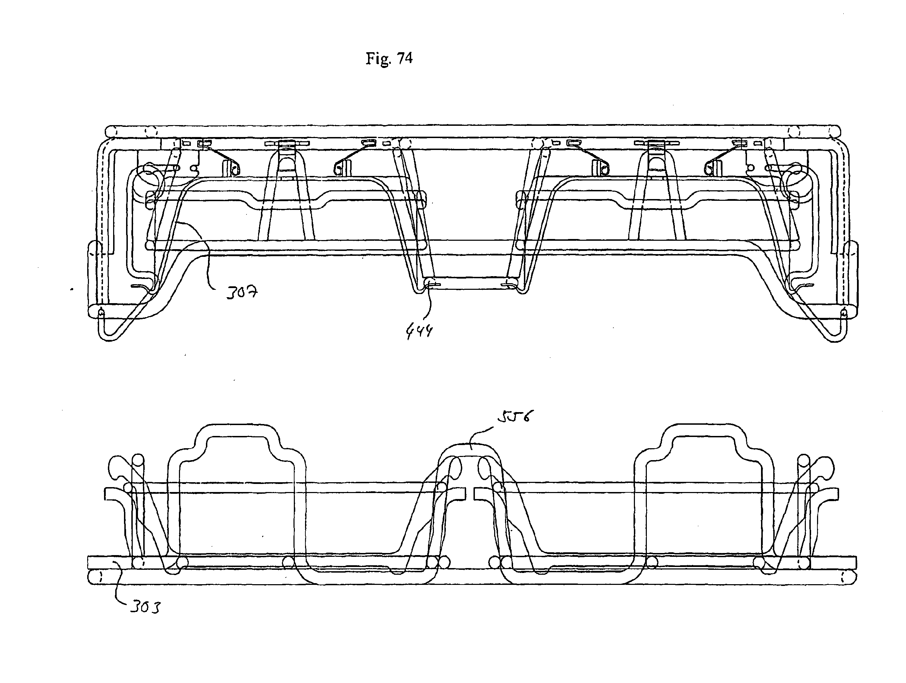

In Figur 74 ist das Behältnis aus Figur 73 im geöffneten Zustand zu sehen. Hier sind eindeutig die Positionen der Einführringe 444 und der Pendants, der Arretiertürme 556, zu sehen. Weiter ist zu erkennen, dass die Verbindungsstücke der Schalennester im Bodenteil zwar die gleiche Formgebung wie im Bodenteil 303 für die drei großen Schalen haben, aber dennoch etwas höher sind. Dies ist darauf zurückzuführen, dass die Schalenhöhe der kleinen Menüschalen im allgemeinen etwas höher ausfällt, als die der großen Menüschale und somit muss die kleine Menüschale etwas höher aufgehängt werden. Im Gegenzug dazu ist allerdings die Dichtungskomponente 307 der kleinen Menüschale etwas niedriger, wodurch eine gleiches Level bei den Behältnishöhen geschaffen wird.

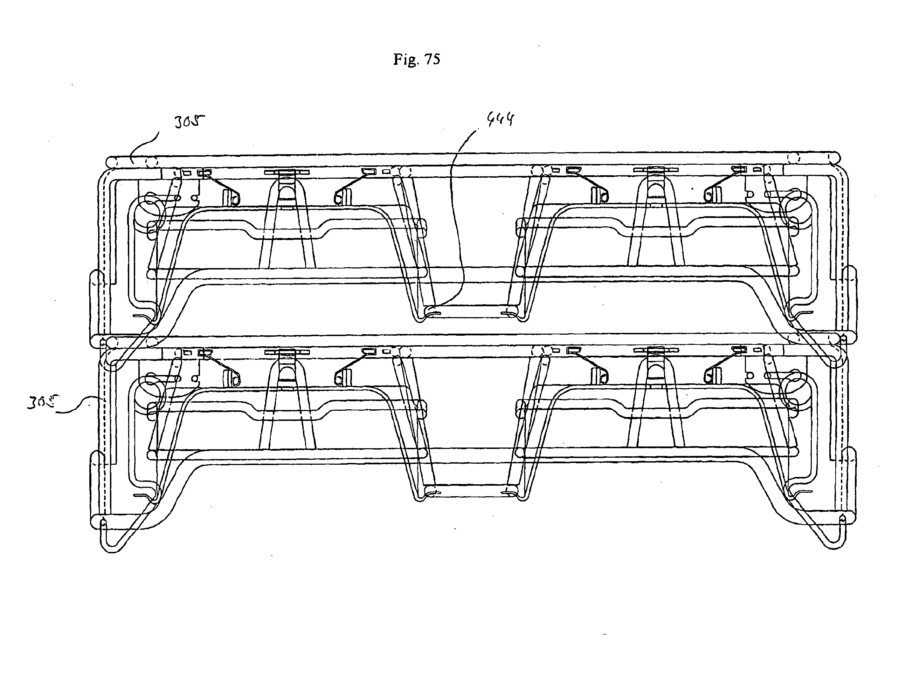

Bei der gestapelten Ansicht von Figur 74 ist in Figur 75 deutlich zu sehen, dass auch hier wieder der Stapelrahmen zum Einsatz kommt, über welchen sich die unteren Teilstücke des Grundrahmens des oben befindlichen Deckelteils 305 stülpen. Auch ist zu sehen, dass die neuen Einführringe 444 beim Stapeln keinerlei störende Funktion haben, denn sie kontaktieren in keiner Weise das unter ihnen befindliche Deckelteil 305.

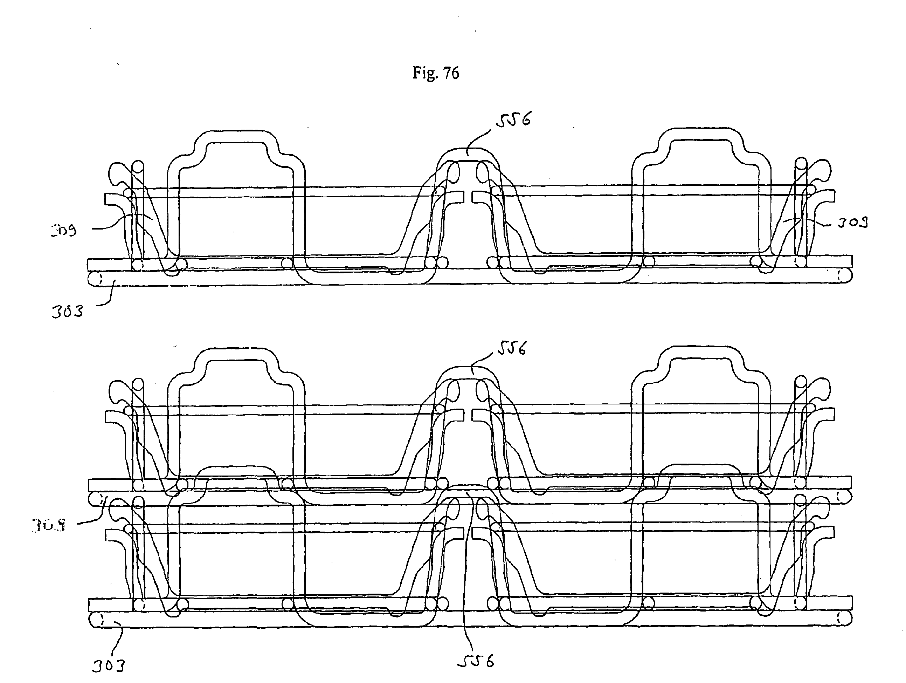

Die Stapelung von Bodenteilen in Figur 76 mit oder ohne eingehängte Menüschalen 309 beim Behältnis für sechs kleine Menüschalen funktioniert genau so, wie bereits weiter oben besprochen, bis auf einen kleinen Unterschied, nämlich, dass der Arretierturm 556 als zusätzliche Auflagefläche dient und somit noch einmal mehrt Stabilität verspricht.

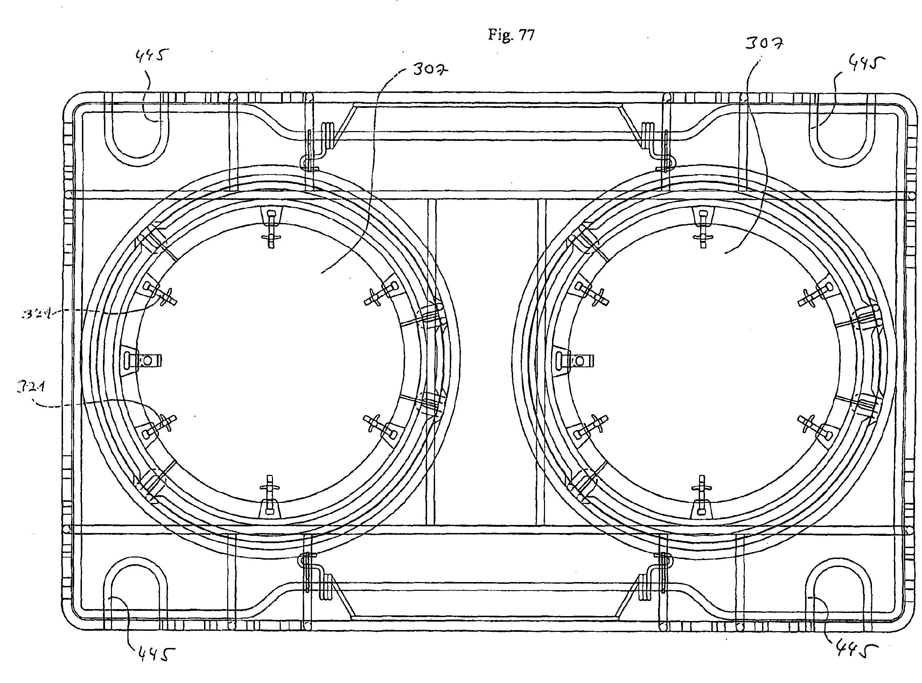

Als nächstes wird in den Figuren 77 bis 89 ein erfindungsgemäßes Behältnis mit darin unterbringbaren Rundtellern beschrieben.

Figur 77 entspricht im wesentlichen der Figur 58, nur dass hier zwei große runde Dichtungskomponenten 307 in die dafür vorgesehenen Nester mittels der Blattfedern 321 eingehängt werden können. Der zweite Unterschied liegt darin, dass die vier Einführelemente 445 nun am Rand befindlich, sie werden von unten an den Grundrahmen angebracht, und nicht mehr rund sind sondern eine U-Form haben.

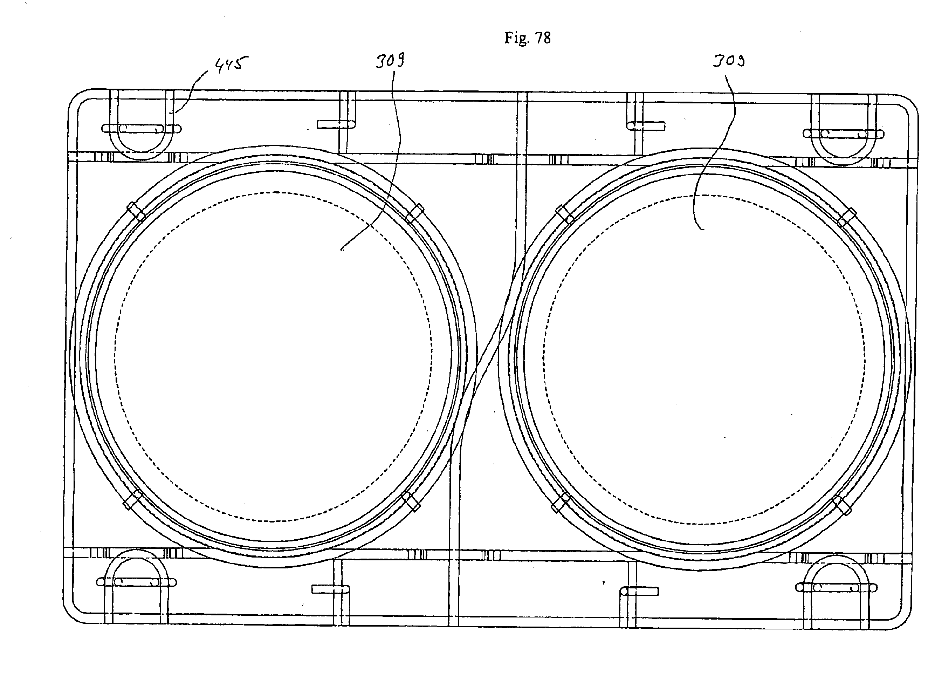

Figur 78 entspricht prinzipiell auch wieder Figur 59, wobei hier jedoch die um 90° gedreht und in Richtung Grundrahmen verschoben wurden. Notwendig war dies auf Grund des Platzbedarfs der flachen Teller 309, der keine Dome weiter innen duldet. Die Stapelringe haben sich in U-förmige Stapelelemente 445 verwandelt und sind oben auf dem Grundrahmen des Bodenteils angebracht. Die beiden Längsstreben, die zusammen mit der Querstrebe die Schalennester halten weisen je drei Vertiefungen auf, welche, wie schon bei den andren Bodenteilen, zum Abstützen gedacht sind, falls die Gewichtskraft eines Stapels die Streben des untersten Bodenteils verbiegen wollte.

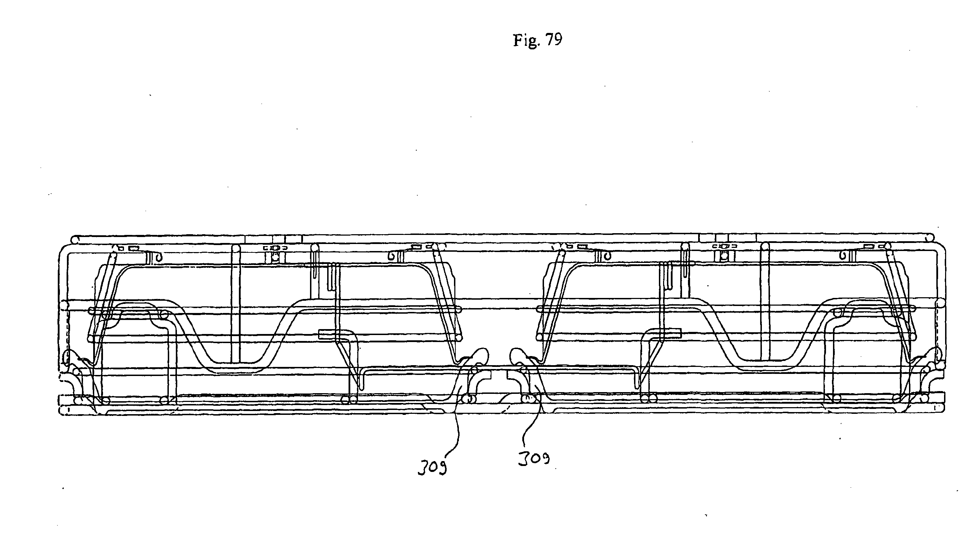

Figur 79 zeigt einen Längsschnitt des erfindungsgemäßen Behältnisses für zwei flache Rundteller 309 im geschlossenen Zustand.

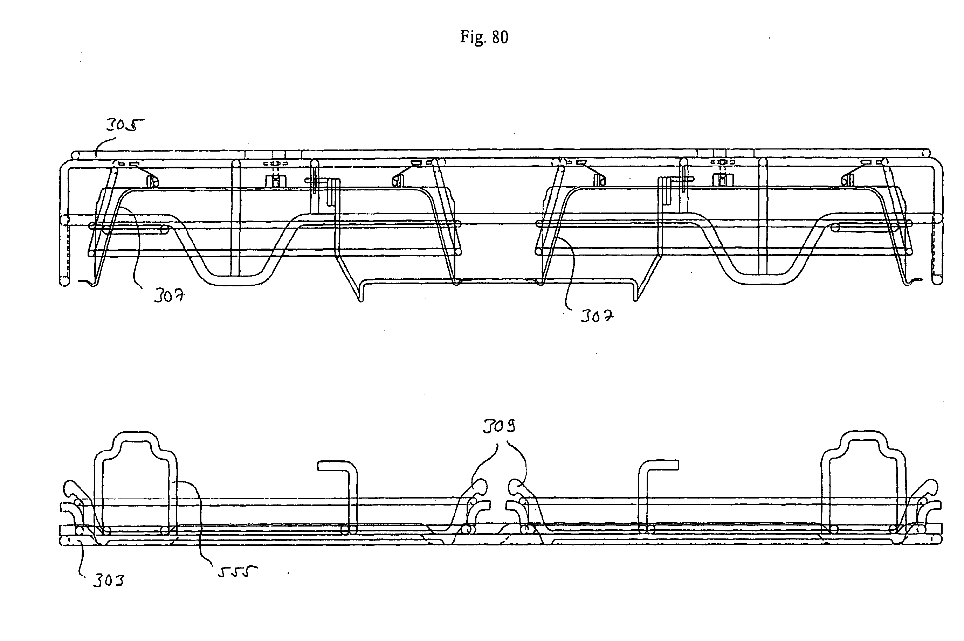

Figur 80 zeigt Figur 79 im geöffneten Zustand. Hier sind deutlich die hohe Dichtungskomponente 307 zu erkennen, die dem flachen Teller 309 den nötigen Stauraum verschaffen, die unteren Teilstücke des Grundrahmens des Deckelteils 305, die für die Stapelung verantwortlich zeichnen, die um gegenüber der anderen Bodenteile 303 um 90° gedrehten Dome 555 mitsamt deren Stapelelementen, die niedrigen Menüteller, die ganz kurz aufgehängt sind, was über die Länge der Verbindungsstücke zwischen der oberen und unteren Ebene der Schalennester definiert wird und die nach unten gehenden Vertiefungen, die für die notwendige Abstützung sorgen.

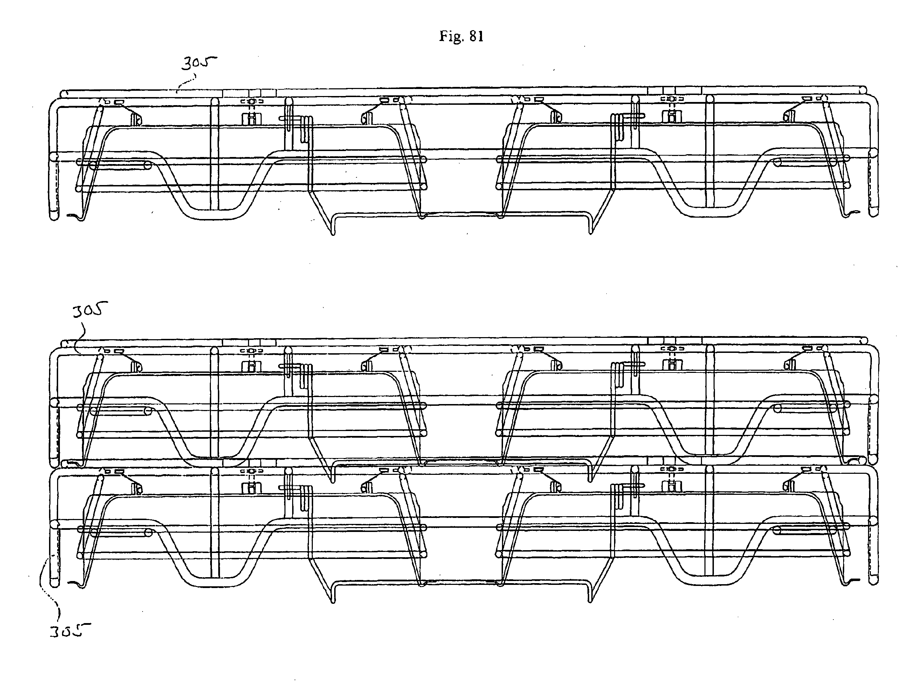

In Figur 81 ist das Deckelteil 305 von Figur 80 im gestapelten Zustand zu sehen. Wieder stülpen sich die unteren Teilstücke des oberen Grundrahmens über den Stapelrahmen des unteren Deckelteils 305, wodurch eine plane und rutschfreie Stapelung gewährleistet ist.

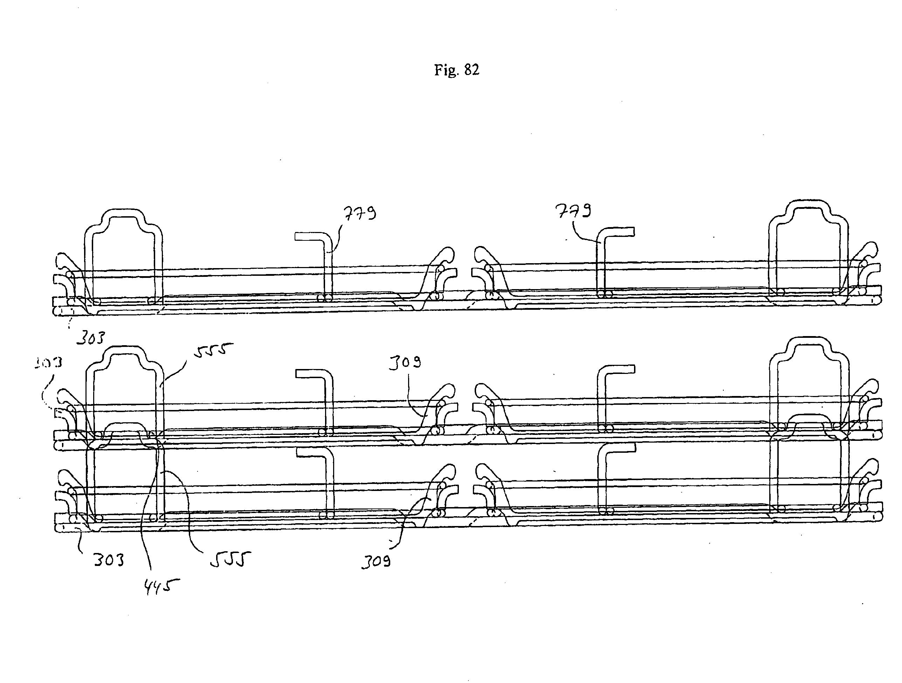

Beim Stapeln von Bodenteil 303 auf Bodenteil 303, jeweils mit eingehängtem Menüteller, wie es in Figur 82 dargestellt ist, gilt das gleiche Prinzip wie bei allen anderen Bodenteilen 303, nämlich, dass die Stapelelemente 445 auf den Stufen der Dome 555 zum Liegen kommen und keinerlei Kontaktierung der eingesetzten Rundteller 309 mit dem darüber befindlichen Bodenteil 303 stattfindet. Gut zu erkennen sind übrigens auch die Verschlussaufnahmen 779, in welche die Verschlussfedern 777 einschnappen.

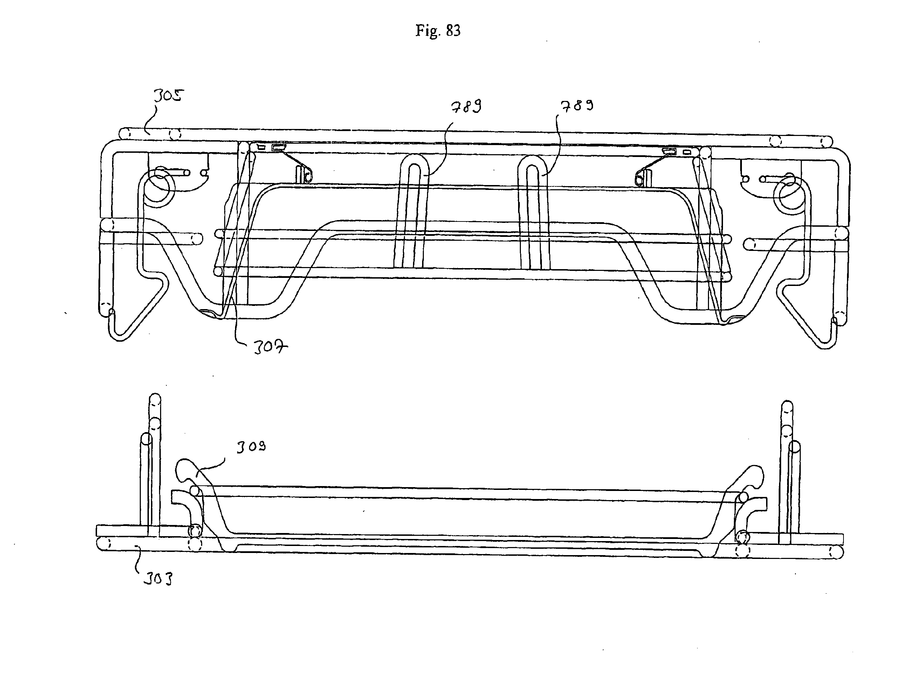

Figur 83 zeigt nun einen schematischen Querschnitt eines erfindungsgemäßen Behältnisses für zwei einzeln abzudeckende Rundteller 309 im geöffneten Zustand. Schön zu erkennen sind die Verbindungsstücke 789 der drei Nestebenen im Deckelteil 305. Im Gegensatz zu den Verbindungsstücken in den bisherigen Deckelteilen 305, sind diese Verbindungsstücke 789 nicht v-förmig sondern u-förmig. Der Grund liegt in der exakten Positionierung eines runden Elements. Die Dichtungskomponente 307 des Rundtellers 309 muss so ausgerichtet sein, dass die Druckausgleichsöffnung unter dem Verschließelement positioniert ist, damit beim Verschließen des Behältnisses diese Öffnung abgedichtet wird. Um das zu gewährleisten befinden sich an dieser Dichtungskomponente 307 exakt vier Arretierflügel, die in unterschiedlichen Abständen zueinander angeordnet sind. Als Gegenstück dazu gibt es vier u-förmige Verbindungselemente, die gleich den Arretierflügeln angeordnet sind, wobei mindestens zwei nicht mittig über den Arretierflügeln stehen, sonder aus der Mitte, so dass ein eingeschobener Arretierflügel die Wand des Verbindungsstückes 789 berührt. Der zweite Arretierflügel berührt ebenfalls die Wand seines Verbindungsstückes 789 allerdings nicht auf der selben Seite wie der erste Arretierflügel sondern auf der gegenüberliegenden. Somit ist eine Passung geschaffen, die die genaue Positionierung der Druckausgleichsöffnung und dem Verschließelement gewährleistet.

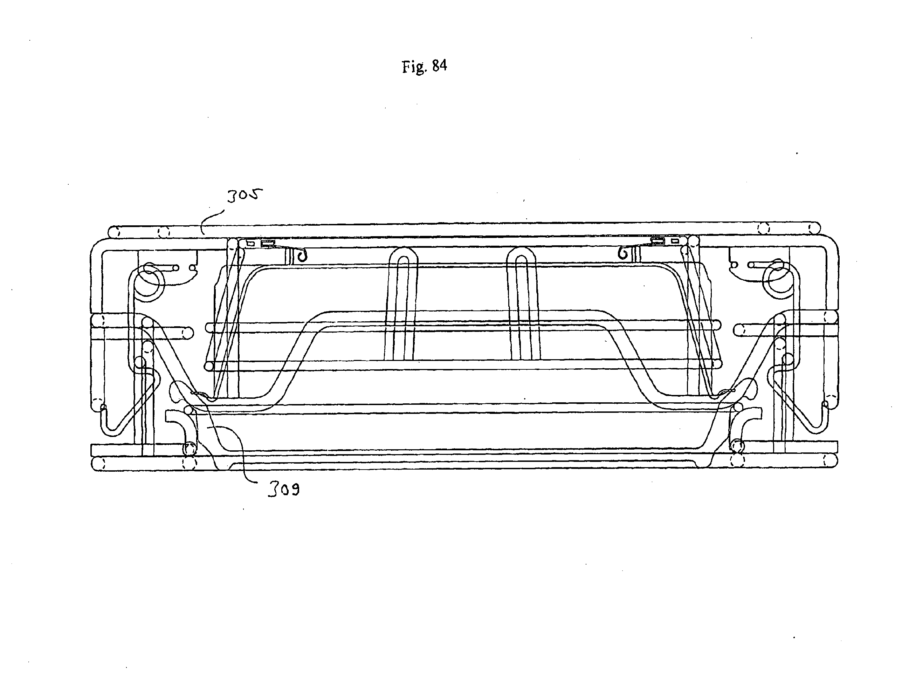

Der geschlossene Zustand von Figur 83 zeigt in Figur 84 noch mal deutlich die Form des Grundrahmens, der tiefere und höhere Teilstücke aufweist. Diese Segmentierung hat den Grund, dass vorne und hinten die Teller 309 soweit nach außen gehen, dass der tiefe Grundrahmen an dieser Stelle mit dem Tellerkopf kollidieren würde, was zu einer Zerstörung des Teller führen würde. Auf den beiden Seiten hat es wiederum den Grund, dass hier der Verschluss einschnappen und auch wieder geöffnet werden muss, so dass dieser tiefe Grundrahmen dem entgegenstehen würde. Andererseits benötigt man den tiefen Grundrahmen zum Stapeln. Bei den Deckelteilen 305 dieser erfindungsgemäßen Behältnisse wurde ein Weg gefunden, einen tiefen und einen hohen Grundrahmen zu verschmelzen.

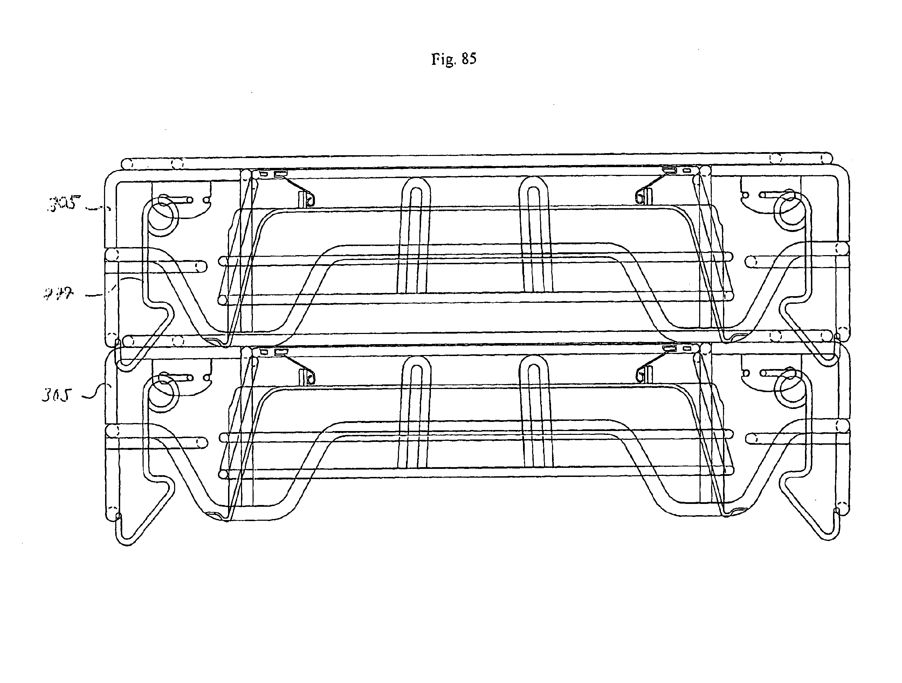

Die gestapelte Ansicht des Deckelteils von Figur 83 macht in Figur 85 noch einmal deutlich, dass die tiefen Teilstücke des oberen Grundrahmens über den Stapelrahmen des unteren Deckelteils 305 stapeln und die Ausbuchtung in diesem Stapelrahmen dafür sorgt, dass die Verschlussfeder 777 nicht aufgebogen wird.

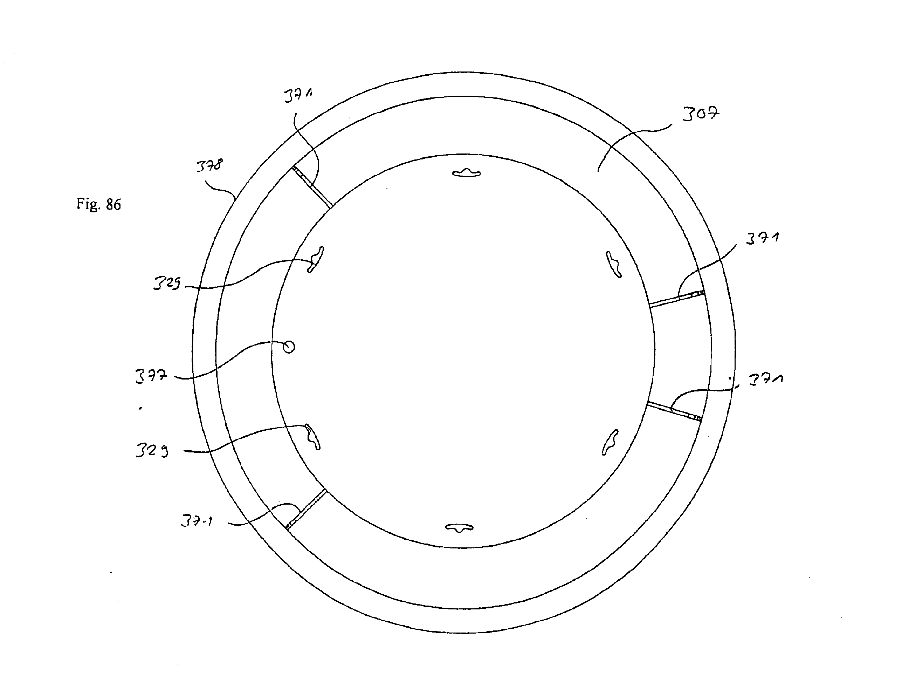

Figur 86 zeigt die Draufsicht einer Dichtungskomponente 307 für einen flachen Rundteller. Zu erkennen sind: Die vierArretierflügel 371, die Federaufnahmen 329 mit ihren, in der Mitte befindlichen und nach außen zeigenden Verdickungen, die die Feder beim Einschieben der Dichtungskomponente 307 in das Nest daran hindern sollen, sich auf der falschen Seite zu verklemmen, die Druckausgleichsöffnung 377 sowie die Dichtlippe 378.

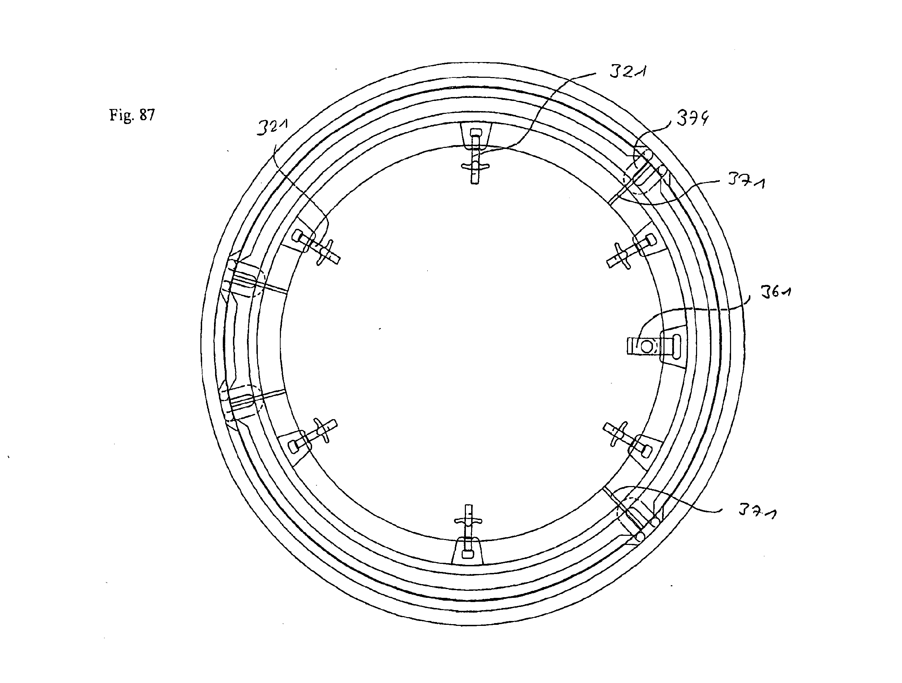

Figur 87 stellt die in Figur 86 beschriebene Dichtungskomponente mit angebrachtem Nest dar. Schön zu sehen sind die Blattfedern 321 samt Halterungen, das Verschließelement 361 samt Halterung sowie die Verbindungsstücke 374 des Nestes, die als Arretierung für die Arretierflügel 371 dienen, wobei hier auf einer Seite die Arretierflügel 371 nicht mittig greifen sondern jeweils am nach außen zeigenden Rand, wodurch eine Passung geschaffen wird, die die exakte Positionierung der Druckausgleichsöffnung 377 unter das Verschließelement 361 zur Folge hat.

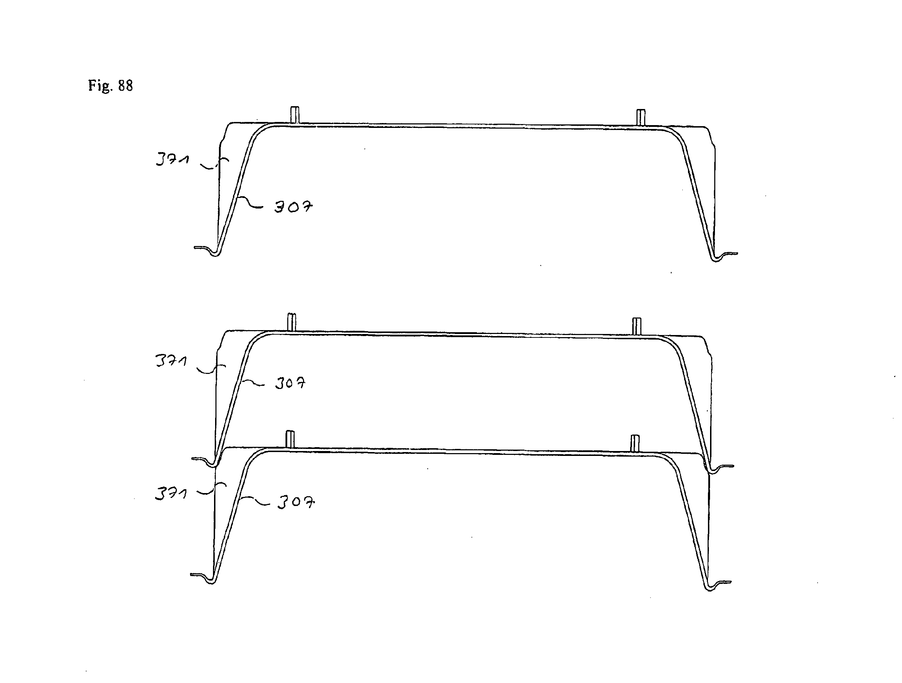

Figur 88 zeigt einen Schnitt durch die gestapelten Dichtungskomponenten 307 des erfindungsgemäßen Behältnisses für zwei flache Rundteller. Das Prinzip der Stapelung hat sich trotz des Höhenunterschieds zu den anderen Dichtungskomponenten 307 nicht geändert. Der untere Teil der Dichtungskomponente stapelt immer noch in die eigens dafür ausgeformten Aussparungen der Arretierflügel 371.

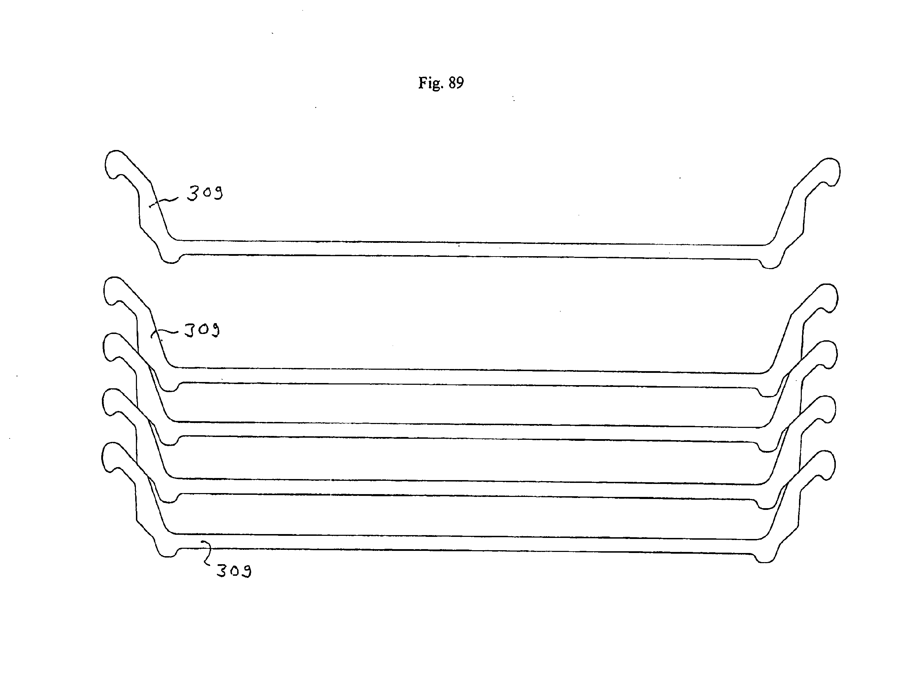

Mit Figur 89 wird bewiesen, dass das Stapelprinzip der Schalen 309 auf jede Schalenhöhe anzuwenden ist. Es muss nur gelten, dass eine Stapelstufe vorhanden ist, die am unteren Rand genau den gleichen Winkel aufweist wie ihn der Schalen/Tellerhals hat.

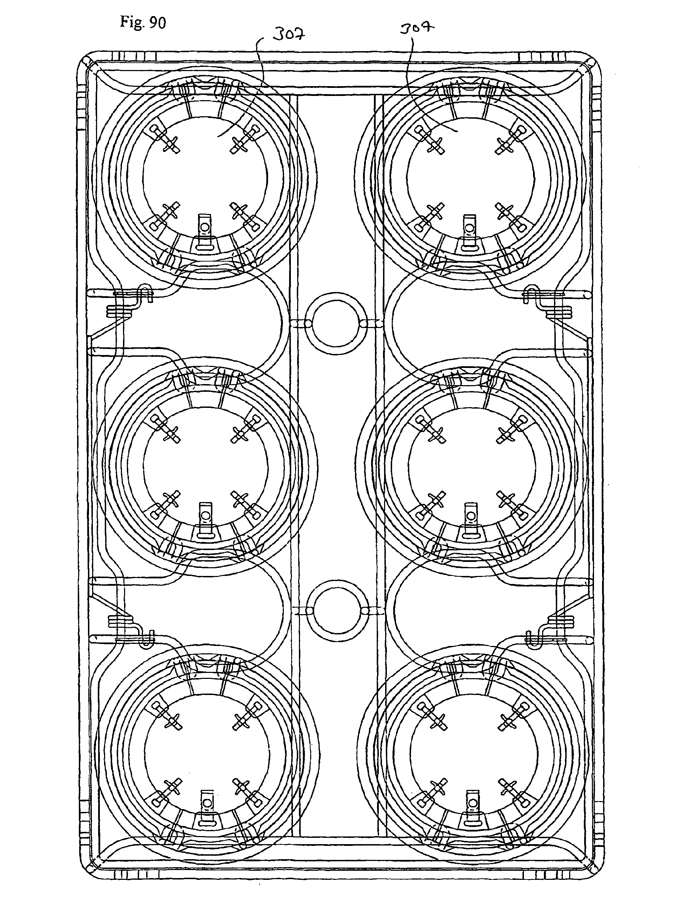

In den Figuren 90 bis 94 ist ein erfindungsgemäßes Behältnis für Beilagenschalen dargestellt.

Figur 90 entspricht im wesentlichen Figur 70, bis auf den Stapelrand, der nicht mehr nur eine Einbuchtung pro Seite hat, sondern zwei. Weiterhin können in dieses Deckelteil sechs kleine, runde Dichtungskomponenten 307 eingebracht werden, die wiederum sechs kleine, runde Menüschälchen abdecken.

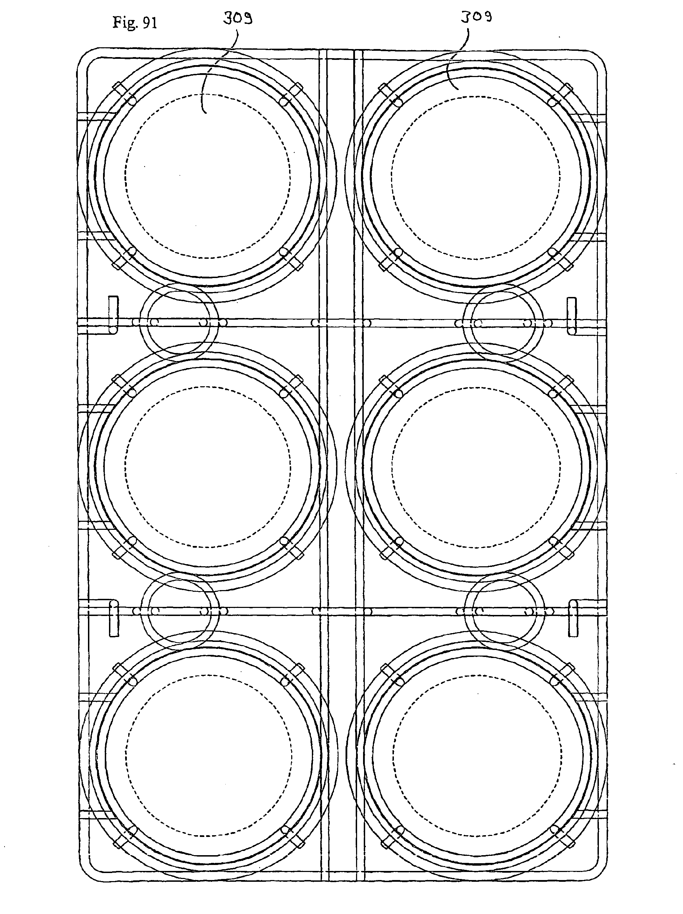

Figur 91 gleicht Figur 71 vollständig, bis auf die nun eingehängten kleinen, runden Menüschälchen 309.

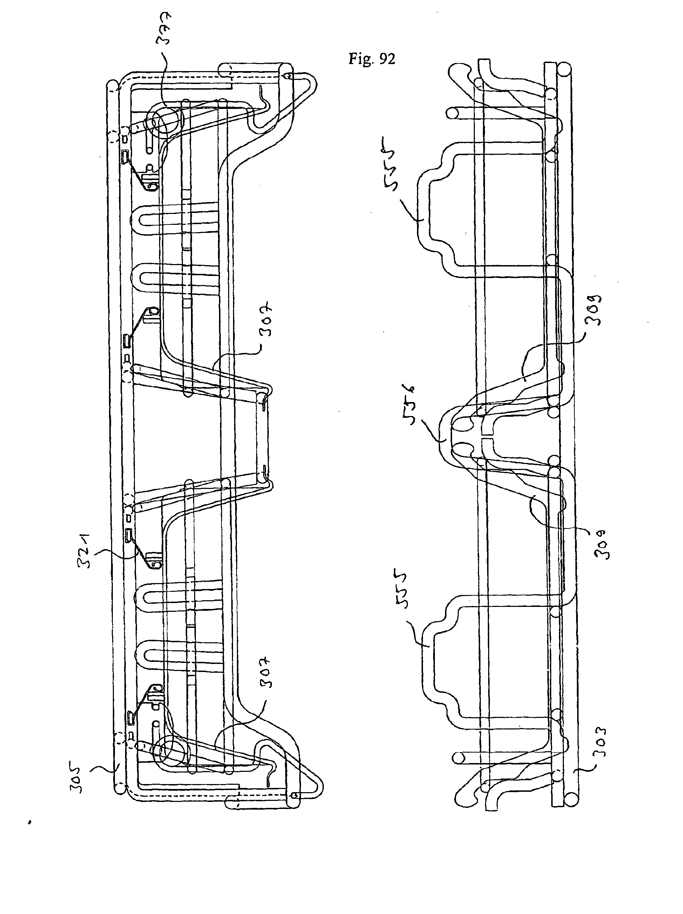

Figur 92 zeigt eine Querschnittsansicht des erfindungsgemäßen Behältnisses für sechs klein, runde Menüschälchen 309 im offenen Zustand. Im Deckelteil 305 sind in den Nestern die gleichen Verbindungsstreben zu sehen, die schon bei den Nestern für die Dichtungskomponenten 307 des großen Rundtellers 309 verwendet wurden.

Das Prinzip ist auch hier analog anzuwenden. Auf Grund der runden Form der Dichtungskomponente 307 muss gewährleistet sein, dass die Druckausgleichsöffnung unter dem Verschließelement zum Liegen kommt, damit diese Öffnung beim Verschließen des Behältnisses abgedichtet wird. Ferner sind die aufgehängten Einführringe, die haltenden Blattfedern 321, die Verschlussfedern 377 samt Halterungen sowie am Bodenteil 303 die Schalennester samt Verbindungsstücken, die die Schale halten und nicht hin und her rutschen lassen, die Verschlussaufnahmen sowie die geformte Querstrebe, die die beiden Dome 555 sowie den Arretierturm 556 ausbildet und außerdem noch als Abstützung nach unten dient.

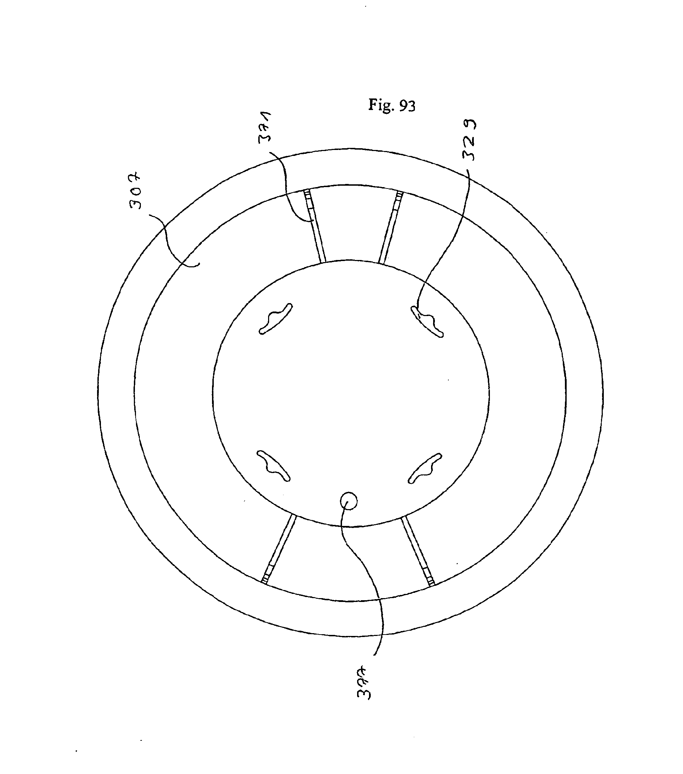

Figur 93 zeigt eine Draufsicht auf eine Dichtungskomponente 307 für ein kleines, rundes Menüschälchen, wobei die vier Arretierflügel 371, die Federaufnahmen 329, die Druckausgleichsöffnung 377 und die Dichtlippe zu sehen sind.

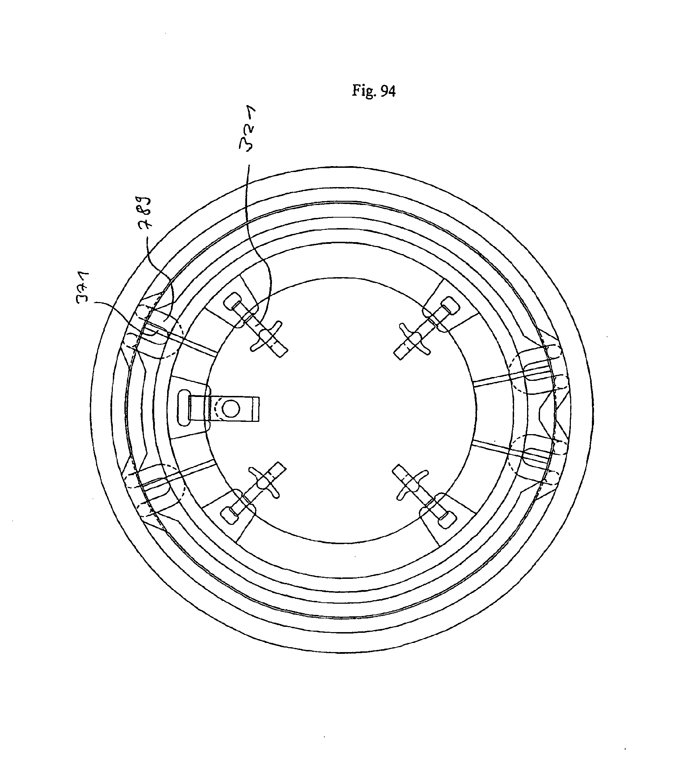

Figur 94 zeigt die Draufsicht von Figur 93 nun mit angebrachter Nestaufnahme. Gut zu erkennen sind die drei Ebenen der Nestaufnahme, wobei die untere und die mittlere Ebene zur Arretierung und die obere Ebene in Zusammenarbeit mit den Blattfedern 321 zum dreidimensionalen Ausgleich da sind. Im Gegensatz zur mittleren Ebene bei den großen und kleinen Menüschalen, hat diese mittlere Ebene außerhalb der u-förmigen Verbindungsstücke 789 einen Rücksprung nach Innen. Dieser Rücksprung ist deshalb so wichtig, weil er verhindert, dass die Arretierflügel 371 außerhalb ihrer angestammten Position eingeschoben werden können. Diese Vorkehrung zusammen mit den u-förmigen Verbindungsstücken 789, die mit den Arretierflügeln 371 eine Passung haben, ist ein hundertprozentig richtiges Einsetzen der Dichtungskomponente 307 gewährleistet.

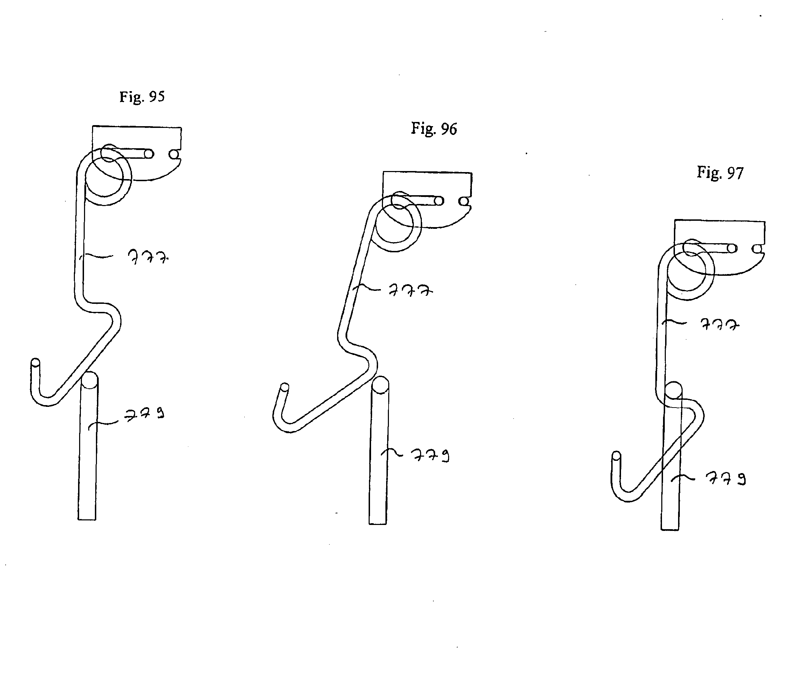

Die Figuren 95 bis 97 erläutern die Funktionalität des Federverschlusses für die zum Kühlen, Transportieren, Regenerieren und Servieren geeigneten erfindungsgemäßen Behältnisse. Wenn der Deckelteil auf das Bodenteil aufgesetzt wird, so kontaktieren Federverschluss 777 und Verschlussaufnahme 779 (Figur 95). Durch die Zuführung weiterer Kraft, biegt sich nun der Federverschluss 777 auf Grund seiner Winkelstellung nach außen, bis die Spitze des Verschlusses an der Verschlussaufnahme 779 ansteht (Figur 96). Durch einen weiteren kleinen Druck schnappt der Verschluss 777 unter die Verschlussaufnahme 779 ein und das Behältnis ist verschlossen (Figur 97).

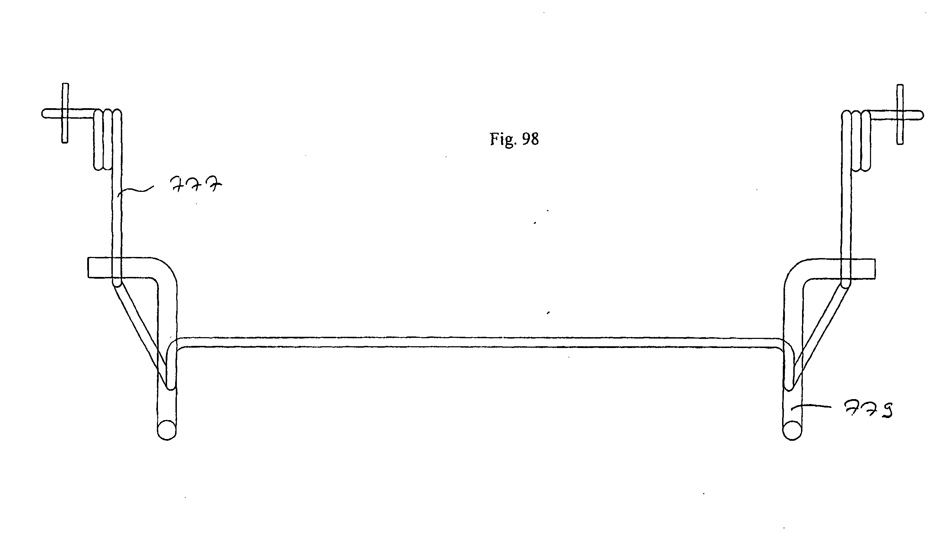

Durch die etwas nach oben gebogene Verbindung zwischen den zwei eigentlichen Verschlussfederteilen (Figur 98) ist auch das Öffnen wieder ein Leichtes, denn die Verschlussfeder 777 muss nur an dieser Verbindung nach außen gezogen werden bis die Spitze an der Verschlussaufnahme 779 vorbei ist und die Federkraft in den Blattfedern der Dichtungskomponente sorgt dafür, dass diese nach unten gedrückt und das restliche Deckelteil somit nach oben gedrückt wird. Das Behältnis ist offen und das Deckelteil kann abgenommen werden.

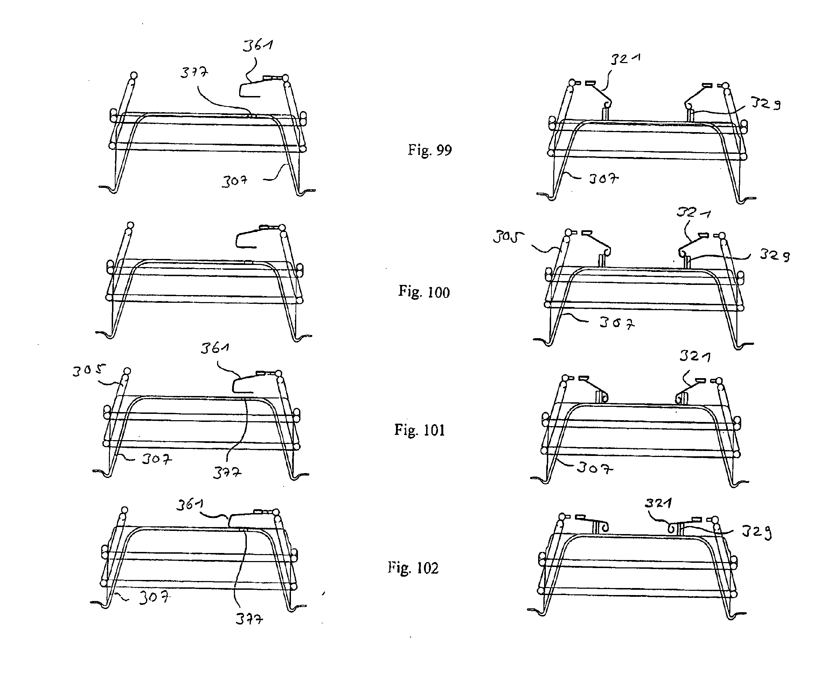

In den Figuren 99 bis 102 ist der Ablauf des Ausgleichs der Dichtungskomponente 307 sowie der Verschluss der Druckausgleichsöffnung zu sehen.

Figur 99 zeigt den komplett offenen Zustand, in dem noch keine Dichtungskomponente 307 in die dafür vorgesehenen Blattfedern 321 eingehängt wurde. Die Federaufnahmen 329 drücken von unten an die Bäuche der Blattfedern 321 und schieben diese langsam nach oben, wobei die Verdickungen der Federaufnahmen 329 dafür sorgen, dass die Blattfeder 321 nicht auf der falschen Seite verklemmen kann. In Figur 100 ist dann langsam der Punkt erreicht, wo die Blattfedern 321 soweit nach oben geschoben worden sind, dass die Innenseiten der Federaufnahmen 329 an den Bäuchen der Blattfedern 321 vorbeischieben. Nun lässt man die Dichtungskomponente 307 los und kann den Deckel 305 umdrehen. Die Dichtungskomponente 307 wird sich etwas nach unten bewegen bevor sie zum Stillstand kommt und von den Blattfedern 321 getragen wird. In Figur 101 befindet sich die Dichtungskomponente 307 in ihrem eingehängten Zustand, wobei hier die Bäuche der Blattfedern 321 etwas eingedrückt sind, was einen nicht zu geringen Federdruck hervorbringt, der aber zusätzlich zu dem Federdruck ist, den die Blattfeder 321 aufbringt, um ihre ursprüngliche Stellung wieder einzunehmen. In diesem Stadium befindet sich das Verschließelement 361 noch ca. 3 mm von der Öffnung 377 entfernt. Wird nun ein Deckelteil 305 mitsamt der Dichtungskomponente 307 auf ein nicht gezeigtes Bodenteil mit eingesetzter Schale aufgesetzt und nach unten gedrückt, so biegen sich die Blattfedern 321 nach oben und das Verschließelement 361 nähert sich der Öffnung 377 an. Zirka 2 mm bevor das Behältnis in den geschlossenen Zustand übergeht liegt das Verschließelement 361 auf der Druckausgleichsöffnung 377 auf und bleibt auch für die nächsten 2 mm dort liegen und biegt sich nur nach oben, was den Druck auf diese Öffnung 377 verstärkt. Ist das Behältnis in den geschlossenen Zustand über gegangen, wie in Figur 102 gezeigt, so wirken vor allem vertikale Drücke auf die Oberkante der Federaufnahmen 329 und sorgen so für einen dreidimensionalen Ausgleich. Somit ist die Dichtungskomponente 307 durch die Federn 321 in der Position von Figur 102 schwimmend gelagert. Die Druckausgleichsöffnung 377 ist in diesem Stadium abgedichtet, allerdings nicht so fest, dass ein evtl. auftretender Überdruck nicht abgebaut werden könnte.

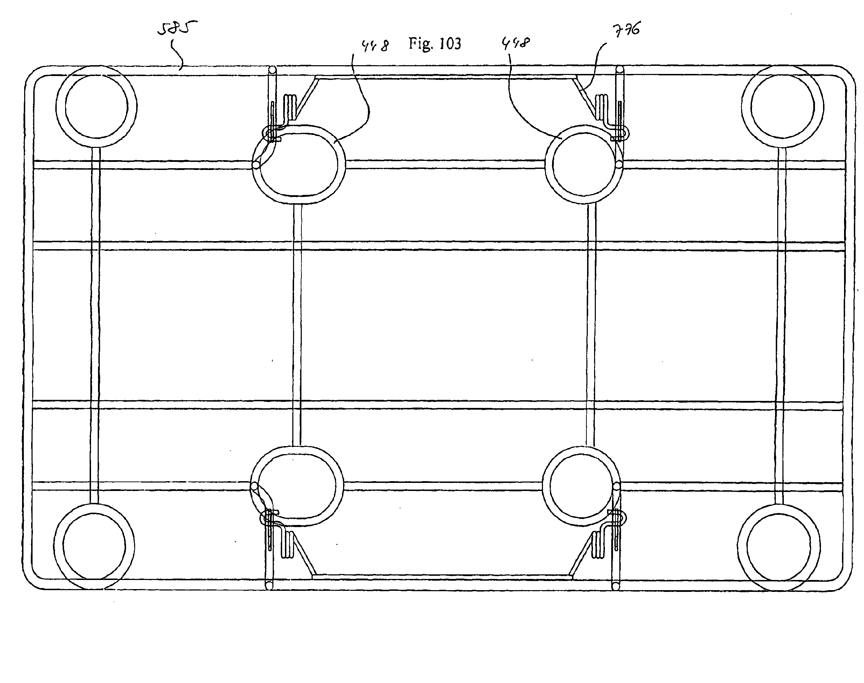

In der Figur 103 ist ein universal einsetzbarer Spülrost 585 zu sehen, der zur Abdeckung jeglicher Bodenteile 303 mit eingesetzten Menüschalen dient, damit die eingesetzten Menüschalen während eines Spülvorganges nicht herausfallen können Die Ringaufnahmen 448 stapeln in die Dome der Bodenteile 303 und über die angebrachten Federverschlüsse 776 ist der Spülrost fest mit dem Bodenteil verbunden.

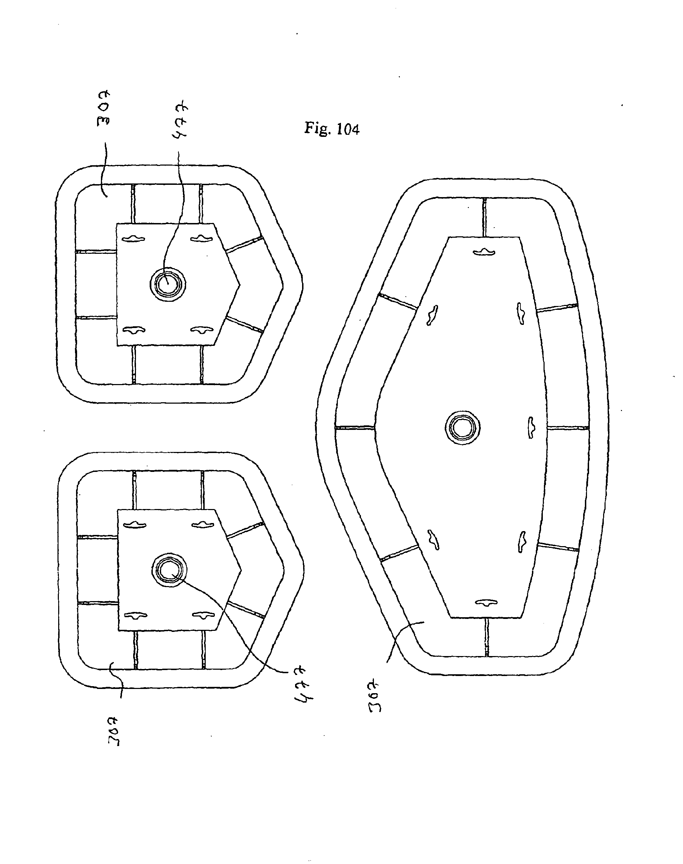

Figur 104 zeigt einen Satz Dichtungskomponenten 307, der zur Vakuumierung geeignet ist. Selbstverständlich ist das Vakuumieren auch mit den runden Dichtungskomponenten möglich. Die Druckausgleichsöffnungen wurden durch Vakuumieröffnungen 477 ersetzt.

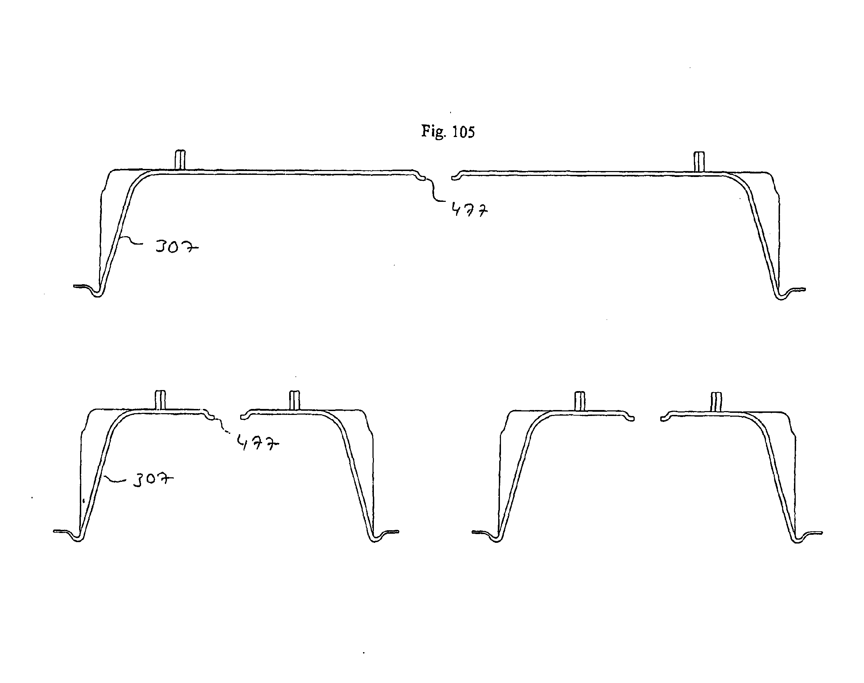

Figur 105 zeigt einen Schnitt durch den vakuumierfähigen Satz Dichtungskomponenten 307, wobei die Vakuumieröffnungen 477 eine Vertiefung aufweist, in welche ein elastisches Abdichtelement 295 eingebracht werden kann.

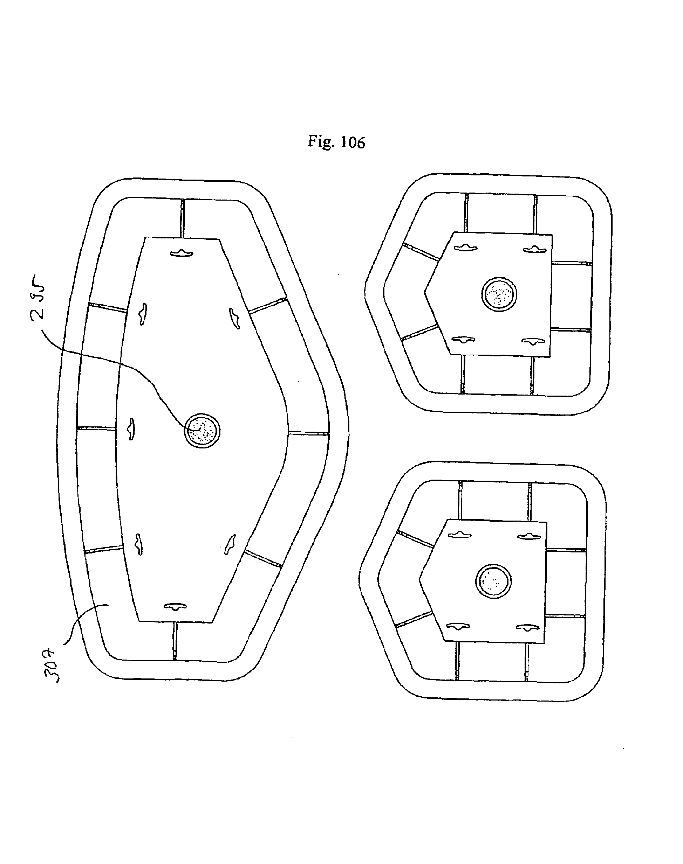

Figur 106 zeigt den Satz Dichtungskomponenten aus Figur 104 mit eingelegten elastischen Abdichtelementen 295.

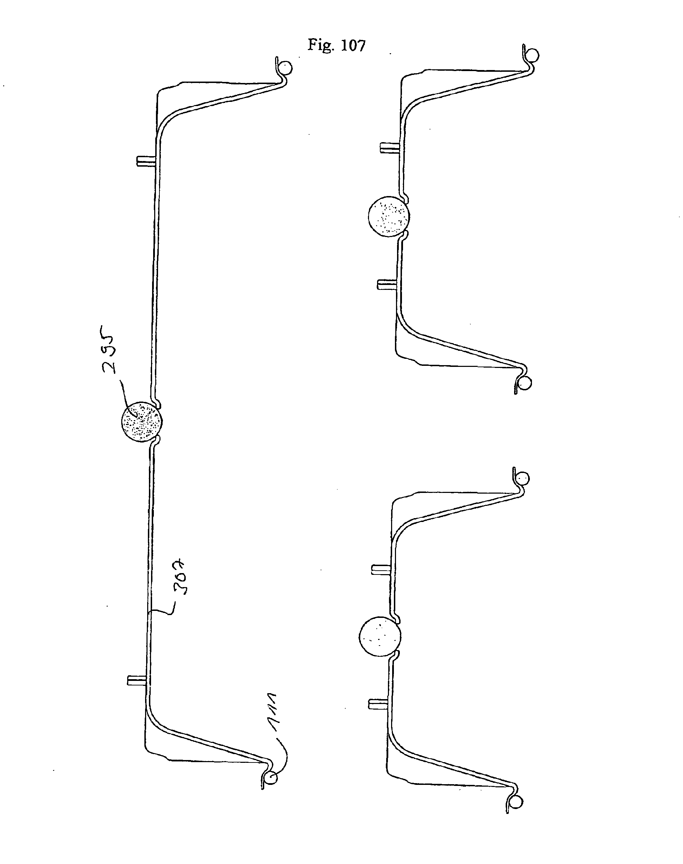

Figur 107 zeigt den Schnitt von Figur 105 nur mit eingelegten oberen elastischen Abdichtelementen 295 und unter die Dichtlippe gespannten umlaufenden Abdichtelementen 111.

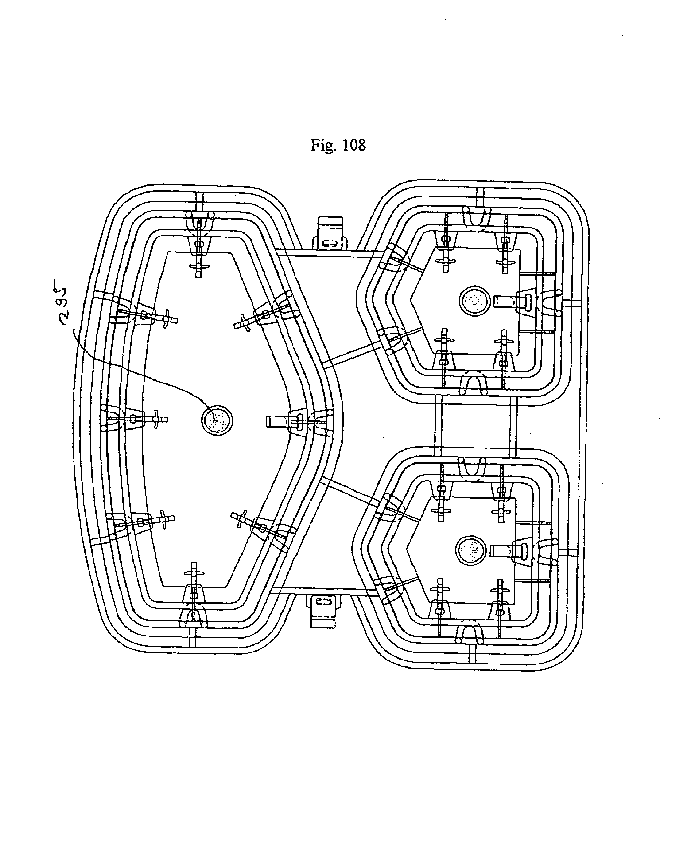

Figur 108 zeigt, dass das Vakuumieren durch die Gitterstruktur hindurch erfolgen kann.

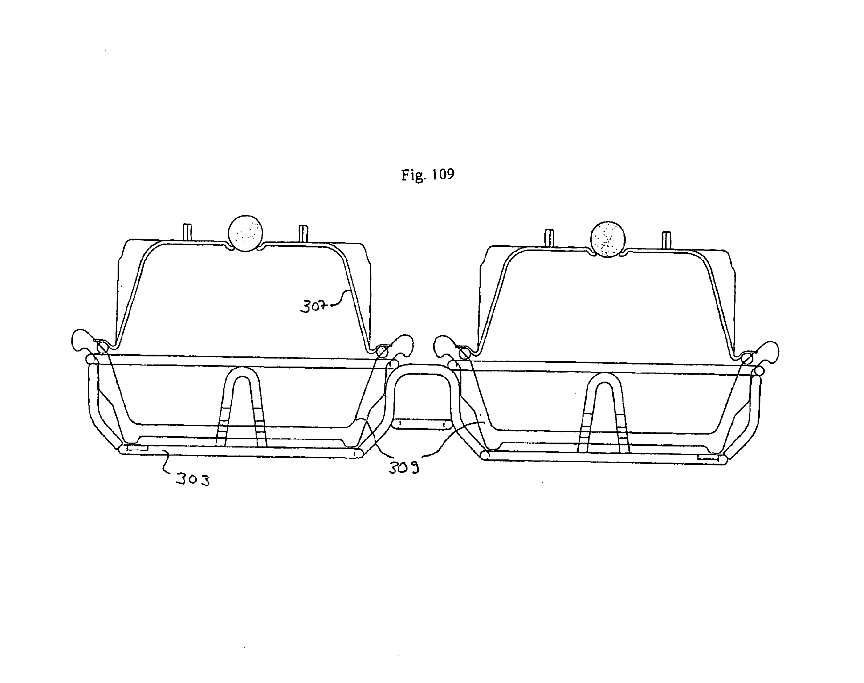

In Figur 109 wird verdeutlicht, dass ein Bodenteil 303 mit eingesetzten Schalen 309 und nur daran angebrachten Dichtungskomponenten 307 vakuumiert und weitergegeben werden kann. Das Deckelteil würde hierbei entfallen, da der Unterdruck die Dichtungskomponente 307 so stark an die Menüschale 309 drückt, dass ein versehentliches Öffnen ausgeschlossen werden kann.

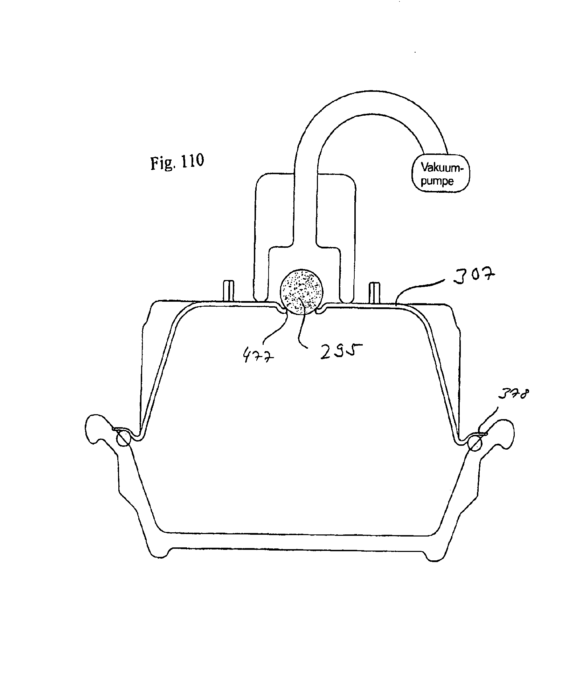

In Figur 110 wird der Vorgang des Vakuumierens beschrieben. Die über dem, mit dem elastischen Abdichtelement 295 eingebrachten Vakuumierloch befindliche Vakuumierpumpe zieht die Luft aus dem Behältnis. Sobald die Vakuumierpumpe vom Loch entfernt wird. Sorgt der Luftdruck dafür, dass das obere elastische Abdichtelement 295 in das Vakuumierloch 477 eingepresst wird und dieses vakuumdicht verschließt. Die Dichtlippe der Dichtungskomponente würde ebenfalls stark beansprucht werden. Bei einer evtl. auftretenden Überbeanspruchung kann ein umlaufendes Abdichtelement unter die Dichtlippe 378 gespannt werden, die den Druck auf die Dichtlippe abfängt. Das Gefäß ist vakuumiert.

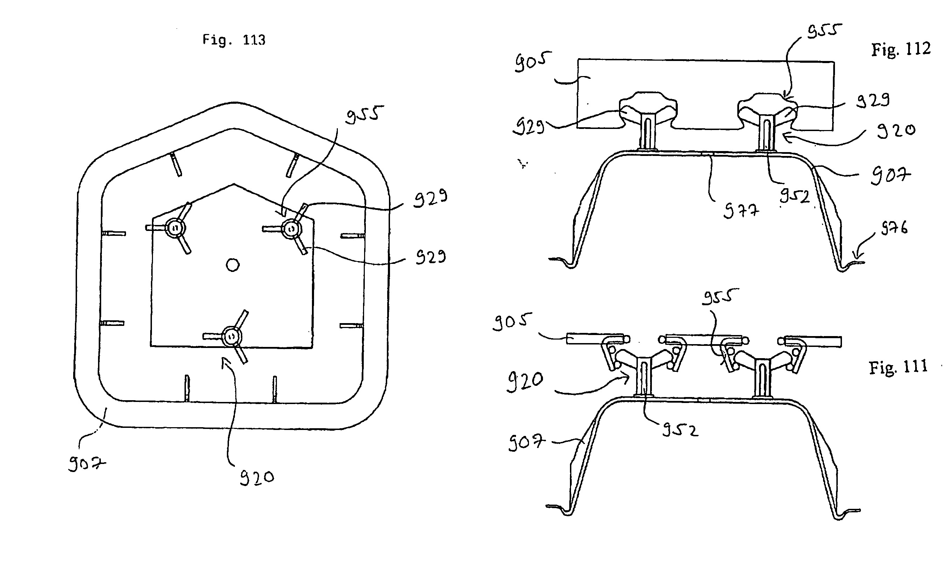

In den Figuren 111 bis 113 ist eine weitere Ausführungsform der Erfindung mit Arretierflügeln 929 als Teil der Ausgleichseinrichtung beschrieben.

Figur 111 zeigt eine schematische Draufsicht auf eine Dichtungskomponente 907 eines erfindungsgemäßen Behältnisses. Zu erkennen sind die Arretierflügel 929, das Druckausgleichsloch 977 und die auf der Oberseite befindlichen Ausgleichseinrichtungen 920, welche je drei Flügel 929 aufweisen, die wiederum beim Einhängen in das jeweilige Deckelelement 905 zur Anwendung kommen. Die Ausgleichseinrichtung 920 ist durch einen Fortsatz 952 der Dichtungskomponente 907 an dieser aufsteckbar befestigt. Auf der Oberseite der Dichtungskomponente 907 ist mindestens eine Ausgleichseinrichtung 920 um einen ausreichenden Halt und die notwendige dreidimensionale Ausrichtung zu gewährleisten.

Figur 112 zeigt die Dichtungskomponente 907 von Figur 111 im, in ein aus geschäumtem Kunststoff bestehendes Deckelteil 905 eingehängten Zustand. Durch die Formgebung der Ausgleichseinrichtungsaufnahme 955 in diesem EPP Deckelteil 905, schnappen die Flügel 929 der Ausgleichseinrichtung 920beim Einbringen hinter die ausgeformte Verengung und sorgen dafür, dass die Dichtungskomponente 907 im geöffneten Zustand an dieser Verengung hängen bleibt. Wird das Deckelteil 905 auf ein Bodenteil aufgesetzt, so schieben sich diese Ausgleichselemente 920 weiter in die Aufnahme hinein, wodurch die obersten Punkte der Ausgleichsflügel 929 mit der Innenseite der Aufnahme 955 kontaktieren und somit einen Druck aufbauen. Ab dem Punkt der ersten Kontaktierung ist ein Hub von ca. 5 mm vorgesehen, bis das Behältnis den geschlossenen Zustand eingenommen hat. Während dieser Verschließphasen, werden die Ausgleichsflügel 929 nach unten gebogen und der entstehende Druck sorgt für den dreidimensionalen Angleich der Dichtlippe 976 an den Schalenhals. Im verschlossenen Zustand herrscht der größte Druck, vor allem vertikal nach unten wirkt und in Zusammenarbeit mit der Dichtlippe 976 für die angestrebte Dichtheit sorgt.

In Figur 113 ist das Schema aus Figur 112 zu sehen, allerdings diesmal in Verbindung mit einem Deckelteil aus einer Gitterstruktur. Die ausgeformten Ausgleichseinrichtungsaufnahmen 955 werden durch Drahtnester ersetzt, die jeweils aus drei miteinander verbundenen Ringen bestehen. Der unterste Ring dient hierbei als Haltering, welcher die Dichtungskomponente 907 im eingehängten, offenen Zustand auf Position hält. Der mittlere Ring ist aus Arretiergründen notwendig, da ein Verschieben des Ausgleichselementes 920 in jedwede Richtung nicht möglich sein darf. Der obere Ring stellt nun die Begrenzung dar, an welche sich die Flügel 929 des Ausgleichselementes 920 anpressen und so für den notwendigen Dichtdruck sorgen. Bei vielen Dichtungskomponenten 907 kann mit einer Ausgleichseinrichtung 920 gearbeitet werden, wobei auch einer höheren Anzahl nichts im Wege steht. Dabei ist das Ausgleichselement 920 vorzugsweise aus einem elastischen Material hergestellt, insbesondere aus Silikon.

Nun wird der Verriegelungsmechanismus für das erfindungsgemäße Behältnis beschrieben, wobei das Deckelteil und das Bodenteil aus geschäumtem Kunststoff, insbesondere aus EPP, geformt sind, um eine stundenlange Isolation zu gewährleisten. Dieser Verriegelungsmechanismus beinhaltet zwei Bügel, wobei je einer am Boden- und am Deckelteil mittels Verklemmung in dafür vorgesehenen Sockeln, befestigt ist. Diese Sockel sorgen für den notwendigen Abstand der Bügel zur Oberfläche, damit diese Behältnisteile ohne vorheriges Zerlegen vollständig von Verunreinigungen abspülbar sind. An den nach unten bzw. nach oben führenden Enden dieser Bügel, ist im Falle des Deckelteils ein Hebelverschluss angebacht und im Falle des Bodenteils eine ausgeformte Hebelverschlussaufnahme. Beim Zusammenführen von Deckel- und Bodenteil kommt es beim Einschnappen des Hebelverschlusses in die dafür vorgesehene Aufnahme zum Verschluss und zur Abdichtung.

Nun wird das Einbringen der Verschlussfeder in die dafür vorgesehene Halterung erläutert. Der Verschluss, der sämtlich Transportroste verschließt, ist komplett aus Federdraht. Um einem Federdraht eine Federwirkung zu entlocken muss man ihn deformieren, so dass er versucht in seinen ursprünglichen Zustand zurückzukehren. Der Federdraht hat am rechten und linken Ende jeweils einen offenen Bogen. Wenn die Verschlussfeder senkrecht steht (Figur 95 bzw. 98), dann zeigt dieser Bogen nach außen, wobei der Teil mit dem Endstück des Federdrahtes unten ist und nach innen geht. Um diesen Bogen nun in die Halterung einzubringen muss die Verschlussfeder so gekippt werden, dass der Bogen (auf beiden Seiten) durch das schlüssellochförmige Loch der Halterung durchrutscht. Nun kann die Verschlussfeder wieder senkrecht gestellt werden. Das Endstück des Bogens ist nun unten und muss mittels Kraftaufwand in die kleine Aussparung am hinteren Teil Halterung gebracht werden. Ist das geschafft, so steht der Federdraht unter Spannung und wird fortan versuchen, sobald er aufgebogen wird, in seinen ursprünglichen Zustand zurückzufinden.

Ferner kann die Einzelportionsschale mit den drei Kammern eine eigens dafür angefertigte Isolierung erhalten. Diese Isolierung stellt eine Warm- und Kalttrennung sicher und sorgt im Falle der Warmhaltung stundenlang für die von der HACCP geforderten Temperaturen. Die Transportroste haben alle das Maß GN 1/1. Hierfür sind Isolationsbehälter auf dem Markt verfügbar, die jederzeit eingesetzt werden können. Durch die geringen Stapelhöhen ist es oft möglich zwei Roste in einen Isolierbehälter zu stellen, der eigentlich nut für einen Rost konzipiert ist. Auch bei dieser Isolationsvariante ist ein stundenlanges Warmhalten nach HACCP sichergestellt.

Zusätzlich zu den in den Ansprüchen genannten Merkmalen zeigte es sich als vorteilhaft, dass die Federeinrichtung (220, 320) ein Federelement (220, 320), insbesondere aus Metall oder Kunststoff, umfasst, welches mit dem Deckelteil (205, 305) fest verbunden ist und eine Dichtungskomponentenaufnahme (221, 321) zur Aufnahme der Dichtungskomponente aufweist, wobei das Federelement insbesondere an einer Gitterstruktur des Deckelteils angebracht ist. Die Dichtungskomponentenaufnahme ist lösbar und/oder verschiebbar mit einer Federaufnahme (229, 329) der Dichtungskomponente in Eingriff bringbar, wobei die Federaufnahme der Dichtungskomponente insbesondere über eine Passung mit der Federeinrichtung verbunden ist. Die Federaufnahme (229, 329) der Dichtungskomponente ist im geschlossenen Zustand des Behältnisses schwimmend an der Federeinrichtung unter Ausbildung der Abdichtkraft gelagert. Ferner weist das Behältnis ein elastisches Abdichtelement (190, 295) auf, welches vorzugsweise scheibenförmig oder kugelförmig ausgebildet ist, und die Druckausgleichsöffnung (177, 977) der Dichtungskomponente (107, 907) abdichtet, um die Speiseunterbringungskammer zwischen der Dichtungskomponente (107, 907) und dem ersten Behältnisteil vakuumdicht zu versiegeln, nachdem durch die Druckausgleichsöffnung (177, 977) Luft aus der Speiseunterbringungskammer abgepumpt wurde, wobei das elastische Abdichtelement (190, 295) nach dem Absaugen der Luft durch das Vakuum in der Speiseunterbringungskammer die Druckausgleichsöffnung (177, 977) der Dichtungskomponente (107, 907) abdichtet. Ferner ist eine Metallinnenkomponente (110), die in Verbindung mit Induktion als kondensatverdunstend wirkt, zwischen der Dichtungskomponente (107) und dem ersten Behältnisteil (103) vorgesehen. Das Deckelteil (205) weist an den Verbindungsstellen zu der Dichtungskomponente Nestaufnahmen für die Ausgleichseinrichtung auf, welche die Dichtungskomponente mit dem Deckelteil verbindet, wobei die Gitterstruktur des Deckelteils mit zumindest einer Nestaufnahme verbunden ist, insbesondere verschweißt oder verklebt ist. Das Bodenteil und/oder das Deckelteil sind vollständig in Gitterstruktur ausgeführt, wobei das Bodenteil und/oder das Deckelteil vollständig aus CNS-gefertigten Metalldrähten ausgeführt sind. Die Ausgleichseinrichtung weist ein Verschließelement (120, 361) auf, welches beweglich und insbesondere verschiebbar gelagert ist, um eine Druckausgleichsöffnung der Dichtungskomponente abzudichten, durch welche überschüssige Luft aus einer Speiseunterbringungskammer entweichen kann, wenn die Dichtungskomponente mit dem Bodenteil verbunden ist. Ebenso kann die Federeinrichtung aus zumindest drei, vorzugsweise vier, Blattfedern (221, 321) aufgebaut sein, die lösbar mit einer Federaufnahme der Dichtungskomponente in Eingriff bringbar sind. Ferner ist zwischen dem Bodenteil und dem Deckelteil ein Verriegelungsmechanismus (370, 372) zum Abdichten und Verschließen des Behältnisses vorgesehen, welcher insbesondere einen Hebelverschluss aufweist, wobei der Verriegelungsmechanismus Führungen (370) zum Verschluss des Deckelteils auf dem Bodenteil aufweist.

## Patentansprüche

1. Behältnis für Speisen, insbesondere zum Servieren, Aufbewahren, Kühlen, Regenerieren und Transportieren von Speisen mit einem ersten Behältnisteil, insbesondere einem Bodenteil (3, 103, 203, 303) und/oder zumindest einer in dem Bodenteil eingestellten oder eingehängten Schale (9, 109, 209, 309) und einem zweiten Behältnisteil, insbesondere einem Deckelteil (5, 105, 205, 305, 905) und einer Dichtungskomponente (7, 107, 207, 307, 907) zum Abdichten von zumindest dem ersten der beiden Behältnisteile,
**dadurch gekennzeichnet, dass**
eine Ausgleichseinrichtung (13, 120, 220, 320, 920) in Form eines Ausgleichselements (120, 920) ausgebildet ist, welches als Verbindung zwischen der Dichtungskomponente (7, 107, 207, 307, 907) und dem zweiten der beiden Behältnisteile vorgesehen ist und zumindest eine elastische Komponente, vorzugsweise eine Silikonkomponente, aufweist, die an der Dichtungskomponente (7, 107, 207, 307, 907) oder dem zweiten Behältnisteil (105, 905) angebracht ist und mit einer entsprechenden Aufnahme an dem zweiten Behältnisteil (105, 905) oder der Dichtungskomponente (7, 107, 207, 307, 907) im Eingriff ist, wobei die elastische Komponente in ihrer vorgeformten Form eine Druckausgleichsöffnung (177, 377, 977) der Dichtungskomponente (7, 107, 207, 307, 907) nicht abdichtet, so dass überschüssige Luft aus der Speiseunterbringungskammer zwischen der Dichtungskomponente (7, 107, 207, 307, 907) und dem ersten Behältnisteil entweichen kann, und wobei die elastische Komponente von einem Fortsatz (152, 952) des zweiten Behältnisteils unter Einwirkung einer Kraft derart verformbar ist, dass die Druckausgleichsöffnung (177, 377, 977) der Dichtungskomponente (7, 107, 207, 307, 907) vollständig abgedichtet wird, wobei die Ausgleichseinrichtung (13, 120, 220, 320, 920) mit der Dichtungskomponente (7, 107, 207, 307, 907) und den beiden Behältnisteilen derart zusammenwirkt, dass die Position und/oder der Anpressdruck der Dichtungskomponente (7, 107, 207, 307, 907) relativ zu zumindest dem ersten der beiden Behältnisteile zum Ausgleich von Undichtigkeiten anpassbar ist, um die in dem ersten Behältnisteil enthaltenen Speisen nach außen abzudichten.

2. Behältnis nach Anspruch 1, wobei die Ausgleichseinrichtung (13, 120, 220, 320, 920) die Position und/oder den Anpressdruck der Dichtungskomponente (7, 107, 207, 307, 907) relativ zu zumindest dem ersten der beiden Behältnisteile dadurch variiert, dass die Dichtungskomponente (7, 107, 207, 307, 907) durch die Ausgleichseinrichtung (13, 120, 220, 320, 920) im geschlossenen Zustand variabel mit dem Deckelteil (5, 105, 205, 305, 905) verbunden ist, insbesondere an dem Deckelteil (5, 105, 205, 305, 905) variabel aufgehängt ist, und/oder eine Abdichtung zwischen dem Rand der Dichtungskomponente (7, 107, 207, 307, 907) und dem Bodenteil (3, 103, 203, 303) oder der Schale (9, 109, 209, 309) dadurch vorgenommen wird, dass unter Ausbildung einer Abdichtkraft die Dichtungskomponente (7, 107, 207, 307, 907) durch die Ausgleichseinrichtung (13, 120, 220, 320, 920) an dem Bodenteil (3, 103, 203, 303) oder der Schale dichtend anliegt, wenn das Deckelteil (5, 105, 205, 305, 905) an dem Bodenteil (3, 103, 203, 303) arretiert ist.

3. Behältnis nach einem der Ansprüche 1 oder 2, **dadurch gekennzeichnet, dass** die Ausgleichseinrichtung (120, 220, 320) eine Federeinrichtung (120, 220, 320) umfasst, durch welche die Dichtungskomponente (107, 207, 307) zur Ausbildung der Abdichtkraft variabel an dem Deckelteil (105) anbringbar ist.

4. Behältnis nach einem der vorhergehenden Ansprüche 1 bis 3, **dadurch gekennzeichnet, dass** die elastische Komponente, vorzugsweise eine Feder (361) aus Metall oder Kunststoff, an dem Deckelteil vorgesehen ist, die im geschlossenen Zustand des Behältnisses eine Druckausgleichsöffnung (377) der Dichtungskomponente durch dessen elastische Eigenschaft abdichtet und/oder die elastische Komponente vorzugsweise drei oder vier Flügelelemente (121, 929) aufweist, welche mit entsprechenden Aussparungen der Dichtungskomponente (107, 907) oder des Deckelteils (105, 905) in Eingriff bringbar sind.

5. Behältnis nach einem der Ansprüche 1 bis 4, wobei die Dichtungskomponente zur Abdichtung des ersten Behältnisteils an deren umlaufenden Rand ein ringförmiges Abdichtungselement (111) aufnimmt, wobei die Dichtungskomponente das ringförmige Abdichtelement (111) vorzugsweise derart aufnimmt, dass dieses zwischen dem Rand der Dichtungskomponente (107) und einen sich von dem Rand der Dichtungskomponente (107) erstreckenden Schenkel (378, 976) vorgesehen ist, welcher sich an den Rand des ersten Behältnisteils anschmiegen kann.

6. Behältnis nach einem der Ansprüche 1 bis 5, **dadurch gekennzeichnet, dass** das Deckelteil (905) und das Bodenteil (903) aus geschäumtem Kunststoff, insbesondere EPP aufgebaut ist, um als Wärmeisolierung nach außen zu wirken, wobei vorzugsweise ein separater Verriegelungsmechanismus an dem geschäumten Kunststoff angeordnet ist, wobei der Verriegelungsmechanismus insbesondere eine feste umlaufende Struktur um das Behältnis umfasst.

7. Behältnis nach einem der Ansprüche 1 bis 5, wobei das Bodenteil (203, 303) und/oder das Deckelteil (205, 305) eine Gitterstruktur aufweist, so dass das Deckelteil und/oder das Bodenteil und die darin eingestellte Schale gemeinsam vollständig von Verunreinigungen abspülbar sind, wobei die Gitterstruktur vorzugsweise aus einem Metalldrahtaufbau oder Kunststoffgitter hergestellt ist.

8. Behältnis nach einem der Ansprüche 1 bis 7, wobei die Dichtungskomponente zur Abdichtung der Schale an dessen umlaufenden Rand eine Dichtlippe (378, 976) aufweist, an welche sich ein im wesentlichen U-förmiger Abschnitt anschließt und/oder die Dichtungskomponente (7) ein Materialscharnier (13) zum Ausgleich von Undichtigkeiten aufweist, wobei das Materialscharnier (13) insbesondere durch eine Querschnittsreduzierung erreicht wird, wobei die Dichtungskomponente (7) eine dornförmige Kontur mit Einfassungsrand aufweist, die in das Deckelteil (5) einbringbar ist und/oder die Schale zur Aufnahme der Speisen derart in das Bodenteil (3, 103, 203, 303, 903) eingehängt ist, dass die Schale (9, 109, 209, 309) schräge Auflageflächen mit im wesentlichen einem Winkel von 45° zur Horizontalen aufweist, um die Schale (9, 109, 209, 309) automatisch mittig in dem Bodenteil (3, 103, 203, 303, 903) bzw. Abschnitt des Bodenteils (3, 103, 203, 303, 903) zu positionieren.

9. Behältnis nach einem der Ansprüche 1 bis 8, **dadurch gekennzeichnet, dass** eine oder mehrere Schalen, insbesondere Porzellanschalen, derart in das Bodenteil (303) eingehängt sind, dass die Schale (309) in eingehängtem Zustand nach unten über das Bodenteil hinausragt und/oder mehrere Schalen (109, 209, 309) zur Aufnahme von Speisen in dem Bodenteil (3, 103, 203, 303) eingestellt oder eingehängt sind, wobei insbesondere das Bodenteil und/oder Deckelteil in GN-Norm¹/₁ ausgeführt sind.

10. Behältnis nach einem der Ansprüche 1 bis 9, wobei für jede Schale (9, 109, 209, 309) des Bodenteils (3, 103, 203, 303) jeweils eine Dichtungskomponente (7, 107, 207, 307) an dem Deckelteil (5, 105, 205, 305) angeordnet ist.

11. Behältnis nach einem der Ansprüche 1 bis 10, wobei die Bodenteile (303) mehrere im wesentlichen vertikal verlaufende Dornelemente (555) aufweisen, die beim Stapeln von mehreren Bodenteilen in Verbindung mit im wesentlichen horizontal verlaufenden Ringen (444) für eine Arretierung sorgen und die Dornelemente (555) des Bodenteils mit im wesentlichen horizontal verlaufenden Ringen des Deckelteils derart zusammenwirken, dass die Dornelemente des Bodenteils und die Ringe des Deckelteils als Führung beim Schließen des Deckelteils auf das Bodenteil wirken.

12. Behältnis nach einem der Ansprüche 1 bis 11, **dadurch gekennzeichnet, dass** ein Spülrost (585) unter Einwirkung eines Verriegelungsmechanismus auf ein Bodenteil mit darin eingehängten oder eingestellten Schalen derart aufbringbar ist, dass die Schalen durch den Spülrost während des Spülvorgangs am Herausfallen gehindert werden, wobei der Spülrost eine Gitterstruktur mit insbesondere darin untergebrachten Ringelementen zum Arretieren und Zentrieren von beliebigen Bodenteilen aufweist.

13. System bestehend aus einer Vielzahl von Behältnissen nach einem der Ansprüche 1 bis 12 zum Verteilen von Speisen,
**dadurch gekennzeichnet, dass**
jeweils mehrere Dichtungskomponenten, mehrere Deckelteile, mehrere Bodenteile sowie mehrere Deckelteile mit angebrachter Dichtungskomponente, mehrere Schalen, mehrere Bodenteile mit eingehängten Schalen sowie mehrere Bodenteile mit eingehängten und unterhalb des Bodenteils herausragenden Schalen übereinander stapelbar sind.

14. System nach Anspruch 13, **dadurch gekennzeichnet, dass** jeweils mehrere Behältnisse durch einen Formschluss stapelbar sind, insbesondere mit Hilfe von Stapelelementen oder Stapelplättchen, die jeweils in den Ecken eines Bodenteils angeordnet sind.

## Claims

1. A container for food, in particular for serving, storing, cooling, regenerating and transporting food, comprising a first container part, in particular a base part (3, 103, 203, 303) and/or at least one dish (9, 109, 209, 309) set or suspended in said base part, and a second container part, in particular a cover part (5, 105, 205, 305, 905) and a seal component (7, 107, 207, 307, 907) for sealing at least said first of said two container parts,
**characterised in that**
an equalising device (13, 120, 200, 320, 920) is made in the form of an equalising element (120, 920) which is provided as a connection between said seal component (7, 107, 207, 307, 907) and said second of said two container parts and which has at least one elastic component, preferably a silicone component which is affixed to said seal component (7, 107, 207, 307, 908) or to said second container part (105, 905) and engages with a corresponding receiver on said second container part (105, 905) or said seal component (7, 107, 207, 307, 907), said elastic component in its preformed form not sealing a pressure equalisation opening (177, 377, 977) of said seal component (7, 107, 207, 307, 907) so that excess air can escape from the food accommodating chamber between said seal component (7, 107, 207, 307, 907) and said first container part, and said elastic component being deformable by an extension (152, 952) of said second container part by the effect of a force such that said pressure equalisation opening (177, 377, 977) of said seal component (7, 107, 207, 307, 907) is completely sealed, said equalising device (13, 120, 220, 320, 920) co-operating with said seal component (7, 107, 207, 307, 907) and said two container parts such that the position and/or the contact pressure of said seal component (7, 107, 207, 307, 907) relative to at least said first of said two container parts can be matched for equalising leakages so as to seal said food contained in said first container part against the outside.

2. The container according to Claim 1, wherein said equalising device (13, 120, 220, 320, 920) varies the position and/or the contact pressure of said seal component (7, 107, 207, 307, 907) relative to at least said first of said two container parts, wherein said seal component (7, 107, 207, 307, 907) is connected variably to said cover part (5, 105, 205, 305, 905) by said equalising device (13, 120, 220, 320, 920) in the closed state, in particular being suspended variably on said cover part (5, 105, 205, 305, 905) and/or sealing being undertaken between the edge of said seal component (7, 107, 207, 307, 907) and said base part (3, 103, 203, 303) or said dish (9, 109, 209, 309) such that by forming a sealing force said seal component (7, 107, 207, 307, 907), by means of said equalising device (13, 120, 220, 320, 920), rests against said base part (3, 103, 203, 303) or said dish such as to form a seal when said cover part (5, 105, 205, 305, 905) is locked in said base part (3, 103, 203, 303).

3. The container according to either of Claims 1 or 2, said equalising device (120, 220, 320) comprises a spring device (120, 220, 320) by means of which said seal component (107, 207, 307) can be variably affixed to said cover part (105) in order to form the sealing force.

4. The container according to any of the preceding Claims 1 to 3, the elastic component, preferably a spring (361) made of metal or plastic, is provided on said cover part and in the closed state of said container seals a pressure equalisation opening (377) of said seal component by means of its elastic properties and/or said elastic component preferably has three or four wing elements (121, 929), which can be engaged with corresponding recesses of said seal component (107, 907) or of said cover part (105, 905).

5. The container according to any of Claims 1 to 4, wherein said seal component receives an annular sealing element (111) for sealing said first container part on its circumferential edge, wherein said seal component preferably receives said annular sealing element (111) such that the latter is provided between the edge of said seal component (107) and an axle journal (378, 976) extending from said edge of said seal component (107) and which can fit closely to the edge of said first container part.

6. The container according to any of Claims 1 to 5, said cover part (905) and said base part (903) are composed of foamed plastic, in particular EPP, in order to act as heat insulation to the outside, wherein a separate locking mechanism is preferably disposed at said foamed plastic, said locking mechanism comprising in particular a solid circumferential structure around said container.

7. The container according to any of Claims 1 to 5, wherein said base part (203, 303) and/or said cover part (205, 305) have a lattice structure so that said cover part and/or said base part and said dish set in the latter can be rinsed together so as to remove all contamination, wherein said lattice structure is preferably produced from a metal wire structure or a plastic lattice.

8. The container according to any of Claims 1 to 7, wherein said seal component has a sealing lip (378, 976) on its circumferential edge to seal said dish, to which a substantially U-shaped section is attached and/or said seal component (7) has a material hinge (13) for correcting leakages, wherein said material hinge (13) is achieved in particular by reducing the cross-section, said seal component (7) having a mandrel-shaped contour with a bordering edge which can be introduced into said cover part (5) and/or said dish for holding said food being mounted in said base part (3, 103, 203, 303, 903) such that said dish (9, 109, 209, 309) has inclined contact surfaces at an angle of substantially 45° to the horizontal in order to position said dish (9, 109, 209, 309) automatically in the centre of said base part (3, 103, 203, 303, 903) or section of said base part (3, 13, 203, 303, 903).

9. The container according to any of Claims 1 to 8, wherein one or more dishes, in particular porcelain dishes, are suspended in said base part (303) such that said dish (309) in the suspended state projects downwards beyond said base part and/or a number of dishes (109, 209, 309) for holding food are positioned or suspended in said base part (3, 103, 203, 303), in particular said base part and/or cover part being arranged according to GN standard 1/1.

10. The container according to any of Claims 1 to 9, wherein one seal component (7, 107, 207, 307) respectively is disposed on said cover part (5, 105, 205, 305) for each dish (9, 109, 209, 309) of said base part (3, 103, 203, 303).

11. The container according to any of Claims 1 to 10, wherein said base parts (303) have a number of mandrel elements (555) running substantially vertically, which provide locking when stacking a number of base parts in connection with substantially horizontally running rings (444) and wherein said mandrel elements (555) of said base part co-operate with substantially horizontally running rings of said cover part such that said mandrel elements of said base part and said rings of said cover part act as a guide when closing said cover part onto said base part.

12. The container according to any of Claims 1 to 11, a rinsing grid (585) can be affixed by the action of a locking mechanism to a base part with dishes suspended or set in the latter such that said dishes are prevented from falling out through said rinsing grid during the rinsing process, said rinsing grid having a lattice structure in particular with annular elements accommodated in the latter for locking and centring of any base parts.

13. A system consisting of a plurality of containers according to any of Claims 1 to 12 for distributing food,
**characterised in that**
respectively a number of seal components, a number of cover parts, a number of base parts and a number of cover parts with an affixed seal component, a number of dishes, a number of base parts with suspended dishes and a number of base parts with suspended dishes projecting below said base part can be stacked on top of one another.

14. The system according to Claim 13, wherein respectively a number of containers can be stacked by form closure, in particular with the aid of stacking elements or stacking dishes, which are disposed in the corners of a base part, respectively.

## Revendications

1. Récipient alimentaire, permettant notamment de servir, conserver, refroidir, régénérer et transporter des aliments, comportant une première partie de récipient, notamment une partie de fond (3, 103, 203, 303) et/ou au moins un réceptacle (9, 109, 209, 309) logé ou suspendu dans la partie de fond et une deuxième partie de récipient, notamment une partie de couvercle (5, 105, 205, 305, 905) et un composant d'étanchéité (7, 107, 207, 307, 907) servant à étancher au moins la première des deux parties de récipient,
**caractérisé en ce que**
il est conçu un dispositif de compensation (13, 120, 220, 320, 920) sous la forme d'un élément de compensation (120, 920) qui est prévu pour relier le composant d'étanchéité (7, 107, 207, 307, 907) et la deuxième des deux parties de récipient, et qui présente au moins un composant élastique, de préférence un composant en silicone, qui est disposé au niveau du composant d'étanchéité (7, 107, 207, 307, 907) ou de la deuxième partie de récipient (105, 905) et qui est engagé dans un logement adapté au niveau de la deuxième partie de récipient (105, 905) ou du composant d'étanchéité (7, 107, 207, 307, 907), le composant élastique, de préférence dans sa forme préformée, ne bouchant pas une ouverture de compensation de pression (177, 377, 977) du composant d'étanchéité (7, 107, 207, 307, 907) pour permettre à l'excédent d'air situé dans une chambre de mise en place d'aliments entre le composant d'étanchéité (7, 107, 207, 307, 907) et la première partie de récipient de s'échapper, et le composant élastique est déformable par un prolongement (152, 952) de la deuxième partie de récipient sous l'effet d'une force de telle manière que l'ouverture de compensation de pression (177, 377, 977) du composant d'étanchéité (7, 107, 207, 307, 907) soit totalement colmatée, le dispositif de compensation (13, 120, 220, 320, 920) coopérant avec le composant d'étanchéité (7, 107, 207, 307, 907) et les deux parties de récipient de manière que la position et/ou la pression d'écrasement du composant d'étanchéité (7, 107, 207, 307, 907) par rapport à au moins la première des deux parties de récipient soient réglables pour compenser toute fuite afin d'étancher vis-à-vis de l'extérieur les aliments contenus dans la première partie de récipient.

2. Récipient selon la revendication 1, dans lequel le dispositif de compensation (13, 120, 220, 320, 920) fait varier la position et/ou la pression d'écrasement du composant d'étanchéité (7, 107, 207, 307, 907) par rapport à au moins la première des deux parties de récipient grâce au fait que le composant d'étanchéité (7, 107, 207, 307, 907) est relié de façon variable à la partie de couvercle (5, 105, 205, 305, 905) par le biais du dispositif de compensation (13, 120, 220, 320, 920), dans l'état fermé, en étant notamment suspendu de façon variable à la partie de couvercle (5, 105, 205, 305, 905), et/ou un étanchement entre le bord du composant d'étanchéité (7, 107, 207, 307, 907) et la partie de fond (3, 103, 203, 303) ou le réceptacle (9, 109, 209, 309) est réalisé grâce au fait que, par la formation d'une force d'étanchéité, le composant d'étanchéité (7, 107, 207, 307, 907) repose, par le biais du dispositif de compensation (13, 120, 220, 320, 920), sur la partie de fond (3, 103, 203, 303) ou le réceptacle de manière étanche lorsque la partie de couvercle (5, 105, 205, 305, 905) est bloquée au niveau de la partie de fond (3, 103, 203, 303).

3. Récipient selon l'une des revendications 1 ou 2, **caractérisé en ce que** le dispositif de compensation (120, 220, 320) comprend un dispositif à ressort (120, 220, 320) permettant d'appliquer le composant d'étanchéité (107, 207, 307) de manière variable sur la partie de couvercle (105) pour constituer la force d'étanchéité.

4. Récipient selon l'une des revendications précédentes 1 à 3, **caractérisé en ce que** le composant élastique, de préférence un ressort (361) en métal ou en plastique, est prévu au niveau de la partie de couvercle, lequel ressort assure l'étanchéité, dans l'état fermé du récipient, d'une ouverture de compensation de pression (377) du composant d'étanchéité grâce à sa propriété d'élasticité et/ou le composant élastique présente de préférence trois ou quatre éléments d'aile (121, 929) qui peuvent s'engager dans des évidements adaptés du composant d'étanchéité (107, 907) ou de la partie de couvercle (105, 905).

5. Récipient selon l'une des revendications 1 à 4, dans lequel le composant d'étanchéité de préférence reçoit un élément d'étanchéité circulaire (111) pour assurer l'étanchéité de la première partie de récipient sur son bord périphérique, où se le composant d'étanchéité reçoit l'élément d'étanchéité circulaire (111) de telle manière que celui-ci est prévu entre le bord du composant d'étanchéité (107) et une traverse (378, 976) qui s'étend depuis le bord du composant d'étanchéité (107) et qui peut épouser le bord de la première partie de récipient.

6. Récipient selon l'une des revendications 1 à 5, **caractérisé en ce que** la partie de couvercle (905) et la partie de fond (903) sont réalisées en plastique expansé, notamment en EPP, pour offrir une isolation thermique vis-à-vis de l'extérieur, où se un mécanisme de verrouillage séparé est disposé de préférence au niveau du plastique expansé, le mécanisme de verrouillage comprenant notamment une structure solide sur le pourtour du récipient.

7. Récipient selon l'une des revendications 1 à 5, dans lequel la partie de fond (203, 303) et/ou la partie de couvercle (205, 305) présentent une structure grillagée, de telle manière que la partie de couvercle et/ou la partie de fond et le réceptacle qui y loge peuvent, ensemble, être totalement nettoyées de leurs impuretés, oú se la structure grillagée est produite de préférence à partir d'une structure en fils métalliques ou d'un grillage en plastique.

8. Récipient selon l'une des revendications 1 à 7, dans lequel le composant d'étanchéité présente sur son bord périphérique, pour assurer l'étanchéité du réceptacle, une lèvre d'étanchéité (378, 976) à laquelle est accolée une section sensiblement en forme de U, et/ou le composant d'étanchéité (7) présente une charnière matérielle (13) permettant de compenser les fuites, la charnière matérielle (13) étant produite notamment par une réduction de section transversale, le composant d'étanchéité (7) présentant un contour en forme de dôme à bord ourlé, lequel contour peut s'engager dans la partie de couvercle (5), et/ou le réceptacle destiné à recevoir les aliments est suspendu dans la partie de fond (3, 103, 203, 303, 903) de telle manière que le réceptacle (9, 109, 209, 309) présente des surfaces portantes inclinées selon un angle essentiellement de 45° par rapport à l'horizontale permettant de positionner le réceptacle (9, 109, 209, 309) automatiquement centré dans la partie de fond (3, 103, 203, 303, 903) ou section de la partie de fond (3, 103, 203, 303, 903).

9. Récipient selon l'une des revendications 1 à 8, **caractérisé en ce qu'**un ou plusieurs réceptacles, notamment des réceptacles en porcelaine, sont suspendus dans la partie de fond (303) de telle manière que le réceptacle (309), à l'état suspendu, fait saillie vers le bas par-dessus la partie de fond, et/ou plusieurs réceptacles (109, 209, 309) sont logés ou suspendus dans la partie de fond (3, 103, 203, 303) pour recevoir des aliments, la partie de fond et/ou la partie de couvercle, notamment, étant conçues au format GN 1/1.

10. Récipient selon l'une des revendications 1 à 9, dans lequel, pour chaque réceptacle (9, 109, 209, 309) de la partie de fond (3, 103, 203, 303), un composant d'étanchéité (7, 107, 207, 307) est respectivement disposé au niveau de la partie de couvercle (5, 105, 205, 305).

11. Récipient selon l'une des revendications 1 à 10, dans lequel les parties de fond (303) présentent plusieurs éléments de dôme (555) à orientation sensiblement verticale qui assurent un certain blocage lors de l'empilage de plusieurs parties de fond en association avec des anneaux (444) à orientation sensiblement horizontale, et les éléments de dôme (555) de la partie de fond coopèrent avec des anneaux à orientation sensiblement horizontale de la partie de couvercle de telle manière que les éléments de dôme de la partie de fond et les anneaux de la partie de couvercle aient une fonction de guidage lors de la fermeture de la partie de couvercle sur la partie de fond.

12. Récipient selon l'une des revendications 1 à 11, **caractérisé en ce qu'**une grille de nettoyage (585) peut être apportée, sous l'action d'un mécanisme de verrouillage, sur une partie de fond comportant des réceptacles qui y sont suspendus ou logés, de telle manière que toute chute des réceptacles est entravée par la grille de nettoyage lors du processus de nettoyage, la grille de nettoyage présentant une structure grillagée comportant notamment des éléments d'anneaux qui y sont insérés afin de bloquer et de centrer toute partie de fond quelconque.

13. Système composé d'une pluralité de récipients selon l'une des revendications 1 à 12, pour la répartition d'aliments,
**caractérisé en ce que**
des empilages respectifs de plusieurs composants d'étanchéité, plusieurs parties de couvercle, plusieurs parties de fond ainsi que plusieurs parties de couvercle munies de leur composant d'étanchéité, plusieurs réceptacles, plusieurs parties de fond comportant des réceptacles suspendus ainsi que plusieurs parties de fond comportant des réceptacles suspendus et des réceptacles faisant saillie au-dessous de la partie de fond, peuvent être réalisés.

14. Système selon la revendication 13, **caractérisé en ce que** plusieurs récipients peuvent être empilés par complémentarité de forme, notamment à l'aide d'éléments d'empilage ou de plaquettes d'empilage situés respectivement dans les coins d'une partie de fond.
